# EUROPEAN PATENT APPLICATION

(11) **EP 1 338 622 A2**
(43) Date of publication of application: **27.08.2003**
(21) Application number: 03405180.5
(22) Date of filing: 14.03.2003
(51) Int. Cl.: C08K 5/00, C08L 23/02

(54) **Stabilizer mixtures**

(71) Applicant: Ciba Specialty Chemicals Holding Inc., 4057 Basel (CH)
(72) Inventor: Gugumus, Francois, 4123 Allschwil (CH)

(57) **Abstract**

A stabilizer mixture containing for example the compounds 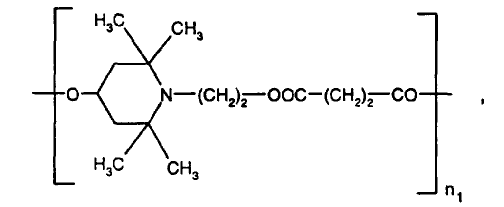 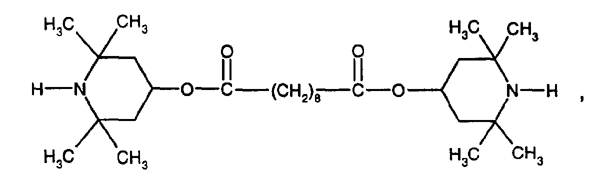 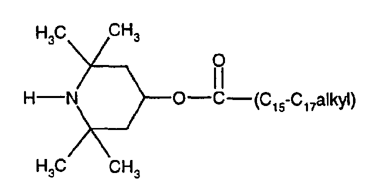 and 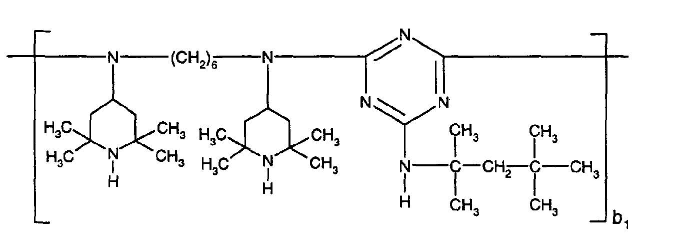 is useful for stabilizing an organic material against degradation induced by light, heat or oxidation.

## Description

The present invention relates to a stabilizer mixture containing four specific sterically hindered amine compounds.

Stabilizer mixtures containing blends of sterically hindered amines are for example described in US-A-4,692,468, US-A-4,863,981, US-A-5,719,217, US-A-5,919,399, US-A-5,965,643, US-A-5,980,783, US-A-6,015,849, US-A-6,020,406 and WO-A-01/92,392.

The present invention relates to a stabilizer mixture containing the components (A), (B-X), (B-XX) and (C) wherein
**component (A)** is a compound of the formula (A-1), (A-2-a), (A-2-b), (A-3) or (A-4);
**component (B-X)** is a compound of the formula (B-1) wherein m₁ is 2 or 4, (B-2), (B-4), (B-5), (B-7), (B-8), (B-9) wherein m₂ is 2 or 3, or (B-10);
**component (B-XX)** is a compound of the formula (B-1) wherein m₁ is 1, (B-3), (B-6), or (B-9) wherein m₂ is 1; and
**component (C)** is a compound of the formula (C-1), (C-2), (C-3), (C-4) or (C-5), or a product (C-6); 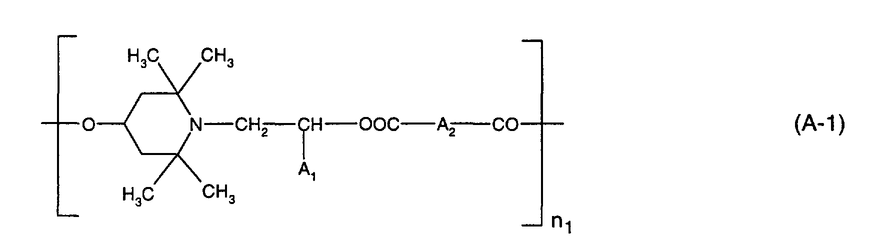 wherein
A₁ is hydrogen or C₁-C₄alkyl,
A₂ is a direct bond or C₁-C₁₀alkylene, and
n₁ is a number from 2 to 50; 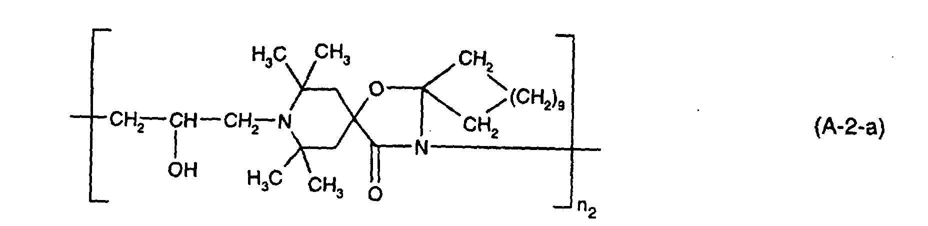 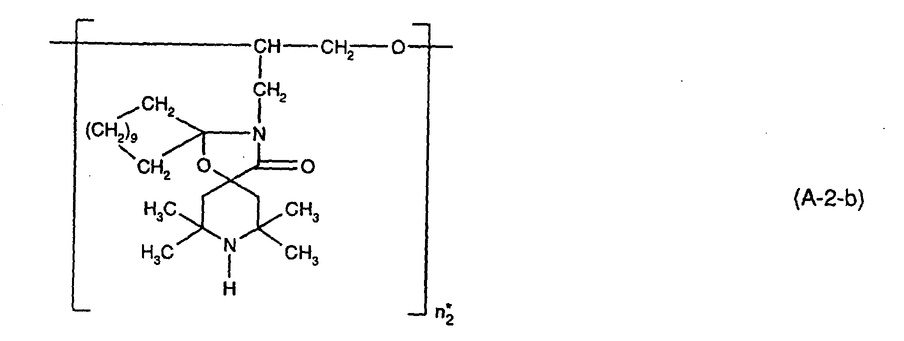 wherein
n₂ and n₂^{*} are a number from 2 to 50; 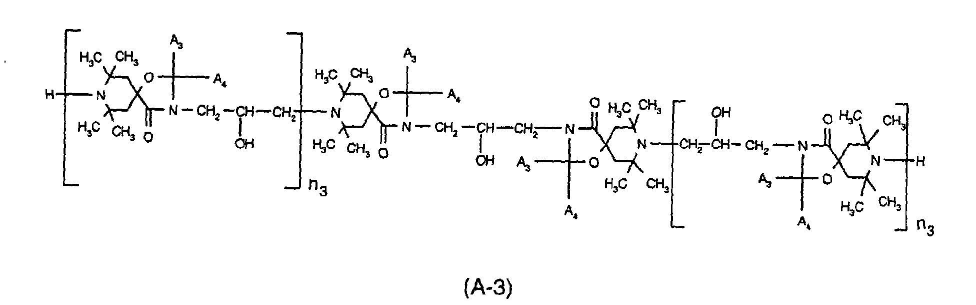 wherein
A₃ and A₄ independently of one another are hydrogen or C₁-C₈alkyl, or A₃ and A₄ together form a C₂-C₁₄alkylene group, and
the variables n₃ independently of one another are a number from 1 to 50; 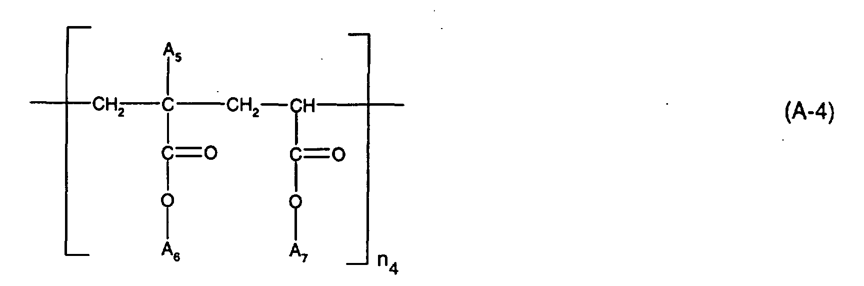 wherein
n₄ is a number from 2 to 50,
A₅ is hydrogen or C₁-C₄alkyl,
the radicals A₆ and A₇ independently of one another are C₁-C₄alkyl or a group of the formula (a-I) 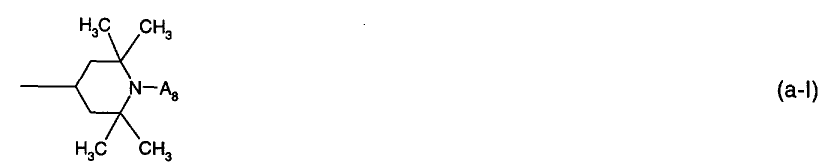 wherein A₈ is hydrogen, C₁-C₆alkyl, O, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
with the proviso that at least 50 % of the radicals A₇ are a group of the formula (a-I); 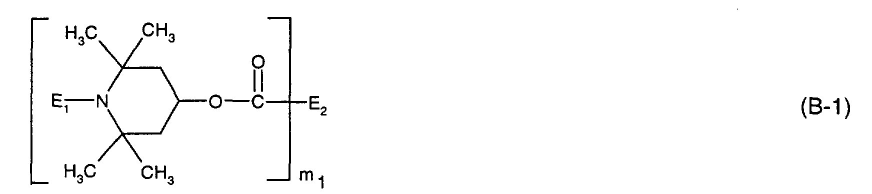 in which
E₁ is hydrogen, C₁-C₈alkyl, O', -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
m₁ is 1, 2 or 4,
if m₁ is 1, E₂ is C₁-C₂₅alkyl,
if m₁ is 2, E₂ is C₁-C₁₄alkylene or a group of the formula (b-l) 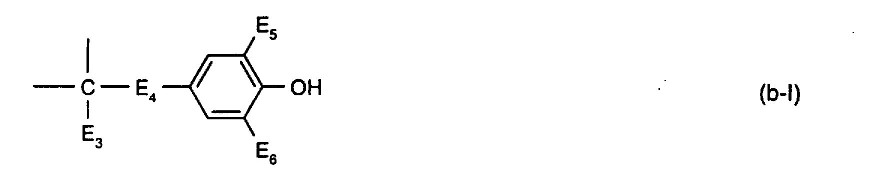 wherein E₃ is C₁-C₁₀alkyl or C₂-C₁₀alkenyl, E₄ is C₁-C₁₀alkylene, and
E₅ and E₆ independently of one another are C₁-C₄alkyl, cyclohexyl or methylcyclohexyl, and
if m₁ is 4, E₂ is C₄-C₁₀alkanetetrayl; 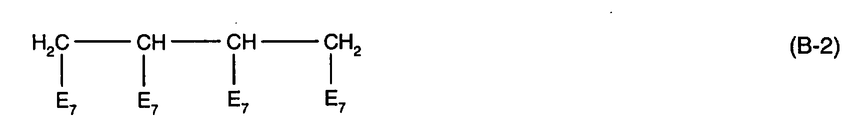 in which
two of the radicals E₇ are -COO-(C₁-C₂₀alkyl), and
two of the radicals E₇ are a group of the formula (b-ll) 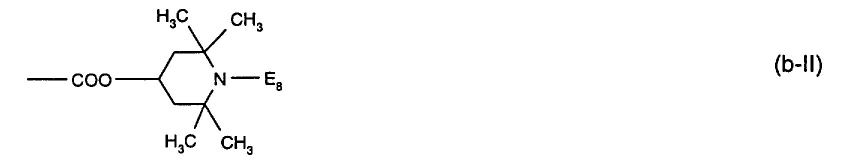 with E₈ having one of the meanings of E₁; 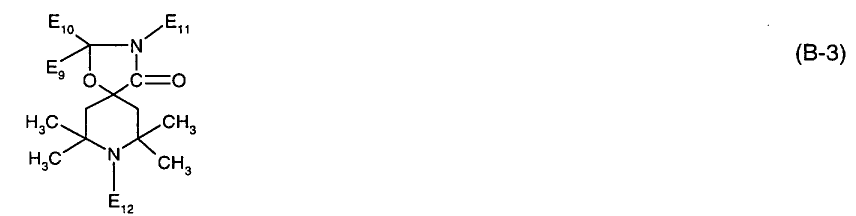 in which
Eg and E₁₀ together form C₂-C₁₄alkylene,
E₁₁ is hydrogen or a group -Z₁-COO-Z₂,
Z₁ is C₂-C₁₄alkylene, and
Z₂ is C₁-C₂₄alkyl, and
E₁₂ has one of the meanings of E₁; 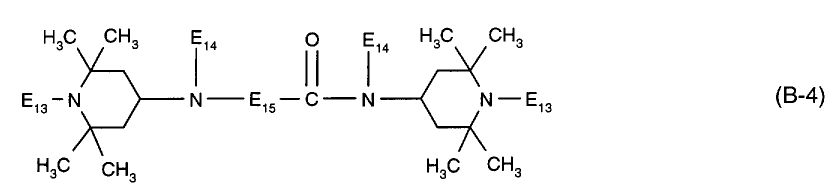 wherein
the radicals E₁₃ independently of one another have one of the meanings of E₁,
the radicals E₁₄ independently of one another are hydrogen or C₁-C₁₂alkyl, and
E₁₅ is C₁-C₁₀alkylene or C₃-C₁₀alkylidene; 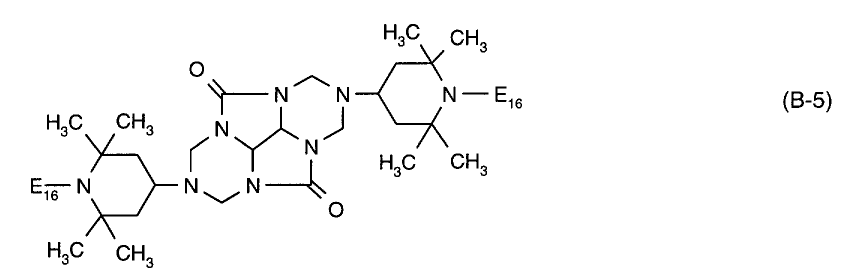 wherein
the radicals E₁₆ independently of one another have one of the meanings of E₁; 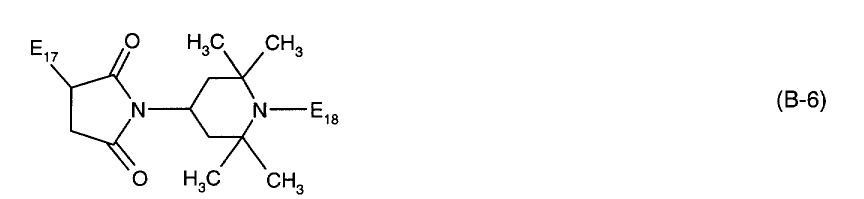 in which
E₁₇ is C₁-C₂₄alkyl, and
E₁₈ has one of the meanings of E₁; 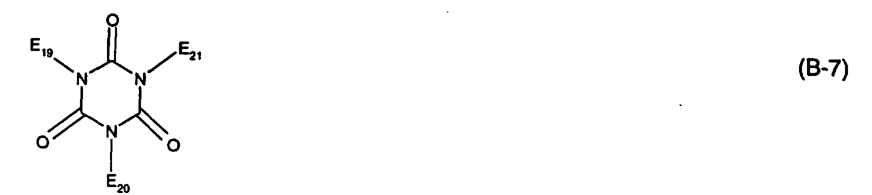 in which
E₁₉, E₂₀ and E₂₁ independently of one another are a group of the formula (b-lll) 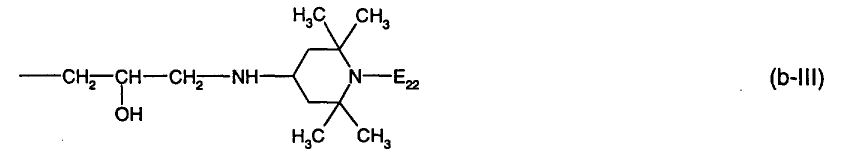 wherein E₂₂ has one of the meanings of E₁; 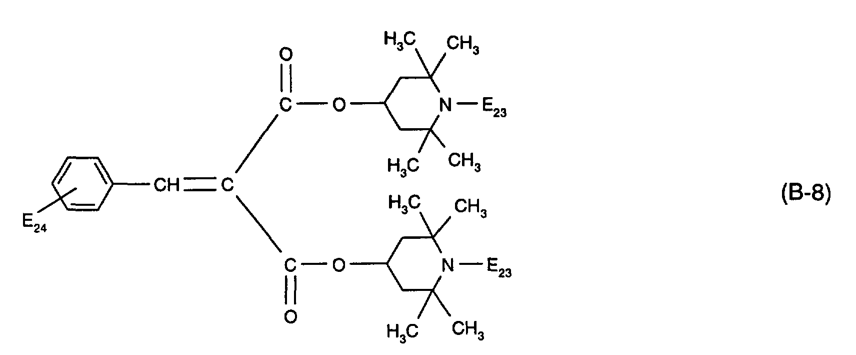 wherein
the radicals E₂₃ independently of one another have one of the meanings of E₁, and E₂₄ is hydrogen, C₁-C₁₂alkyl or C₁-C₁₂alkoxy; 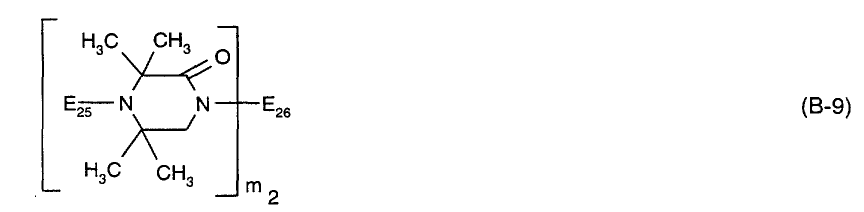 wherein
m₂ is 1, 2 or 3,
E₂₅ has one of the meanings of E₁, and
when m₂ is 1, E₂₆ is a group 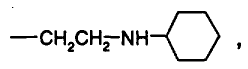 when m₂ is 2, E₂₆ is C₂-C₂₂alkylene, and
when m₂ is 3, E₂₆ is a group of the formula (b-IV) 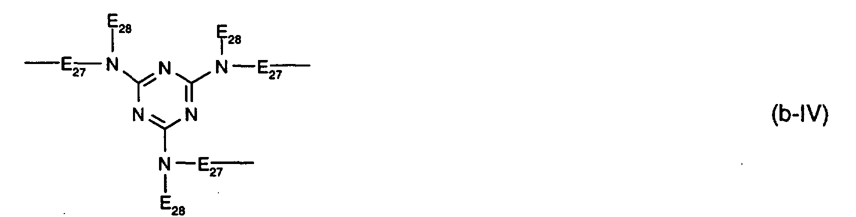 wherein the radicals E₂₇ independently of one another are C₂-C₁₂alkylene, and
the radicals E₂₈ independently of one another are C₁-C₁₂alkyl or C₅-C₁₂cycloalkyl; 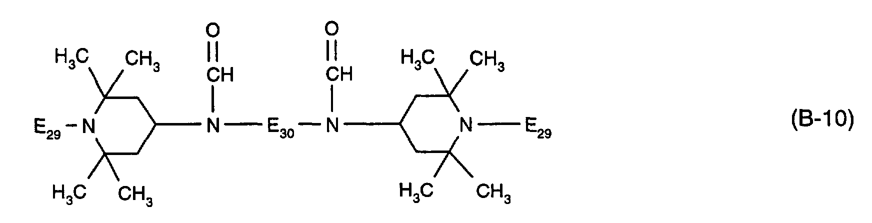 wherein
the radicals E₂₉ independently of one another have one of the meanings of E₁, and E₃₀ is C₂-C₂₂alkylene, C₅-C₇cycloalkylene, C₁-C₄alkylenedi(C₅-C₇cycloalkylene), phenylene or phenylenedi(C₁-C₄alkylene); 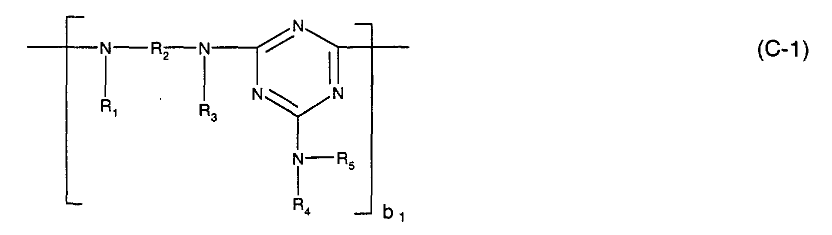 in which
R₁, R₃, R₄ and R₅ independently of one another are hydrogen, C₁-C₁₂alkyl, C₅-C₁₂cycloalkyl, C1-C4-alkyl-substituted C₅-C₁₂cycloalkyl, phenyl, phenyl which is substituted by -OH and/or C₁-C₁₀alkyl; C₇-C₉phenylalkyl, C₇-C₉phenylalkyl which is substituted on the phenyl radical by -OH and/or C₁-C₁₀alkyl; or a group of the formula (c-l) 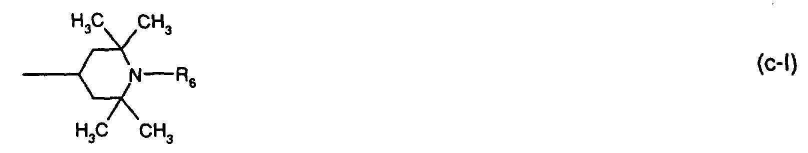 R₂ is C₂-C₁₈alkylene, C₅-C₇cycloalkylene or C₁-C₄alkylenedi(C₅-C₇cycloalkylene), or
the radicals R₁, R₂ and R₃, together with the nitrogen atoms to which they are bonded, perform a 5- to 10-membered heterocyclic ring, or
R₄ and R₅, together with the nitrogen atom to which they are bonded, form a 5- to 10-membered heterocyclic ring,
R₆ is hydrogen, C₁-C₈alkyl, O, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or
C₁-C₈acyl, and
b₁ is a number from 2 to 50,
with the proviso that at least one of the radicals R₁, R₃, R₄ and R₅ is a group of the formula (c-l); 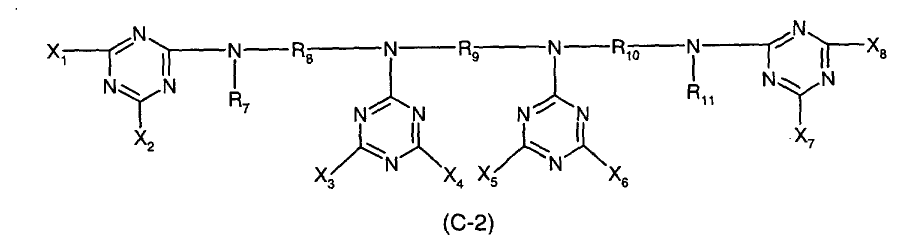 wherein
R₇ and R₁₁ independently of one another are hydrogen or C₁-C₁₂alkyl,
R₈, R₉ and R₁₀ independently of one another are C₂-C₁₀alkylene, and
X₁, X₂, X₃, X₄, X₅, X₆, X₇ and X₈ independently of one another are a group of the formula (c-II), 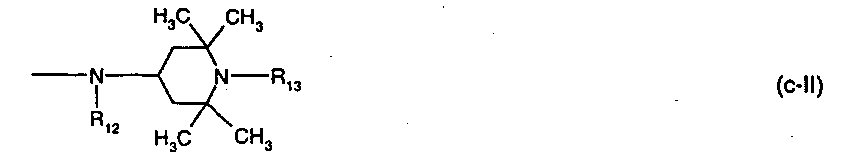 in which R₁₂ is hydrogen, C₁-C₁₂alkyl, C₅-C₁₂cycloalkyl, C₁ -C4alkyl-substituted
C₅-C₁₂cycloalkyl, phenyl, -OH- and/or C₁-C₁₀alkyl-substituted phenyl, C₇-C₉phenylalkyl,
C₇-C₉phenylalkyl which is substituted on the phenyl radical by -OH and/or C₁-C₁₀alkyl; or a group of the formula (c-l) as defined above, and
R₁₃ has one of the meanings of R₆; 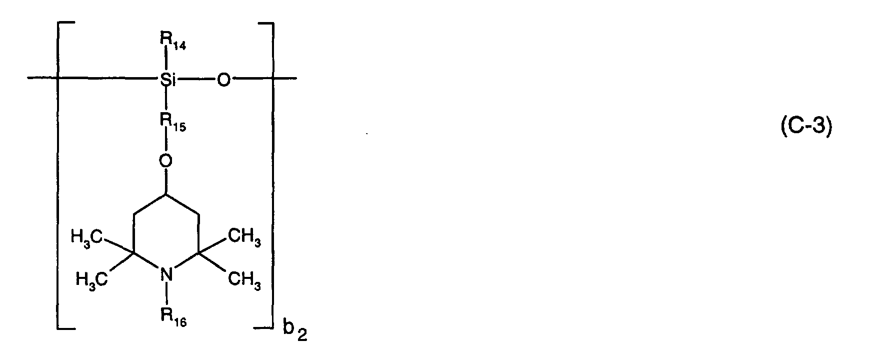 in which
R₁₄ is C₁-C₁₀alkyl, C₅-C₁₂cycloalkyl, C₁-C₄alkyl-substituted C₅-C₁₂cycloalkyl, phenyl or C₁-C₁₀alkyl-substituted phenyl,
R₁₅ is C₃-C₁₀alkylene,
R₁₆ has one of the meanings of R₆, and
b₂ is a number from 2 to 50; 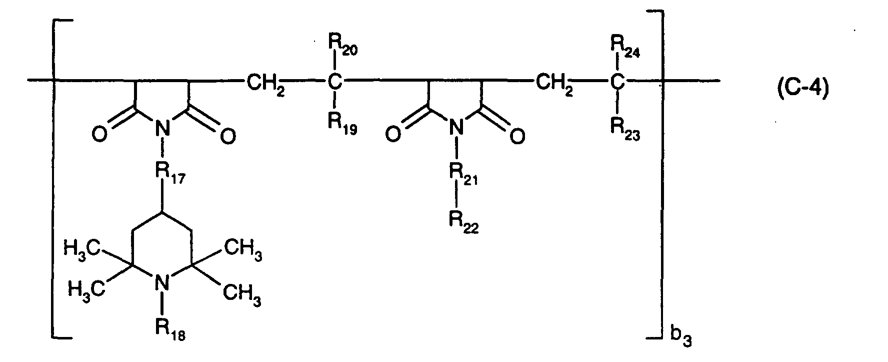 in which
R₁₇ and R₂₁ independently of one another are a direct bond or a -N(X₉)-CO-X₁₀-CO-N(X₁₁)-group, where X₉ and X₁₁ independently of one another are hydrogen, C₁-C₈alkyl,
C₅-C₁₂cycloalkyl, phenyl, C₇-C₉phenylalkyl or a group of the formula (c-l),
X₁₀ is a direct bond or C₁-C₄alkylene,
R₁₈ has one of the meanings of R₆,
R₁₉, R₂₀, R₂₃ and R₂₄ independently of one another are hydrogen, C₁-C₃₀alkyl,
C₅-C₁₂cycloalkyl or phenyl,
R₂₂ is hydrogen, C₁-C₃₀alkyl, C₅-C₁₂cycloalkyl, phenyl, C₇-C₉phenylalkyl or a group of the formula (c-l), and
b₃ is a number from 1 to 50; 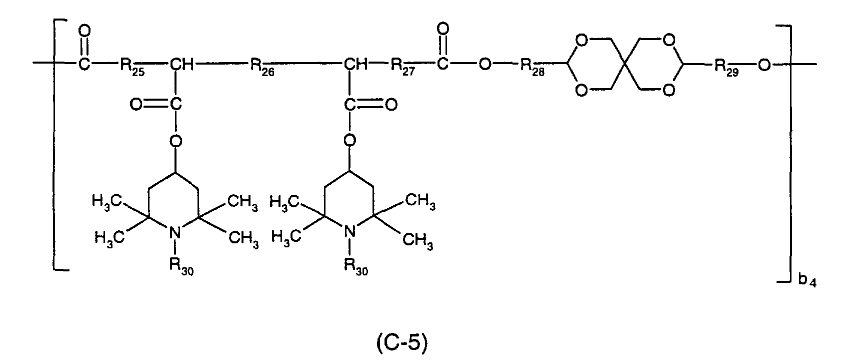 in which
R₂₅, R₂₆, R₂₇, R₂₈ and R₂₉ independently of one another are a direct bond or C₁-C₁₀alkylene,
R₃₀ has one of the meanings of R₆, and
b₄ is a number from 1 to 50;
a product (C-6) obtainable by reacting a product, obtained by reaction of a polyamine of the formula (C-6-1) with cyanuric chloride, with a compound of the formula (C-6-2) 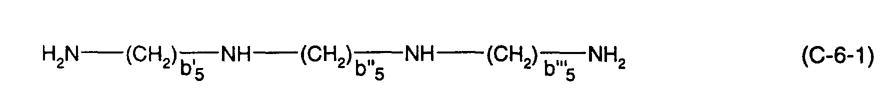 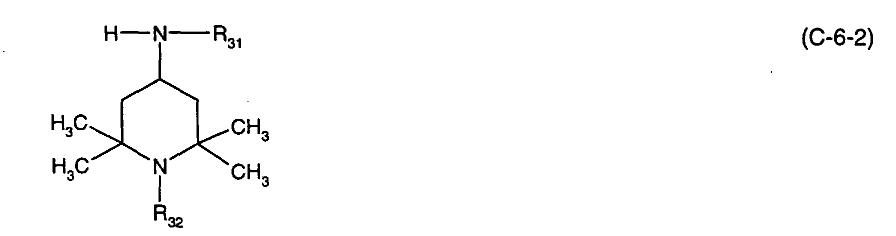 in which
b'₅, b"₅ and b"'₅ independently of one another are a number from 2 to 12,
R₃₁ is hydrogen, C₁-C₁₂alkyl, C₅-C₁₂cycloalkyl, phenyl or C₇-C₉phenylalkyl, and
R₃₂ has one of the meanings of R₆.

Examples of alkyl having up to 30 carbon atoms are methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethylhexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl, octadecyl, eicosyl, docosyl and triacontyl. One of the preferred definitions of A₈, E₁, E₈, E₁₂, E₁₃, E₁₆, E₁₈, E₂₂, E₂₃, E₂₅, E₂₉, R₆, R₁₃, R₁₆, R₁₈, R₃₀ and R₃₂ is C₁-C₄alkyl, especially methyl. R₃₁ is preferably butyl.

Examples of alkoxy having up to 18 carbon atoms are methoxy, ethoxy, propoxy, isopropoxy, butoxy, isobutoxy, pentoxy, isopentoxy, hexoxy, heptoxy, octoxy, decyloxy, dodecyloxy, tetradecyloxy, hexadecyloxy and octadecyloxy. One of the preferred meanings of E₁ is octoxy. E₂₄ is preferably C₁-C₄alkoxy and one of the preferred meanings of R₆ is propoxy.

Examples of C₅-C₁₂cycloalkyl are cyclopentyl, cyclohexyl, cycloheptyl, cyclooctyl and cyclododecyl. C₅-C₈Cycloalkyl, especially cyclohexyl, is preferred.

C₁-C₄Alkyl-substituted C₅-C₁₂cycloalkyl is for example methylcyclohexyl or dimethylcyclohexyl.

Examples of C₅-C₁₂cycloalkoxy are cyclopentoxy, cyclohexoxy, cycloheptoxy, cyclooctoxy, cyclodecyloxy and cyclododecyloxy. C₅-C₈Cycloalkoxy, in particular cyclopentoxy and cyclohexoxy, is preferred.

-OH- and/or C₁-C₁₀alkyl-substituted phenyl is for example methylphenyl, dimethylphenyl, trimethylphenyl, tert-butylphenyl or 3,5-di-tert-butyl-4-hydroxyphenyl.

Examples of C₇-C₉phenylalkyl are benzyl and phenylethyl.

C₇-C₉Phenylalkyl which is substituted on the phenyl radical by -OH and/or by alkyl having up to 10 carbon atoms is for example methylbenzyl, dimethylbenzyl, trimethylbenzyl, tert-butylbenzyl or 3,5-di-tert-butyl-4-hydroxybenzyl.

Examples of alkenyl having up to 10 carbon atoms are allyl, 2-methallyl, butenyl, pentenyl and hexenyl. Allyl is preferred. The carbon atom in position 1 is preferably saturated.

Examples of acyl containing not more than 8 carbon atoms are formyl, acetyl, propionyl, butyryl, pentanoyl, hexanoyl, heptanoyl, octanoyl, acryloyl, methacryloyl and benzoyl. C₁-C₈Alkanoyl, C₃-C₈alkenyl and benzoyl are preferred. Acetyl and acryloyl are especially preferred.

Examples of alkylene having up to 22 carbon atoms are methylene, ethylene, propylene, trimethylene, tetramethylene, pentamethylene, 2,2-dimethyltrimethylene, hexamethylene, trimethylhexamethylene, octamethylene and decamethylene.

An example of C₃-C₁₀alkylidene is the group

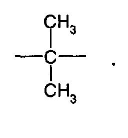

An example of C₄-C₁₀alkanetetrayl is 1,2,3,4-butanetetrayl.

An example of C₅-C₇cycloalkylene is cyclohexylene.

An example of C₁-C4alkylenedi(C₅-C7cycloalkylene) is methylenedicyclohexylene.

An example of phenylenedi(C₁-C₄alkylene) is methylene-phenylene-methylene or ethylene-phenylene-ethylene.

Where the radicals R₁, R₂ and R₃, together with the nitrogen atoms to which they are attached, form a 5- to 10-membered heterocyclic ring, this ring is for example

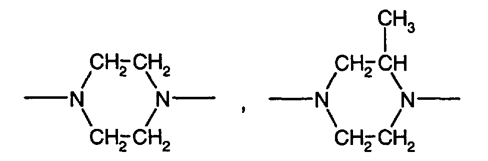

A 6-membered heterocyclic ring is preferred.

Where the radicals R₄ and R₅, together with the nitrogen atom to which they are attached, form a 5- to 10-membered heterocyclic ring, this ring is for example 1-pyrrolidyl, piperidino, morpholino, 1-piperazinyl, 4-methyl-1-piperazinyl, 1-hexahydroazepinyl, 5,5,7-trimethyl-1-homopiperazinyl or 4,5,5,7-tetramethyl-1-homopiperazinyl. Morpholino is particularly preferred.

One of the preferred definitions of R₁₉ and R₂₃ is phenyl.

R₂₆ is preferably a direct bond.

n₁, n₂, n₂* and n₄ are preferably a number from 2 to 25, in particular 2 to 20.

n₃ is preferably a number from 1 to 25, in particular 1 to 20.

b₁ and b₂ are preferably a number from 2 to 25, in particular 2 to 20.

b₃ and b₄ are preferably a number from 1 to 25, in particluar 1 to 20.

b'₅ and b"'₅ are preferably 3 and b"₅ is preferably 2.

The compounds described above as components (A), (B-X), (B-XX) and (C) are essentially known and commercially available. All of them can be prepared by known processes.

The preparation of the compounds of component (A) is disclosed for example in US-A-4,233,412, US-A-4,340,534, WO-A-98/51,690 and EP-A-1,803.

The preparation of the compounds of components (B-X) and (B-XX) is disclosed for example in US-A-5,679,733, US-A-3,640,928, US-A-4,198,334, US-A-5,204,473, US-A-4,619,958, US-A-4,110,306, US-A-4,110,334, US-A-4,689,416, 6, US-A-4,408,051, SU-A-768,175 (Derwent 88-138,751/20), US-A-5,049,604, US-A-4,769,457, US-A-4,356,307, US-A-4,619,956, US-A-5,182,390, GB-A-2,269,819, US-A-4,292,240, US-A-5,026,849, US-A-5,071,981, US-A-4,547,538 and US-A-4,976,889.

The preparation of the compounds of component (C) is disclosed for example in US-A-4,086,204, US-A-6,046,304, US-A-4,331,586, US-A-4,108,829, US-A-5,051,458, WO-A-94/12,544 (Derwent 94-177,274/22), DD-A-262,439 (Derwent 89-122,983/17), US-A-4,857,595, US-A-4,529,760 and US-A-4,477,615 and CAS 136,504-96-6.

The product (C-6) can be prepared analogously to known processes, for example by reacting a polyamine of formula (C-6-1) with cyanuric chloride in a molar ratio of from 1:2 to 1:4 in the presence of anhydrous lithium carbonate, sodium carbonate or potassium carbonate in an organic solvent such as 1,2-dichloroethane, toluene, xylene, benzene, dioxane or tert-amyl alcohol at a temperature of from -20°C to +10°C, preferably from -10°C to +10°C, in particular from 0°C to +10°C, for from 2 to 8 hours, followed by reaction of the resultant product with a 2,2,6,6-tetramethyl-4-piperidylamine of the formula (C-6-2). The molar ratio of the 2,2,6,6-tetramethyl-4-piperidylamine to polyamine of the formula (C-6-1) employed is for example from 4:1 to 8:1. The quantity of the 2,2,6,6-tetramethyl-4-piperidylamine can be added in one portion or in more than one portion at intervals of a few hours.

The molar ratio of polyamine of the formula (C-6-1) to cyanuric chloride to 2,2,6,6-tetramethyl-4-piperidylamine of the formula (C-6-2) is preferably from 1:3:5 to 1:3:6.

The following example indicates one way of preparing a preferred product (C-6-a).

Example: 23.6 g (0.128 mol) of cyanuric chloride, 7.43 g (0.0426 mol) of N,N'-bis[3-aminopropyl]ethylenediamine and 18 g (0.13 mol) of anhydrous potassium carbonate are reacted at 5°C for 3 hours with stirring in 250 ml of 1,2-dichloroethane. The mixture is warmed at room temperature for a further 4 hours. 27.2 g (0.128 mol) of N-(2,2,6,6-tetramethyl-4-piperidyl)butylamine are added and the resultant mixture is warmed at 60°C for 2 hours. A further 18 g (0.13 mol) of anhydrous potassium carbonate are added and the mixture is warmed at 60°C for a further 6 hours. The solvent is removed by distillation under a slight vacuum (200 mbar) and replaced by xylene. 18.2 g (0.085 mol) of N-(2,2,6,6-tetramethyl-4-piperidyl)butylamine and 5.2 g (0.13 mol) of ground sodium hydroxide are added, the mixture is heated at reflux for 2 hours and, for a further 12 hours, the water formed during the reaction is removed by azeotropic distillation. The mixture is filtered. The solution is washed with water and dried over Na₂SO₄. The solvent is evaporated and the residue is dried at 120-130°C in vacuo (0.1 mbar). The desired product is obtained as a colourless resin.

In general, the product (C-6) can for example be represented by a compound of the formula (C-6-α), (C-6-β) or (C-6-γ). It can also be in the form of a mixture of these three compounds.

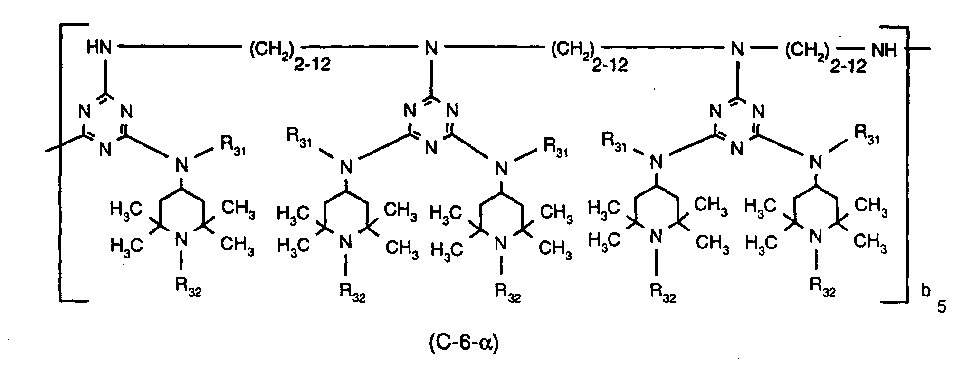

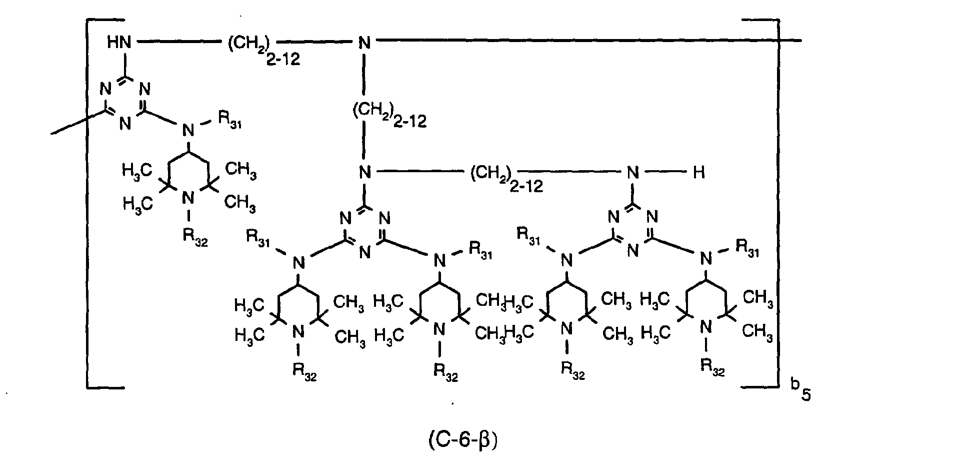

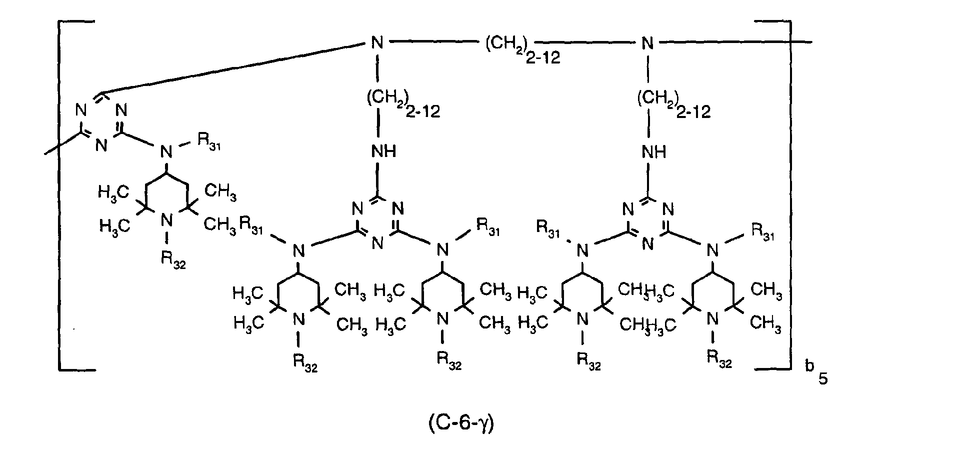

A preferred meaning of the formula (C-6-α) is

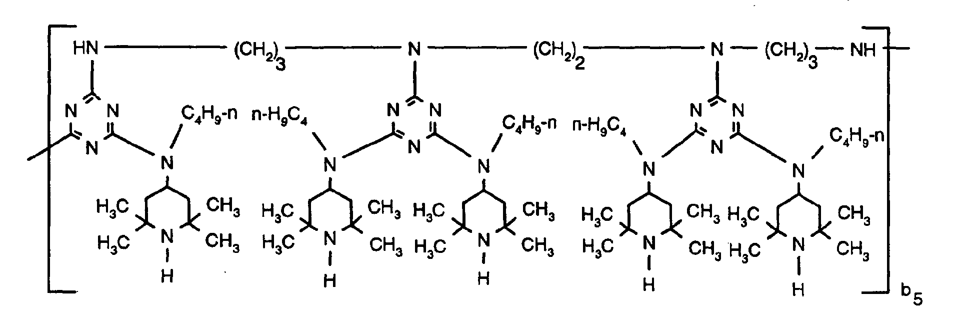

A preferred meaning of the formula (C-6-β) is

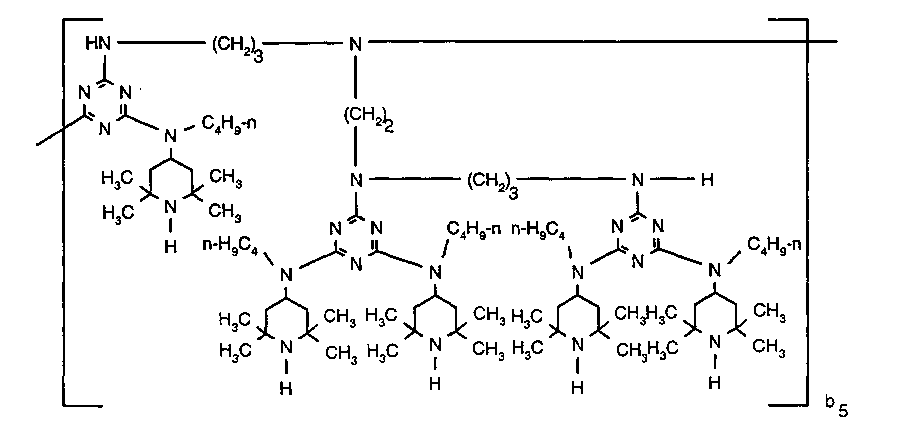

A preferred meaning of the formula (C-6-γ) is

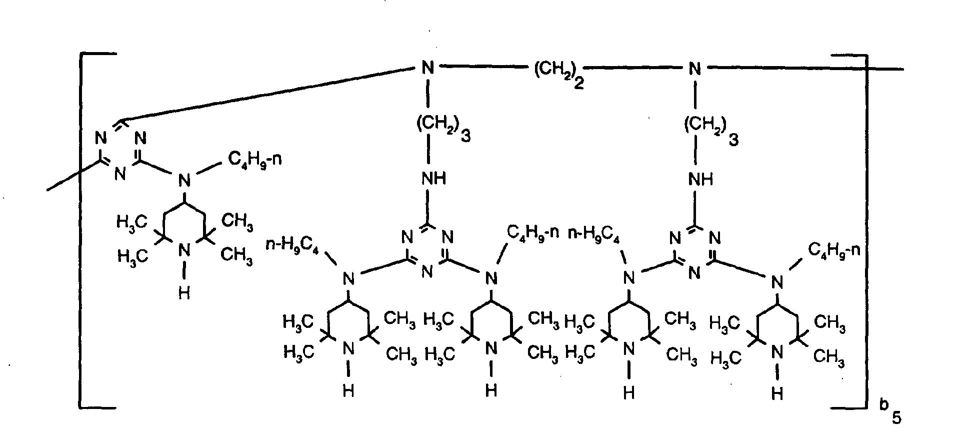

In the above formulae (C-6-α) to (C-6-γ), b₅ is preferably 2 to 20, in particular 2 to 10.

Component (A) is preferably TINUVIN 622 (RTM), HOSTAVIN N 30 (RTM) or FERRO AM 806 (RTM).

Component (B-X) is preferably TINUVIN 770 (RTM), TINUVIN 765 (RTM), TINUVIN 144 (RTM), TINUVIN 123 (RTM), ADK STAB LA 52 (RTM), ADK STAB LA 57 (RTM), ADK STAB LA 62 (RTM), ADK STAB LA 67 (RTM), DIACETAM 5 (RTM), SUMISORB TM 61 (RTM), UVINUL 4049 (RTM), SANDUVOR PR 31 (RTM), GOODRITE UV 3034 (RTM), GOODRITE UV 3150 (RTM), GOODRITE UV 3159 (RTM) or UVINUL 4050 H (RTM).

Component (B-XX) is preferably LICOVIN 845 (RTM) (= Chemical Abstracts Registry No. 86403-32-9), HOSTAVIN N 20 (RTM), HOSTAVIN N 24 (RTM), SANDUVOR 3050 (RTM), CYASORB UV-3641 (= Chemical Abstracts Registry No. 106917-30-0) or GOODRITE 3110 x 128 (RTM).

Component (C) is preferably CHIMASSORB 944 (RTM), CHIMASSORB 2020 (RTM), CYASORB UV 3346 (RTM), CYASORB UV 3529 (RTM), DASTIB 1082 (RTM), CHIMASSORB 119 (RTM), UVASIL 299 (RTM), UVASIL 125 (RTM), UVASIL 2000 (RTM), UVINUL 5050 H (RTM), LICHTSCHUTZSTOFF UV 31 (RTM), LUCHEM HA B 18 (RTM), ADK STAB LA 63 (RTM), ADK STAB LA 68 (RTM) or UVASORB HA 88 (RTM).

The meanings of the terminal groups which saturate the free valences in the compounds of the formulae (A-1), (A-2-a), (A-2-b), (A-4), (C-1), (C-3), (C-4), (C-5), (C-6-α), (C-6-β) and (C-6-γ) depend on the processes used for their preparation. The terminal groups can also be modified after the preparation of the compounds.

If the compounds of the formula (A-1) are prepared, for example, by reacting a compound of the formula 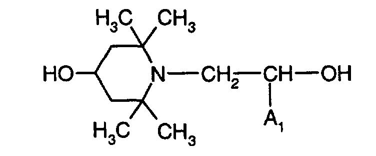 in which A₁ is hydrogen or methyl, with a dicarboxylic acid diester of the formula Y-OOC-A₂-COO-Y, in which Y is, for example, methyl, ethyl or propyl, and A₂ is as defined above, the terminal group bonded to the 2,2,6,6-tetramethyl-4-oxypiperidin-1-yl radical is hydrogen or -CO-A₂-COO-Y, and the terminal group bonded to the diacyl radical is -O-Y or

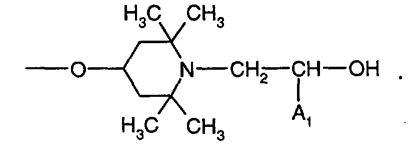

In the compounds of the formula (A-2-a), the terminal group bonded to the nitrogen can be, for example, hydrogen and the terminal group bonded to the 2-hydroxypropylene radical can be, for example, a 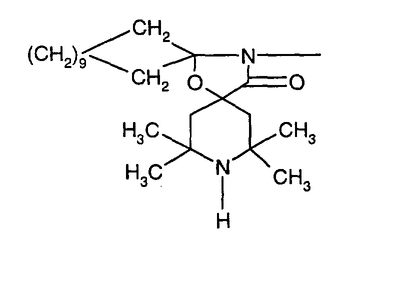 group.

In the compounds of the formula (A-2-b), the terminal group bonded to the dimethylene radical can be, for example, -OH, and the terminal group bonded to the oxygen can be, for example, hydrogen. The terminal groups can also be polyether radicals.

In the compounds of the formula (A-4), the end group bonded to the -CH₂- residue can be, for example, hydrogen and the end group bonded to the -CH(CO₂A₇) residue can be, for example, -CH=CH-COOA₇.

If the compounds of the formula (C-1) are prepared by reacting a compound of the formula 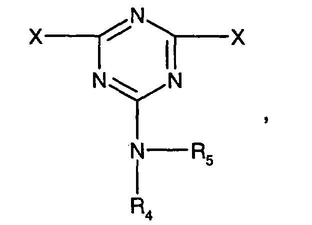 in which X is, for example, halogen, in particular chlorine, and R₄ and R₅ are as defined above, with a compound of the formula 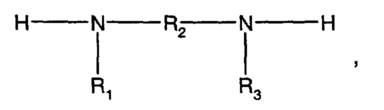 in which R₁, R₂ and R₃ are as defined above, the terminal group bonded to the diamino radical is hydrogen or 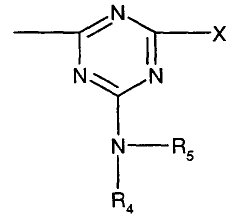 and the terminal group bonded to the triazine radical is X or

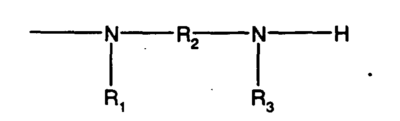

If X is halogen, it is advantageous to replace this, for example, by -OH or an amino group when the reaction is complete. Examples of amino groups which may be mentioned are pyrrolidin-1-yl, morpholino, -NH₂, -N(C₁-C₈)alkyl)₂ and -NR(C₁-C₈alkyl), in which R is hydrogen or a group of the formula (c-l).

The compounds of the formula (C-1) also cover compounds of the formula 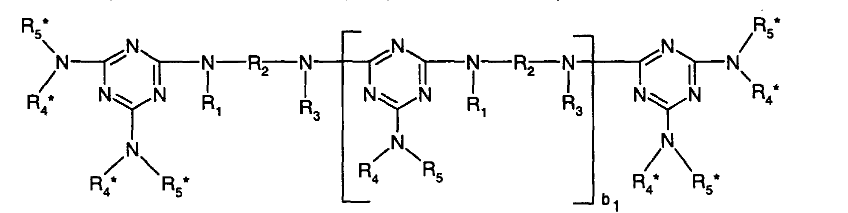 wherein R₁, R₂, R₃, R₄, R₅ and b₁ are as defined above and R₄^{*} has one of the meanings of R₄ and R₅* has one of the meanings of R₅.

One of the particularly preferred compounds of the formula (C-1) is

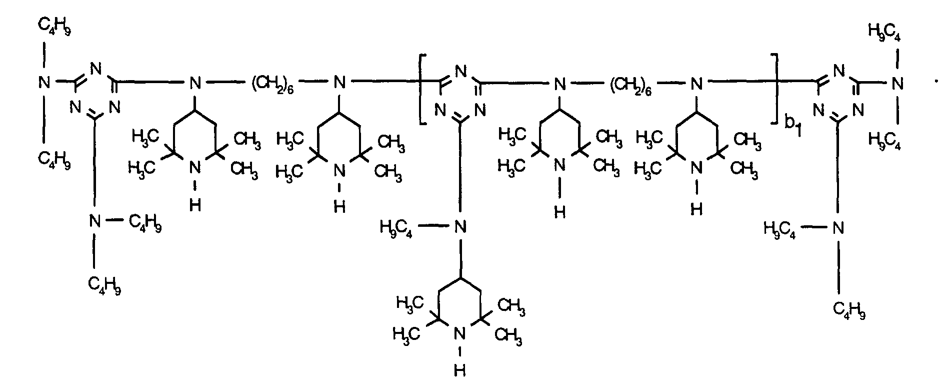

The preparation of this compound is described in Example 10 of US-A-6,046,304.

In the compounds of the formula (C-3), the terminal group bonded to the silicon atom can be, for example, (R₁₄)₃Si-O-, and the terminal group bonded to the oxygen can be, for example, -Si(R₁₄)₃.

The compounds of the formula (C-3) can also be in the form of cyclic compounds if b₂ is a number from 3 to 10, i.e. the free valences shown in the structural formula then form a direct bond.

In the compounds of the formula (C-4), the terminal group bonded to the 2,5-dioxopyrrolidine ring is, for example, hydrogen, and the terminal group bonded to the -C(R₂₃)(R₂₄)- radical is, for example,

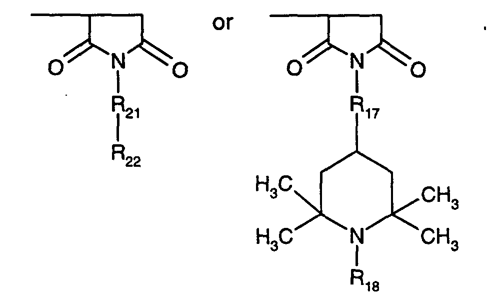

In the compounds of the formula (C-5), the terminal group bonded to the carbonyl radical is, for example, 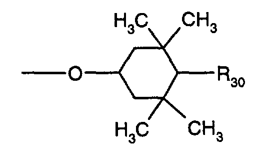 and the terminal group bonded to the oxygen radical is, for example,

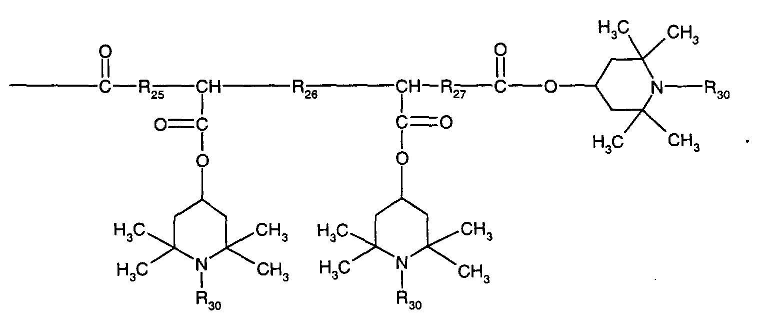

In the compounds of the formulae (C-6-α), (C-6-β) and (C-6-γ), the terminal group bonded to the triazine radical is, for example, Cl or a 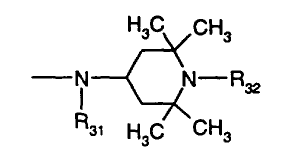 group, and the terminal group bonded to the amino radical is, for example, hydrogen or a 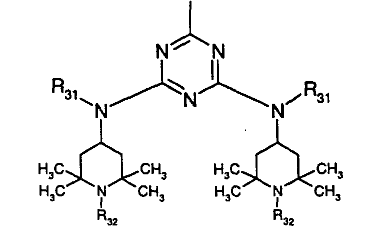 group.

A₈ is preferably hydrogen, C₁-C₄alkyl, C₁-C₁₀alkoxy, cyclohexyloxy, allyl, benzyl or acetyl.

E₁, E₈, E₁₂, E₁₃, E₁₆, E₁₈, E₂₂, E₂₃, E₂₅ and E₂₉ are preferably hydrogen, C₁-C₄alkyl, C₁-C₁₀alkoxy, cyclohexyloxy, allyl, benzyl or acetyl.

R₆, R₁₃, R₁₆, R₁₈, R₃₀ and R₃₂ are preferably hydrogen, C₁-C₄alkyl, C₁-C₁₀alkoxy, cyclohexyloxy, allyl, benzyl or acetyl.

A₈, E₁, E₈, E₁₂, E₁₃, E₁₆, E₁₈, E₂₂, E₂₃, E₂₅, E₂₉, R₆, R₁₃, R₁₆, R₁₈, R₃₀ and R₃₂ are in particular hydrogen or methyl and E₁ and R₆ additionally are C₁-C₈alkoxy.

According to a preferred embodiment,
A₁ is hydrogen or methyl,
A₂ is a direct bond or C₂-C₆alkylene, and
n₁ is a number from 2 to 25;
n₂ and n₂* are a number from 2 to 25;
A₃ and A₄ independently of one another are hydrogen or C₁-C₄alkyl, or A₃ and A₄ together form a C₉-C₁₃alkylene group, and
the variables n₃ independently of one another are a number from 1 to 25;
n₄ is a number from 2 to 25,
A₅ and A₆ independently of one another are C₁-C₄alkyl, and
A₇ is C₁-C₄alkyl or a group of the formula (a-I)
with the proviso that at least 50 % of the radicals A₇ are a group of the formula (a-1).

According to a further preferred embodiment
m₁ is 1, 2 or 4,
if m₁ is 1, E₂ is C₁₂-C₂₀alkyl,
if m₁ is 2, E₂ is C₂-C₁₀alkylene or a group of the formula (b-l)
E₃ is C₁-C₄alkyl,
E₄ is C₁-C₆alkylene, and
E₅ and E₆ independently of one another are C₁-C₄alkyl, and
if m₁ is 4, E₂ is C₄-C₈alkanetetrayl;
two of the radicals E₇ are -COO-(C₁₀-C₁₅alkyl), and
two of the radicals E₇ are a group of the formula (b-ll);
E₉ and E₁₀ together form C₉-C₁₃alkylene,
E₁₁ is hydrogen or a group -Z₁-COO-Z₂,
Z₁ is C₂-C₆alkylene, and
Z₂ is C₁₀-C₁₆alkyl;
E₁₄ is hydrogen, and
E₁₅ is C₂-C₆alkylene or C₃-C₅alkylidene;
E₁₇ is C₁₀-C₁₄alkyl;
E₂₄ is C₁-C₄alkoxy;
m₂ is 1, 2 or 3,
when m₂ is 1, E₂₆ is a group 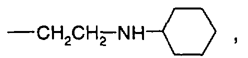 when m₂ is 2, E₂₆ is C₂-C₆alkylene, and
when m₂ is 3, E₂₆ is a group of the formula (b-lV)
the radicals E₂₇ independently of one another are C₂-C₆alkylene, and
the radicals E₂₈ independently of one another are C₁-C₄alkyl or C₅-C₈cycloalkyl; and
E₃₀ is C₂-C₈alkylene.

According to another preferred embodiment
R₁ and R₃ independently of one another are a group of the formula (c-I),
R₂ is C₂-C₈alkylene,
R₄ and R₅ independently of one another are hydrogen, C₁-C₁₂alkyl, C₅-C₈cycloalkyl or a group of the formula (c-l), or the radicals R₄ and R₅, together with the nitrogen atom to which they are bonded, form a 5- to 10-membered heterocyclic ring, and
b₁ is a number from 2 to 25;
R₇ and R₁₁ independently of one another are hydrogen or C₁-C₄alkyl,
R₈, R₉ and R₁₀ independently of one another are C₂-C₄alkylene, and
X₁, X₂, X₃, X₄, X₅, X₆, X₇ and X₈ independently of one another are a group of the formula (c-ll),
R₁₂ is hydrogen, C₁-C₄alkyl, C₅-C₈cycloalkyl or a group of the formula (c-l);
R₁₄ is C₁-C₄alkyl,
R₁₅ is C₃-C₆alkylene, and
b₂ is a number from 2 to 25;
R₁₇ and R₂₁ independently of one another are a direct bond or a group -N(X₉)-CO-X10-CO-N(X₁₁)-,
X₉ and X₁₁ independently of one another are hydrogen or C₁-C₄alkyl,
X₁₀ is a direct bond,
R₁₉ and R₂₃ are C₁-C₂₅alkyl or phenyl,
R₂₀ and R₂₄ are hydrogen or C₁-C₄alkyl,
R₂₂ is C₁-C₂₅alkyl or a group of the formula (c-l), and
b₃ is a number from 1 to 25;
R₂₅, R₂₆, R₂₇, R₂₈ and R₂₉ independently of one another are a direct bond or C₁-C₄alkylene, and
b₄ is a number from 1 to 25;
b'₅, b"₅ and b"'5 independently of one another are a number from 2 to 4, and
R₃₁ is hydrogen, C₁-C₄alkyl, C₅-C₈cycloalkyl, phenyl or benzyl.

A particularly preferred embodiment of this invention relates to a stabilizer mixture wherein **component (A)** is a compound of the formula (A-1-a), (A-2-a), (A-2-b), (A-3-a) or (A-4-a); **component (B-X)** is a compound of the formula (B-1-b), (B-1-c), (B-1-d), (B-2-a), (B-4-a), (B-4-b), (B-5), (B-7), (B-8-a), (B-9-b), (B-9-c) or (B-10-a);
**component (B-XX)** is a compound of the formula (B-1-a), (B-3-a), (B-3-b), (B-6-a) or (B-9-a);
**component (C)** is a compound of the formula (C-1-a), (C-1-b), (C-1-c), (C-1-d), (C-2-a), (C-3-a), (C-4-a), (C-4-b), (C-4-c) or (C-5-a), or a product (C-6-a); 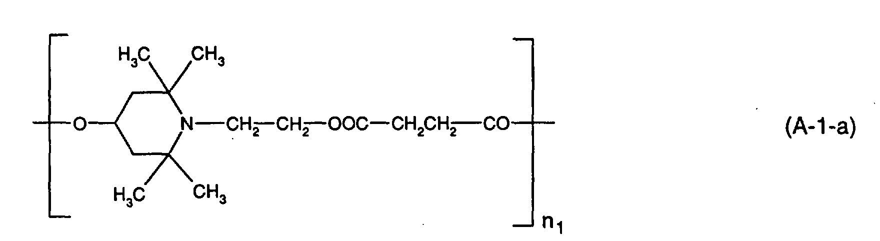 wherein n₁ is a number from 2 to 20; 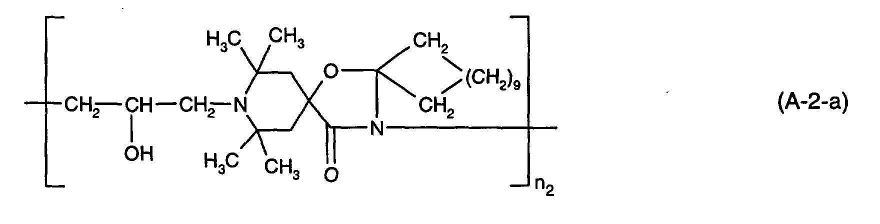 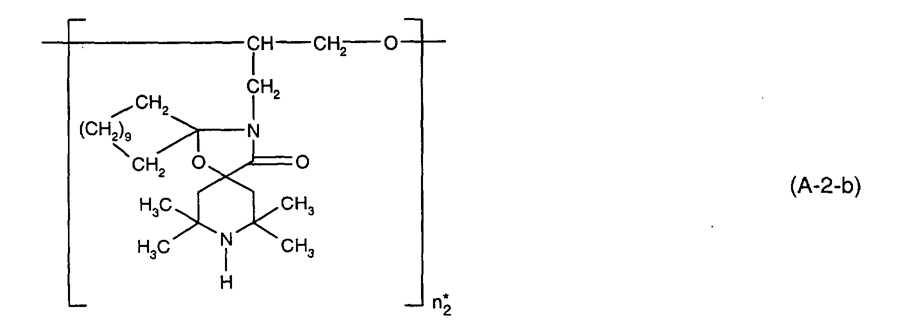 wherein n₂ and n₂* are a number from 2 to 20; 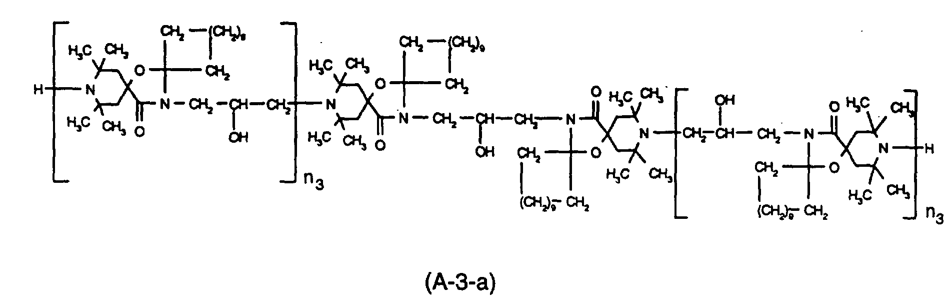 wherein the variables n₃ independently of one another are a number from 1 to 20; 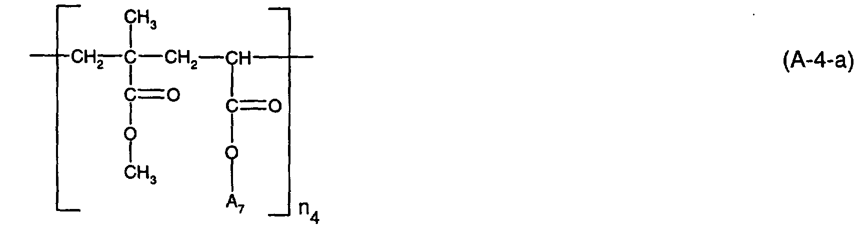 wherein n₄ is a number from 2 to 20, and
at least 50 % of the radicals A₇ are a group of the formula (a-I) 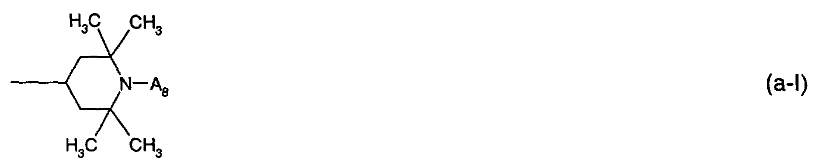 wherein A₈ is hydrogen, C₁-C₈alkyl, O, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
and the remaining radicals A₇ are ethyl; 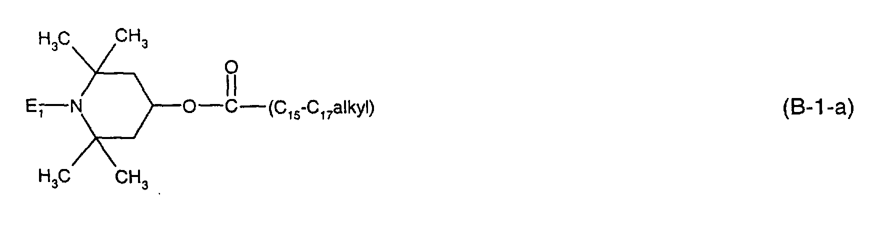 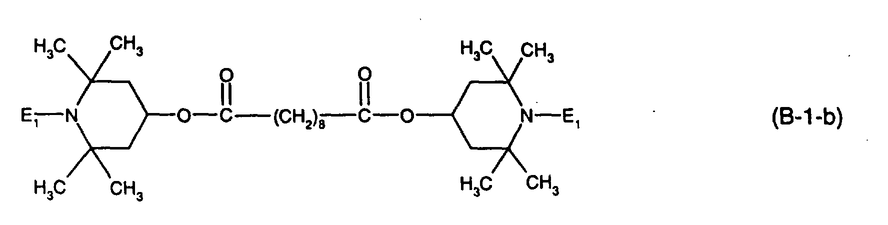 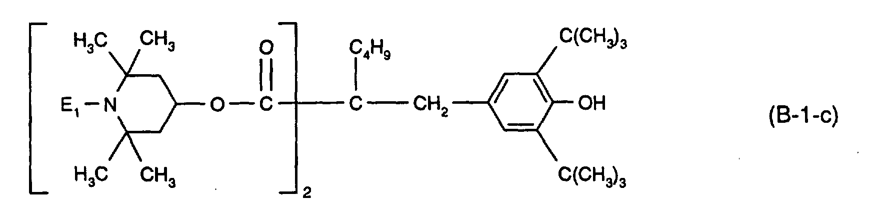 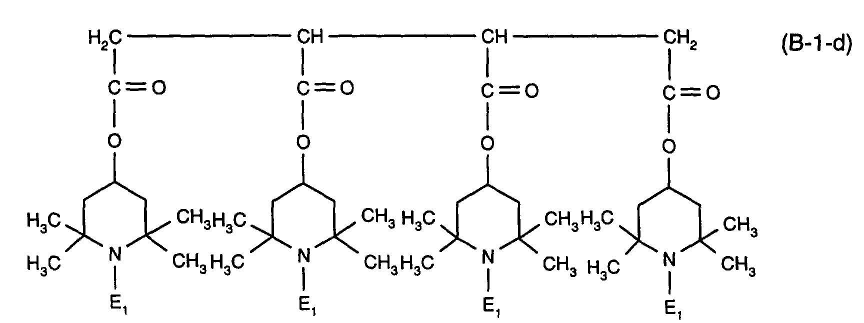 wherein E₁ is hydrogen, C₁-C₈alkyl, O, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl; 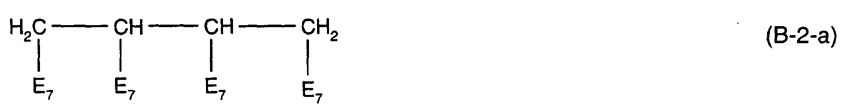 in which two of the radicals E₇ are -COO-C₁₃H₂₇ and
two of the radicals E₇ are 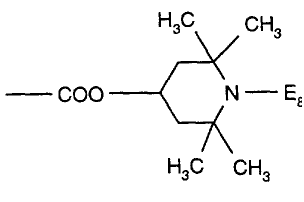 and E₈ has one of the meanings
of E_{1;} 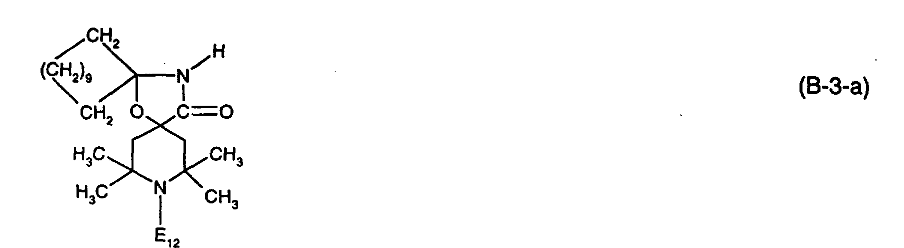 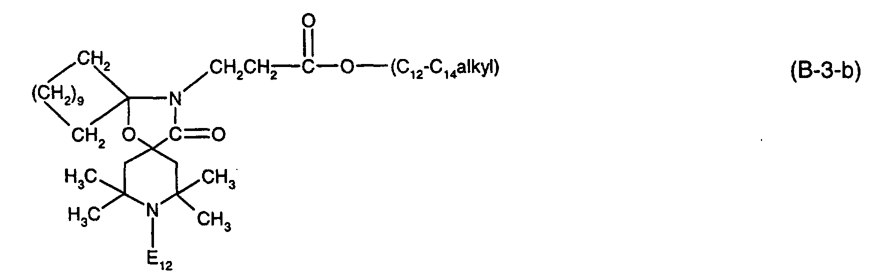 wherein E₁₂ has one of the meanings of E₁; 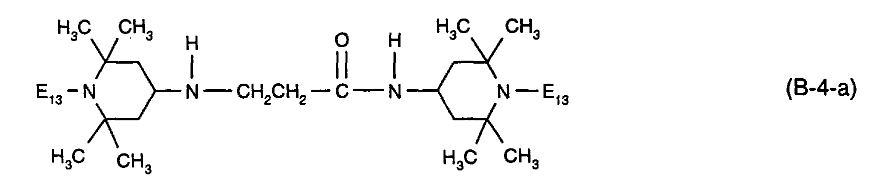 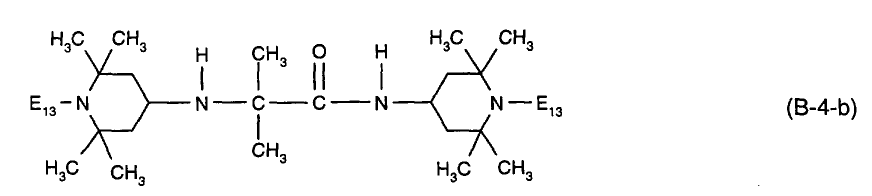 wherein E₁₃ has one of the meanings of E₁; 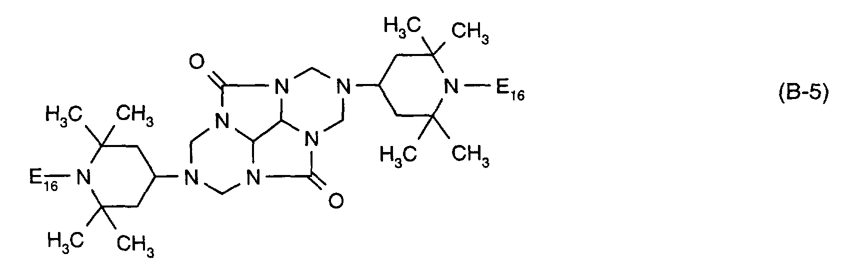 wherein E₁₆ has one of the meanings of E₁; 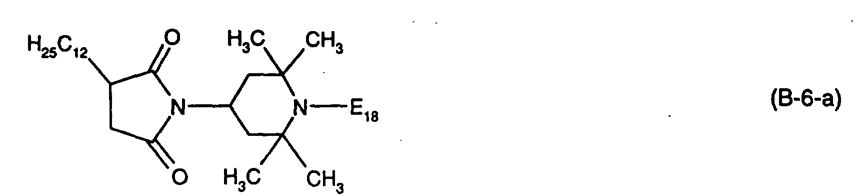 wherein E₁₈ has one of the meanings of E₁; 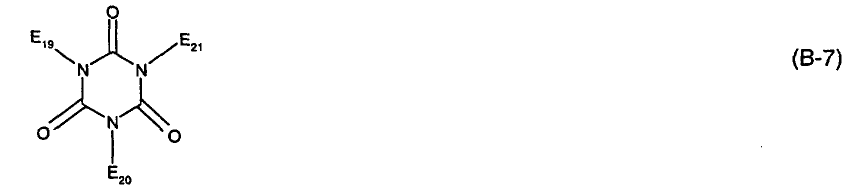 in which E₁₉, E₂₀ and E₂₁ independently of one another are a group of the formula (b-lll) 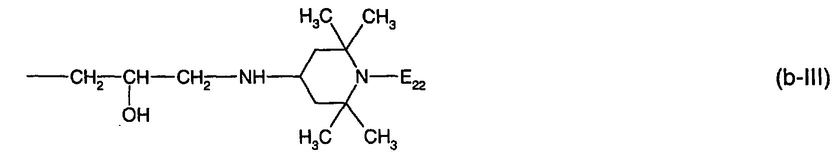 wherein E₂₂ has one of the meanings of E₁; 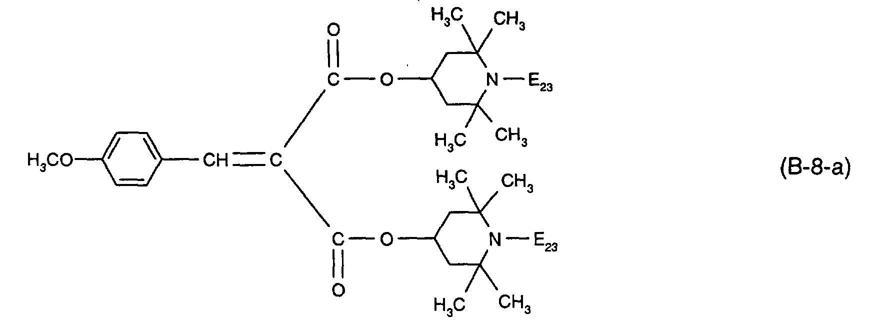 wherein E₂₃ has one of the meanings of E_{1;} 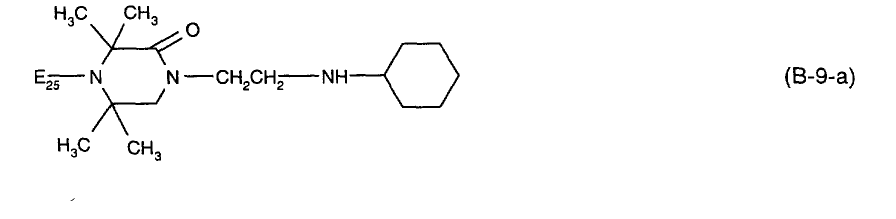 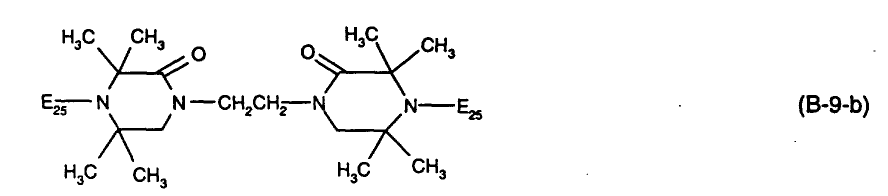 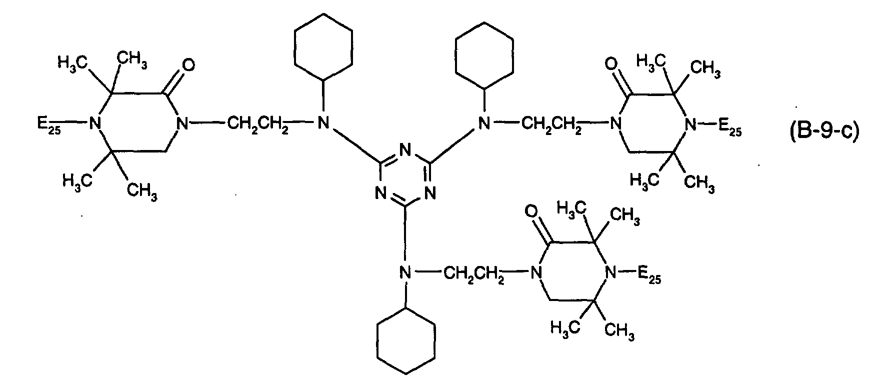 wherein E₂₅ has one of the meanings of E₁; 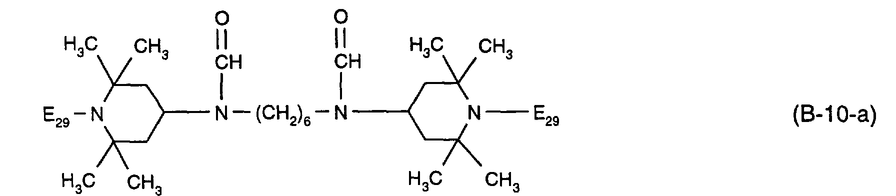 wherein E₂₉ has one of the meanings of E₁; 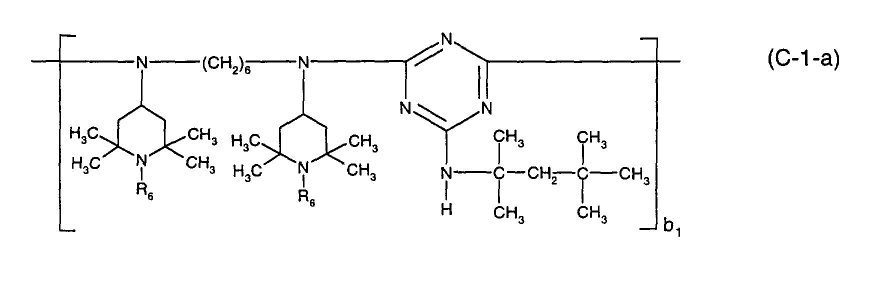 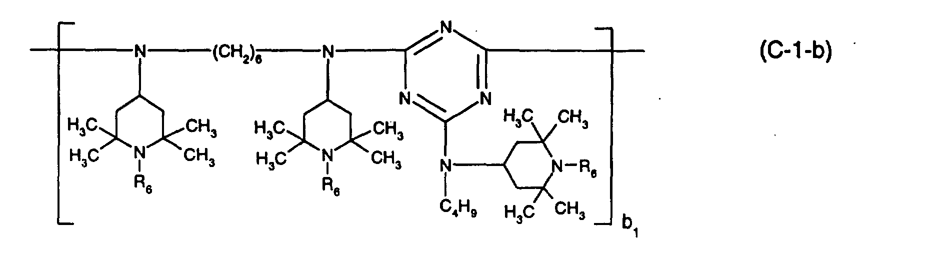 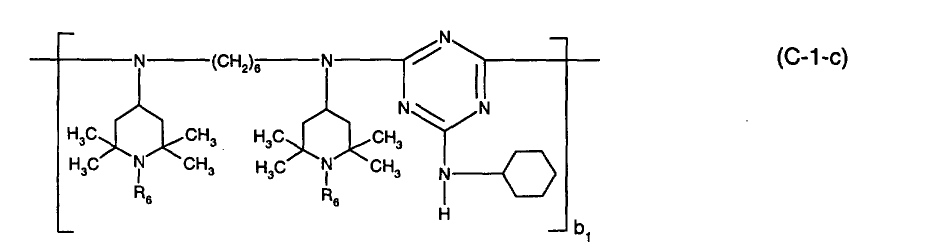 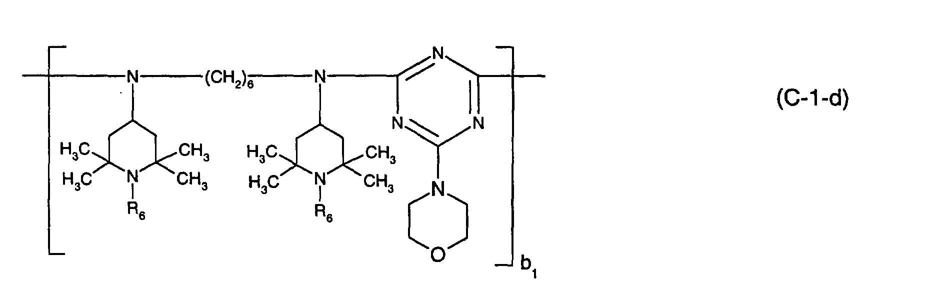 wherein b₁ is a number from 2 to 20 and R₆ is hydrogen, C₁-C₈alkyl, O, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl; 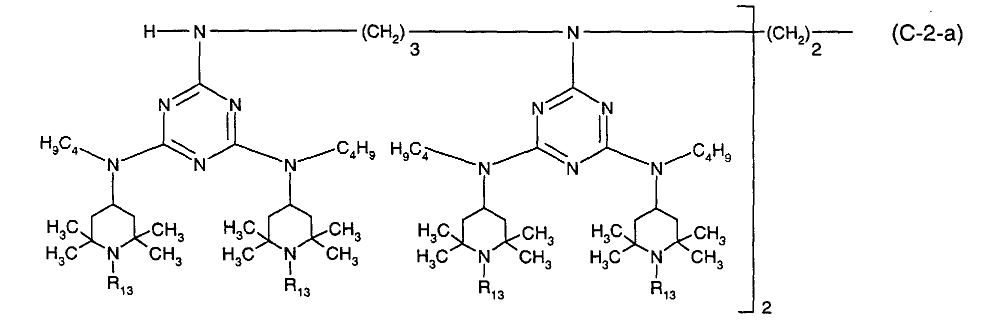 wherein R₁₃ has one of the meanings of R₆, 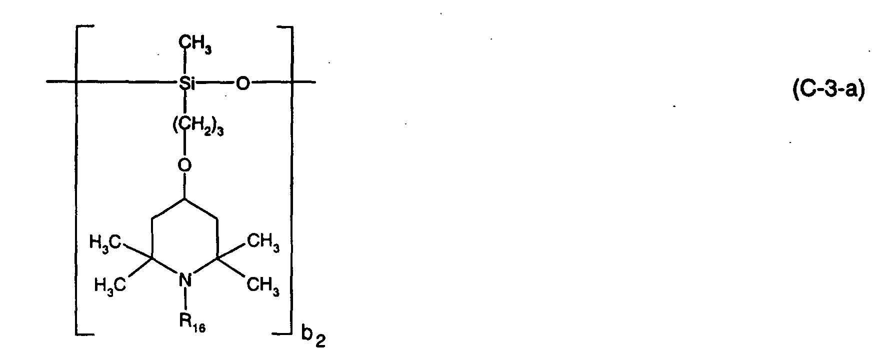 wherein b₂ is a number from 2 to 20 and R₁₆ has one of the meanings of R₆; 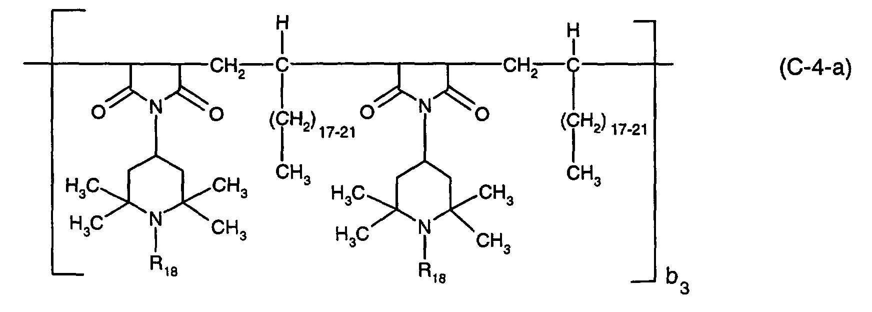 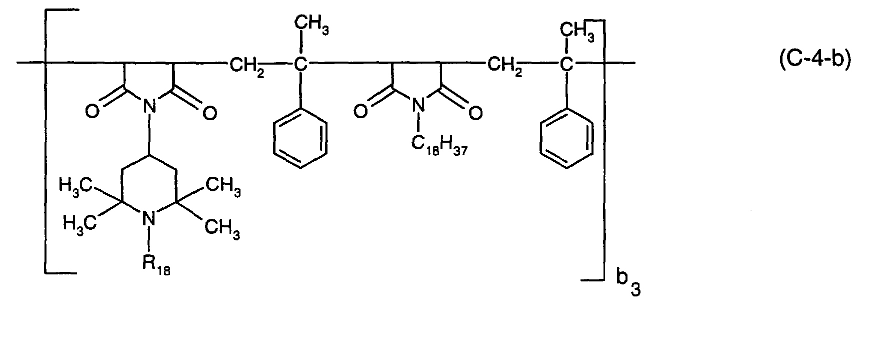 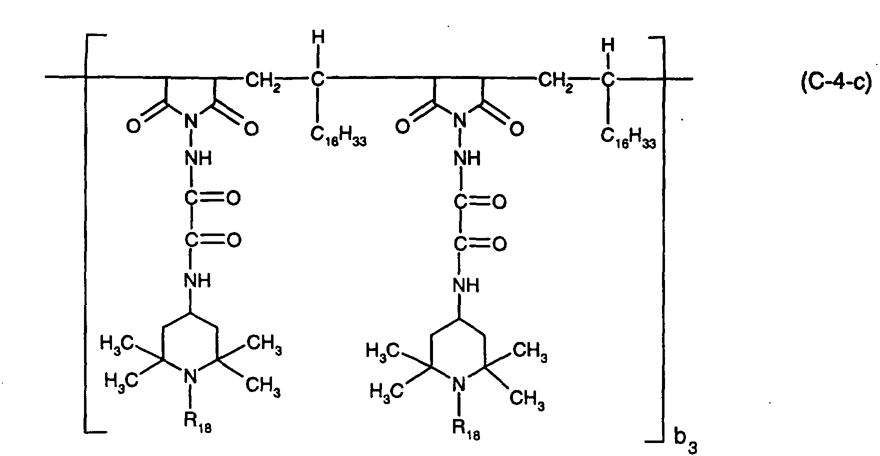 wherein b₃ is a number from 1 to 20 and R₁₈ has one of the meanings of R₆; 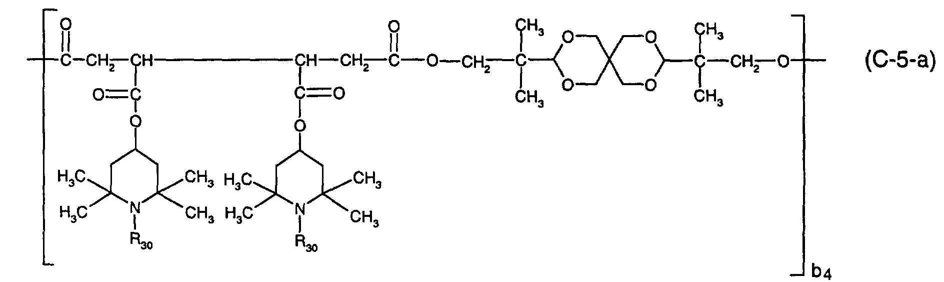 wherein b₄ is a number from 1 to 20 and R₃₀ has one of the meanings of R₆;
a product (C-6-a) obtainable by reacting a product, obtained by reaction of a polyamine of the formula (C-6-1-a) with cyanuric chloride, with a compound of the formula (C-6-2-a) 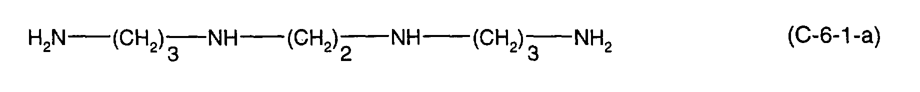 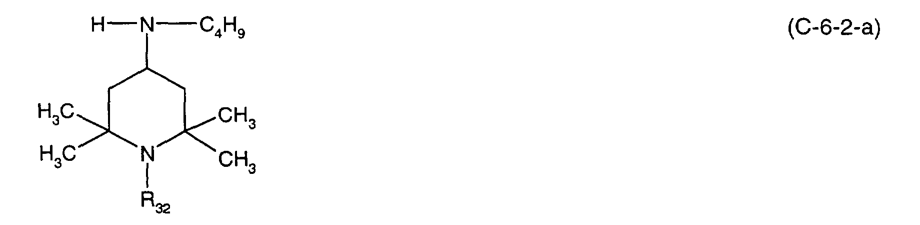 in which R₃₂ has one of the meanings of R₆.

A particularly preferred embodiment of this invention also relates to a stabilizer mixture wherein
**component (A)** is a compound of the formula (A-1-a) wherein n₁ is a number from 2 to 20, or a compound of the formula (A-2-a) or (A-2-b) wherein n₂ and n₂* are a number from 2 to 20;
**component (B-X)** is a compound of the formula (B-1-b) wherein E₁ is hydrogen or methyl;
**component (B-XX)** is a compound of the formula (B-1-a) wherein E₁ is hydrogen, or a compound of the formula (B-6-a) wherein E₁₈ is methyl; and
**component (C)** is a compound of the formula (C-1-a) wherein b₁ is a number from 2 to 20 and R₆ is hydrogen, or a compound of the formula (C-1-b) wherein R₆ is hydrogen or propoxy and b₁ is a number from 2 to 20, or a compound of the formula (C-1-c) wherein R₆ is hydrogen and b₁ is a number from 2 to 20, or a compound of the formula (C-1-d) wherein R₆ is hydrogen or methyl and b₁ is a number from 2 to 20, or a compound of the formula (C-2-a) wherein R₁₃ is methyl, or a compound of the formula (C-3-a) wherein R₁₆ is hydrogen and b₂ is a number from 2 to 20, or a compound of the formula (C-4-a) wherein R₁₈ is hydrogen and b₃ is a number from 1 to 20, or a compound of the formula (C-5-a) wherein R₃₀ is hydrogen or methyl and b₄ is a number from 1 to 20, or a product (C-6-a).

Component (A) is preferably a compound of the formula (A-1-a).

According to a further particular preferred embodiment
**component (A)** is a compound of the formula (A-1-a);
**component (B-X)** is a compound of the formula (B-1-b) with E₁ being hydrogen;
**component (B-XX)** is a compound of the formula (B-1-a) with E₁ being hydrogen; and **component (C)** is a compound of the formula (C-1-a) with R₆ being hydrogen.

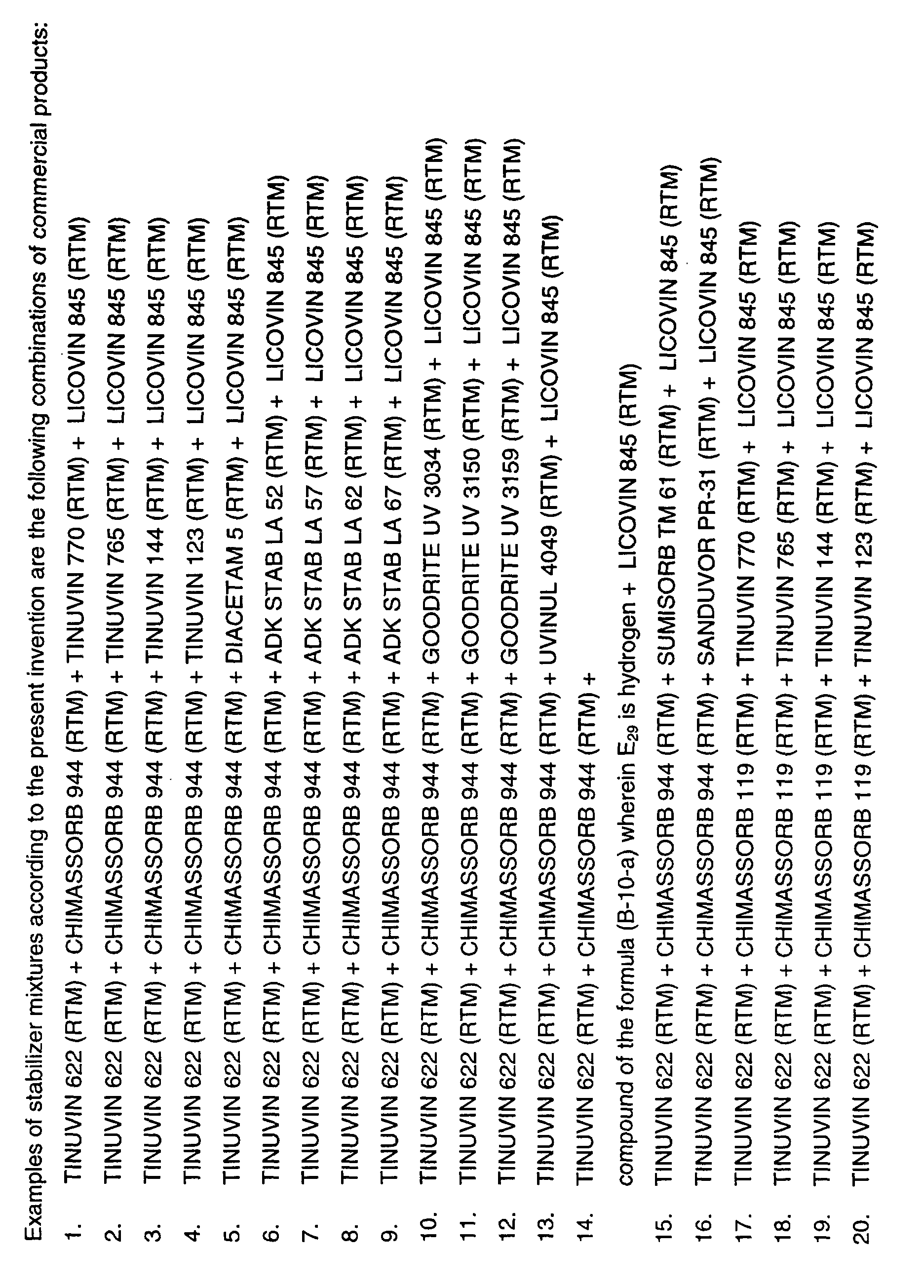

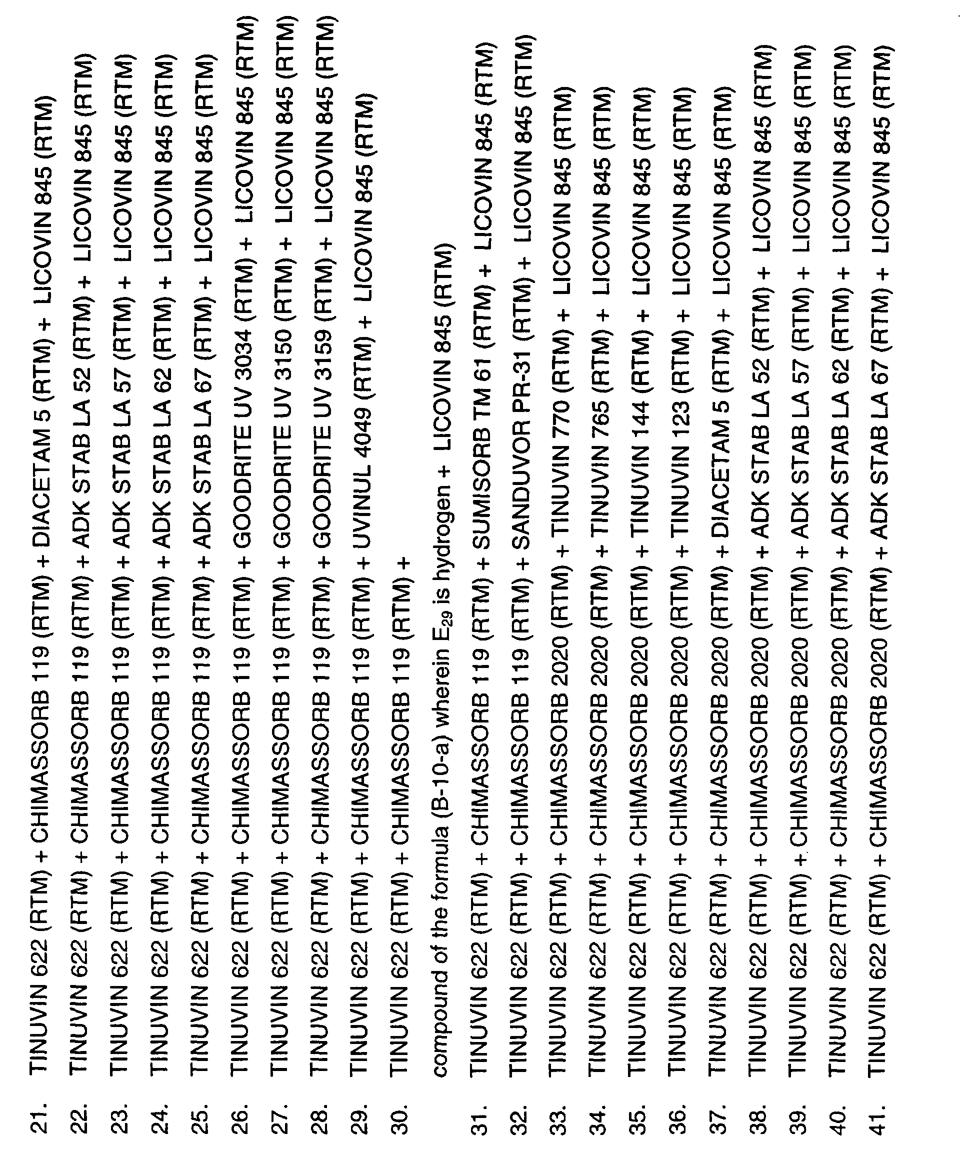

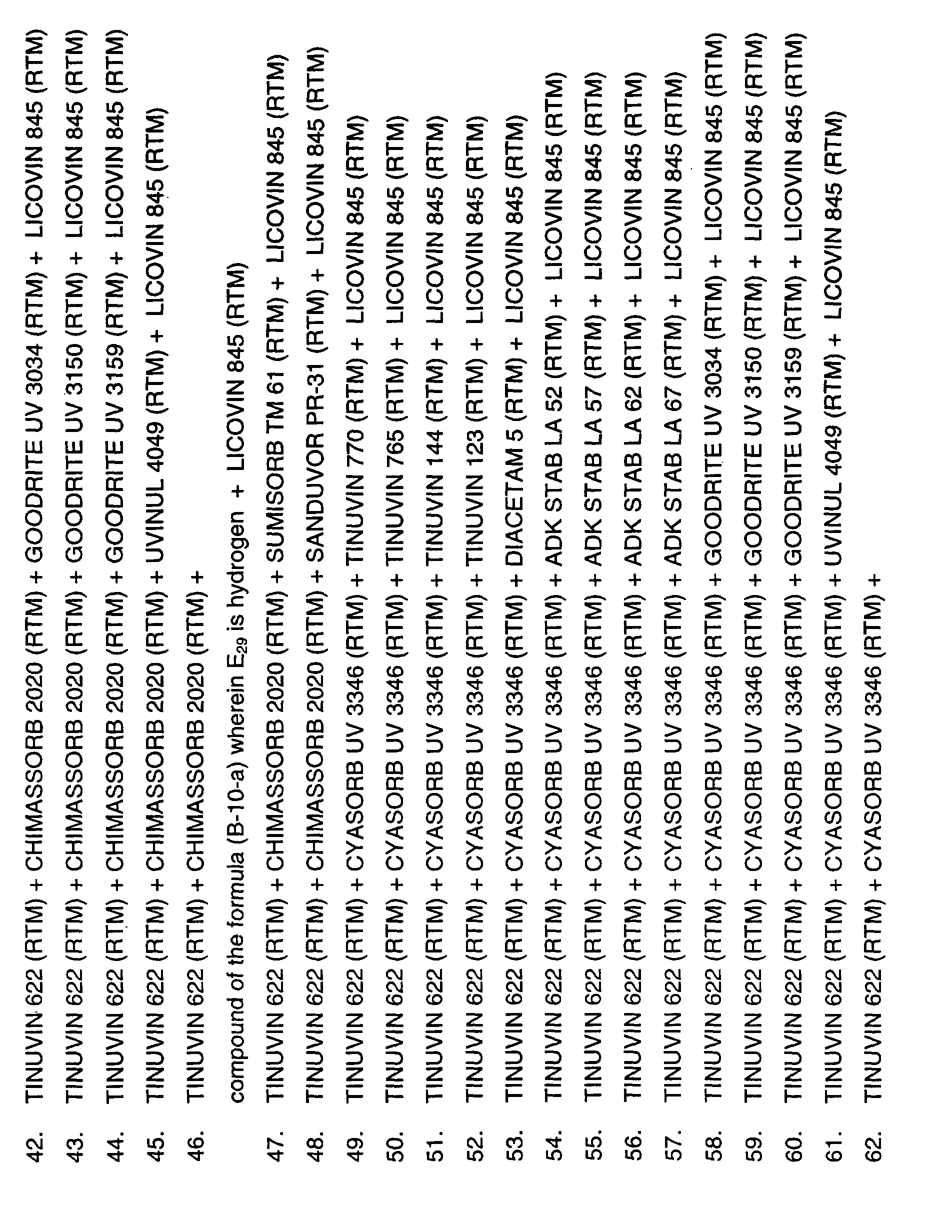

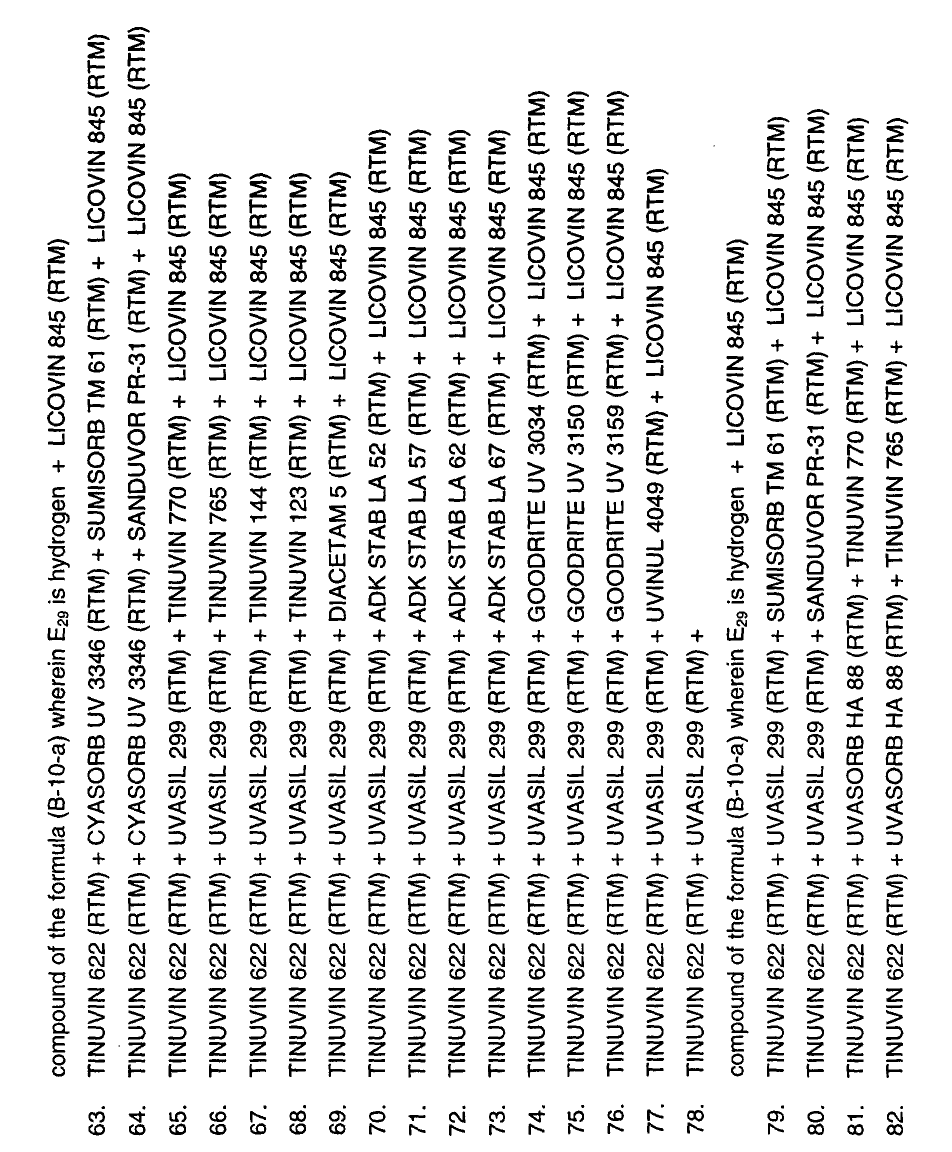

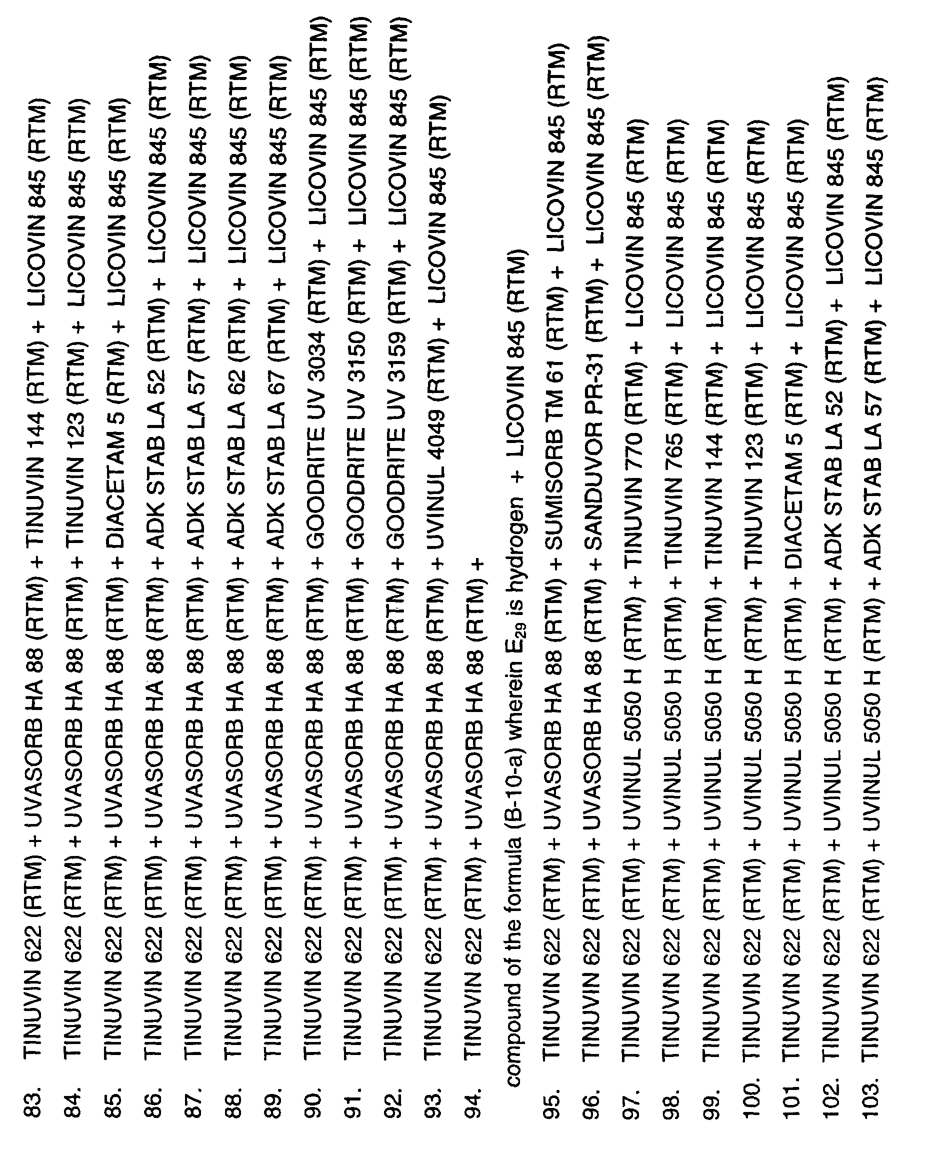

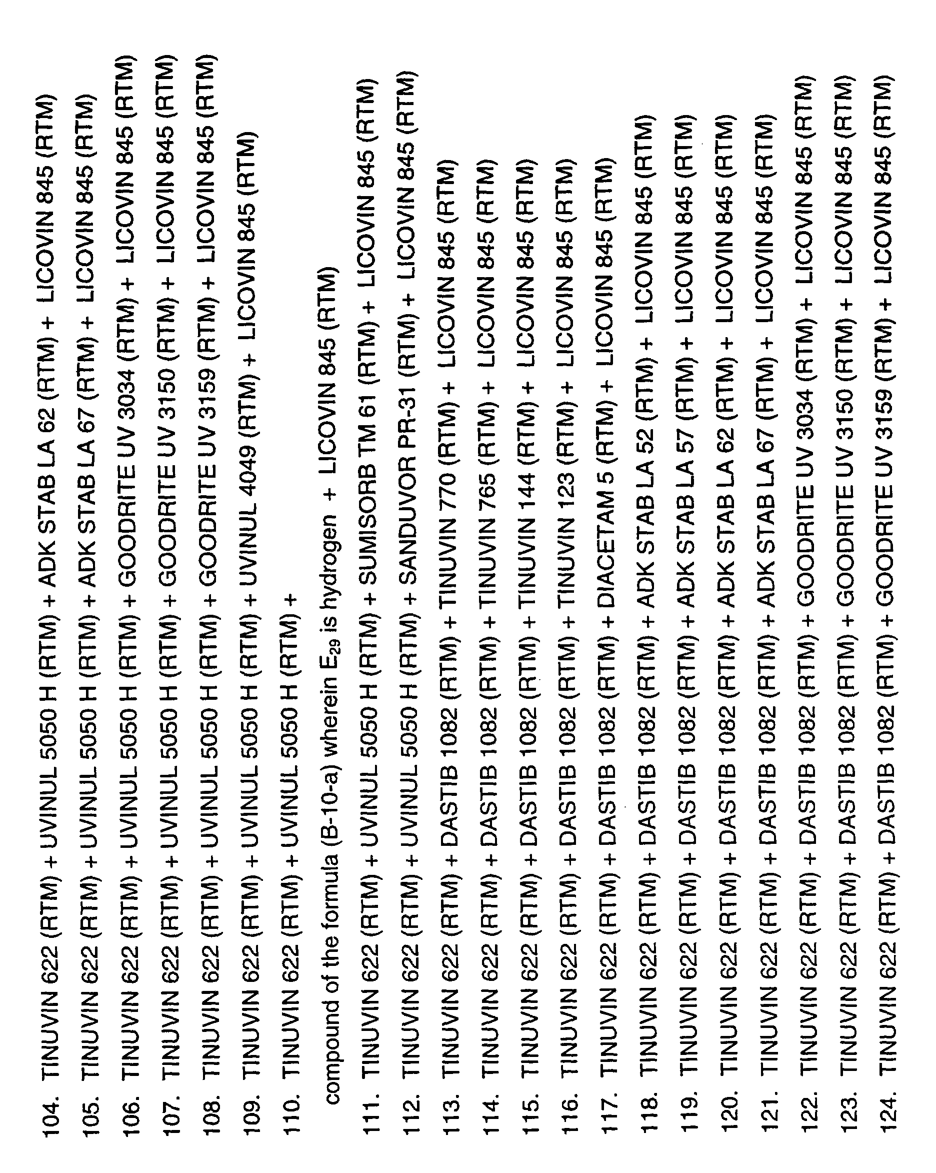

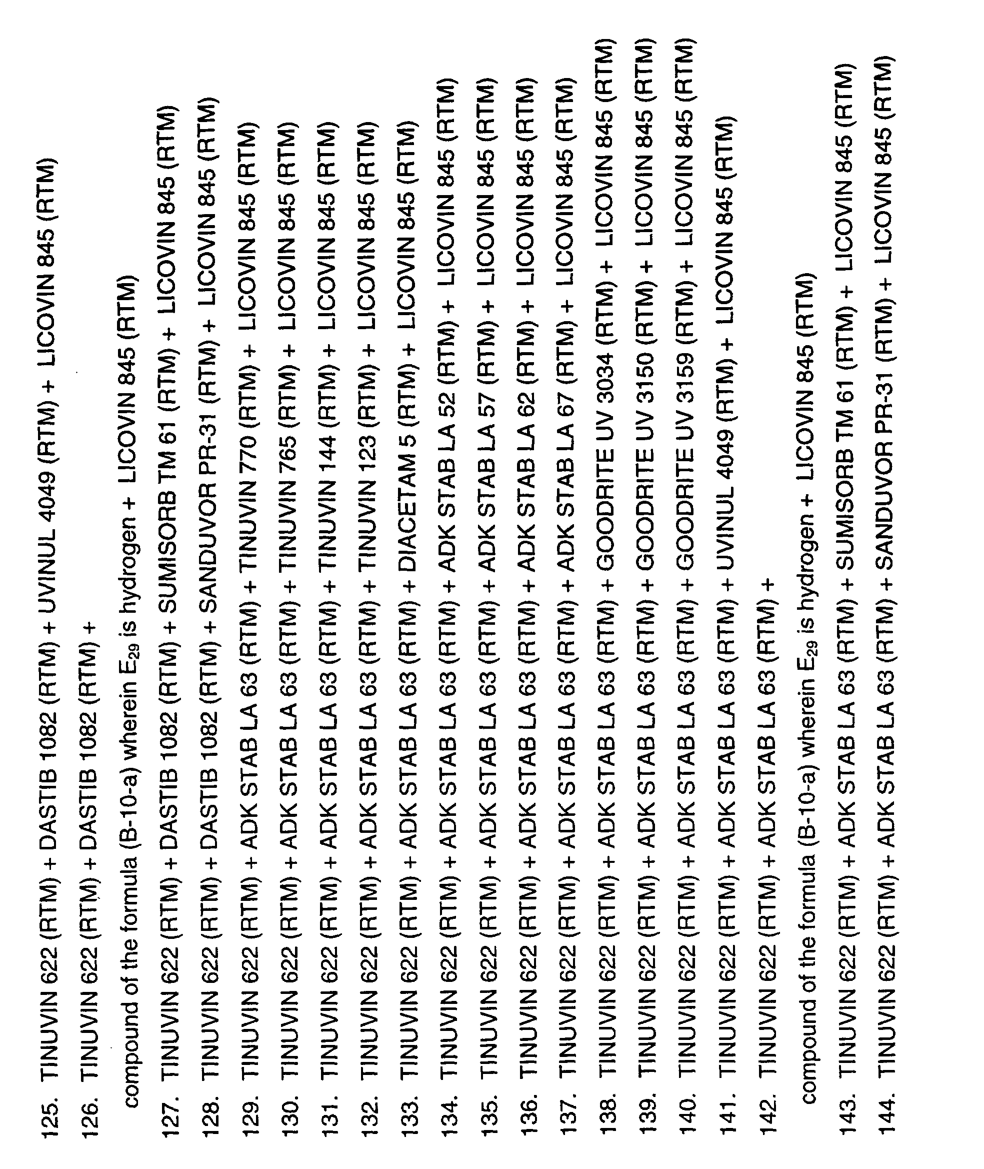

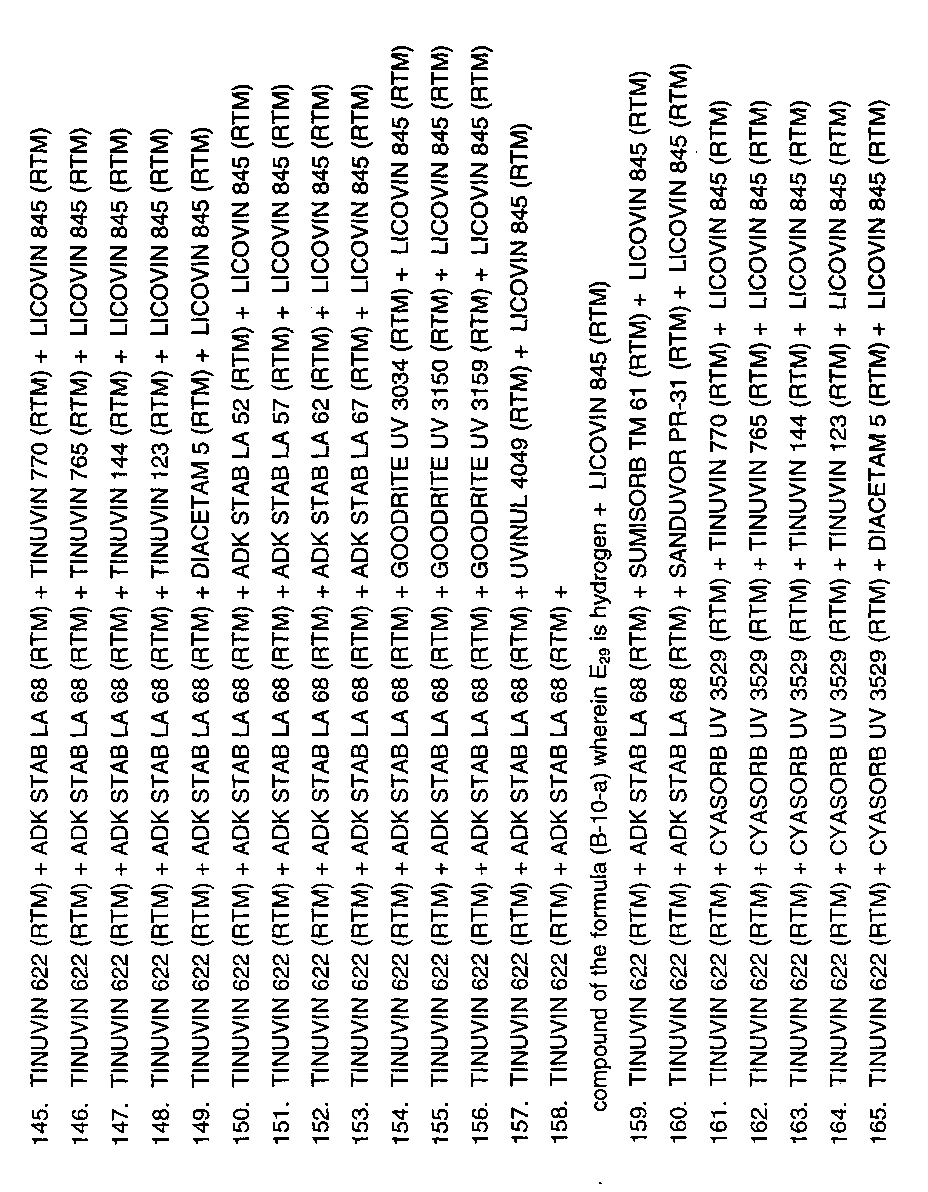

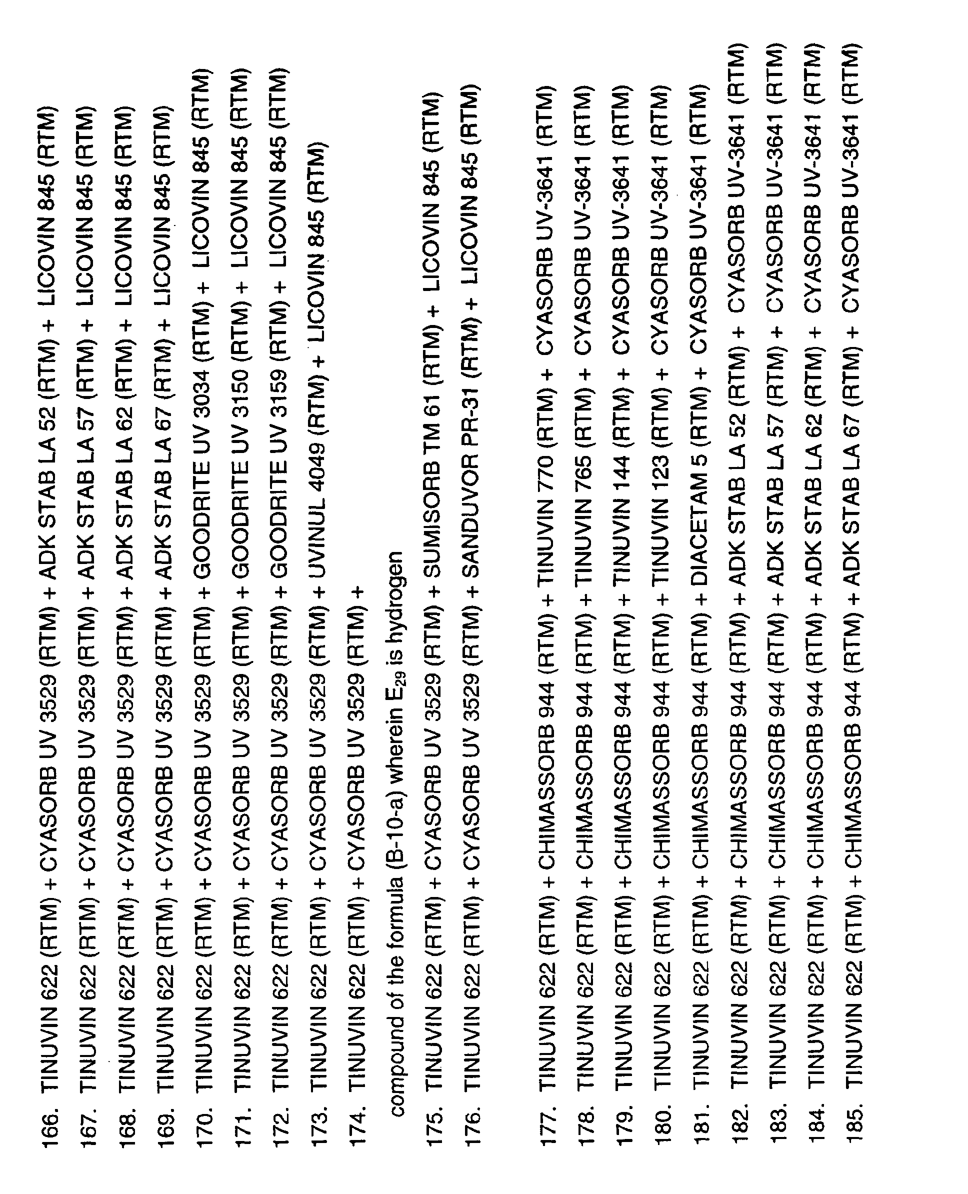

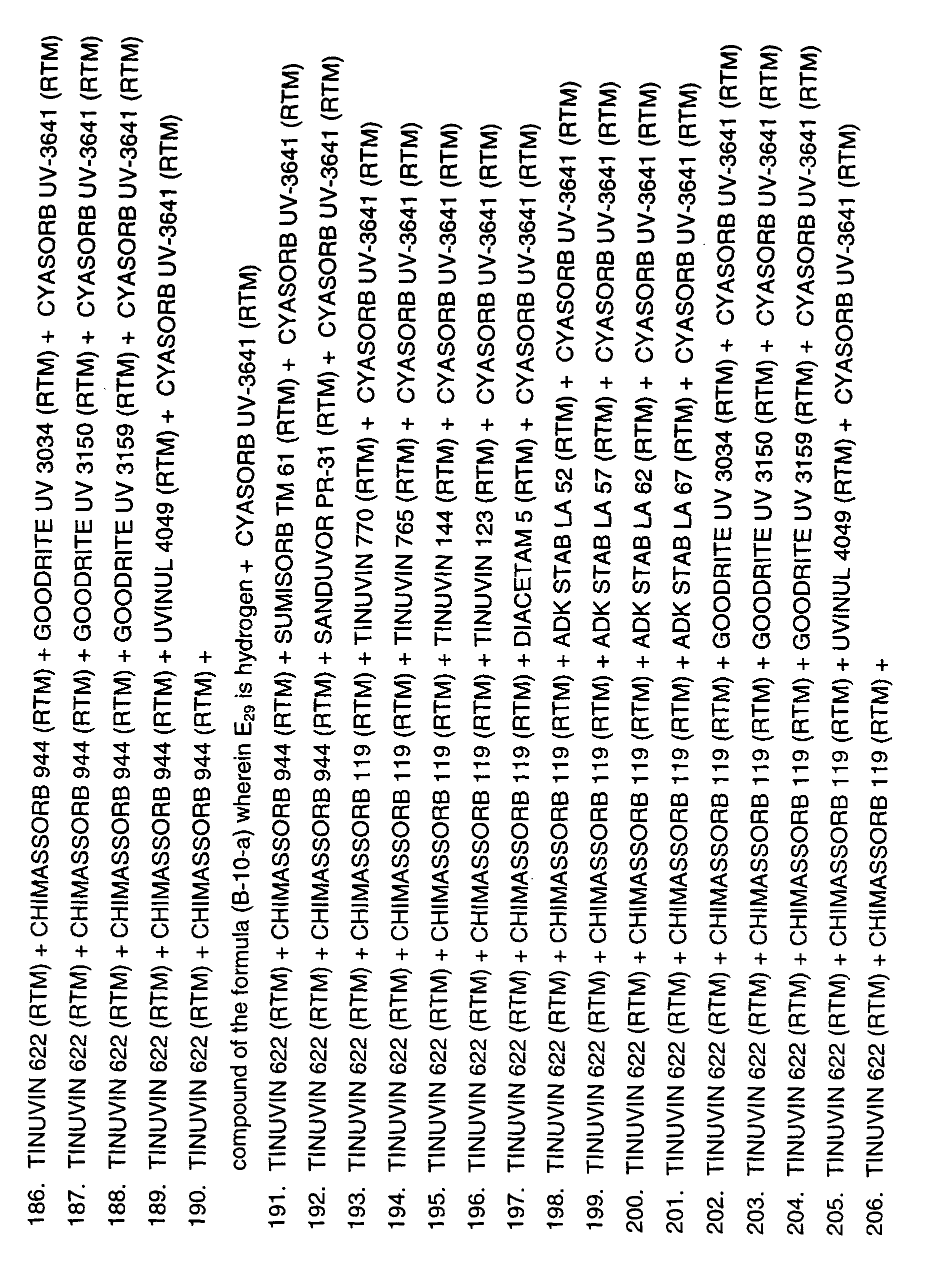

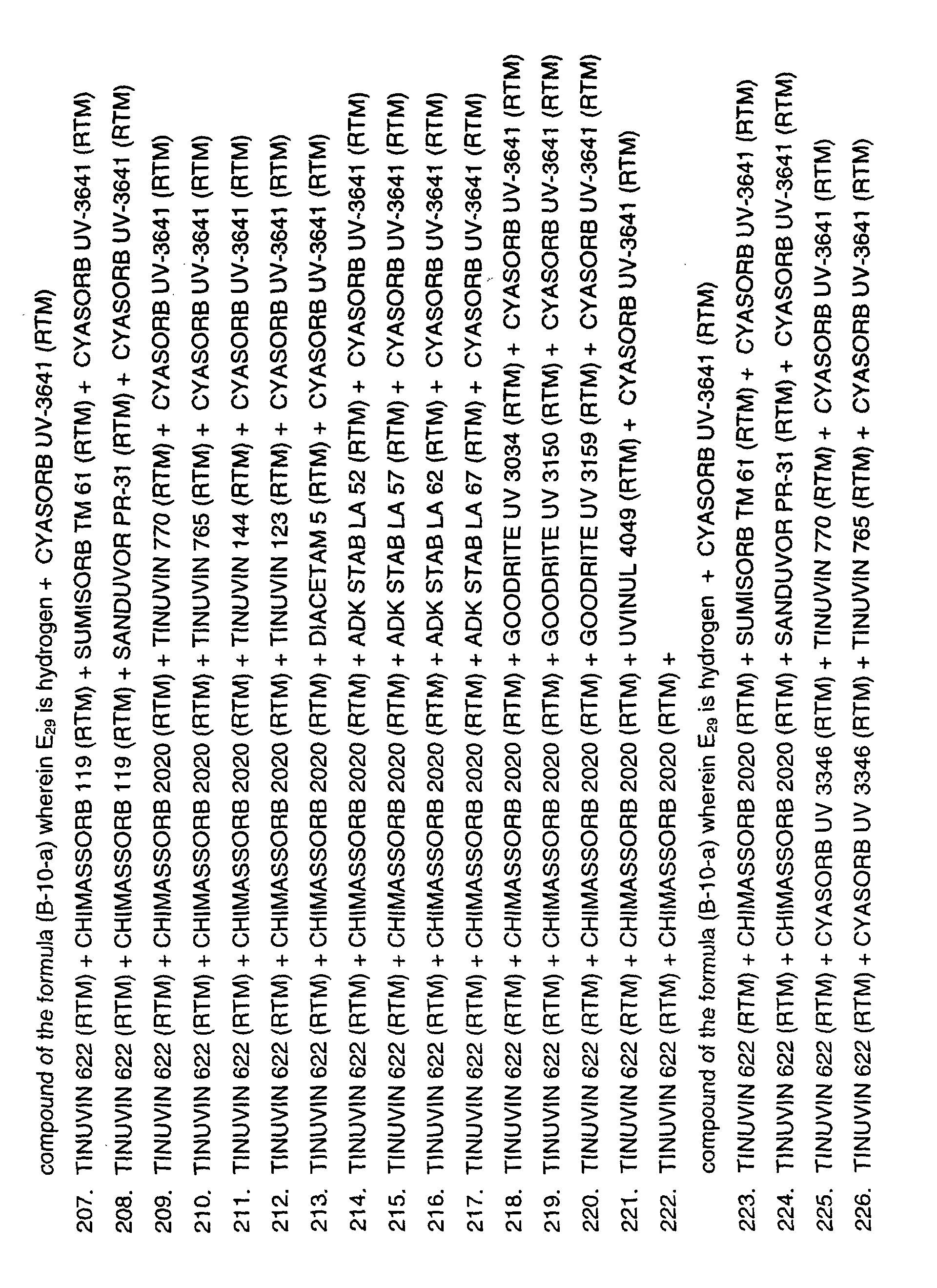

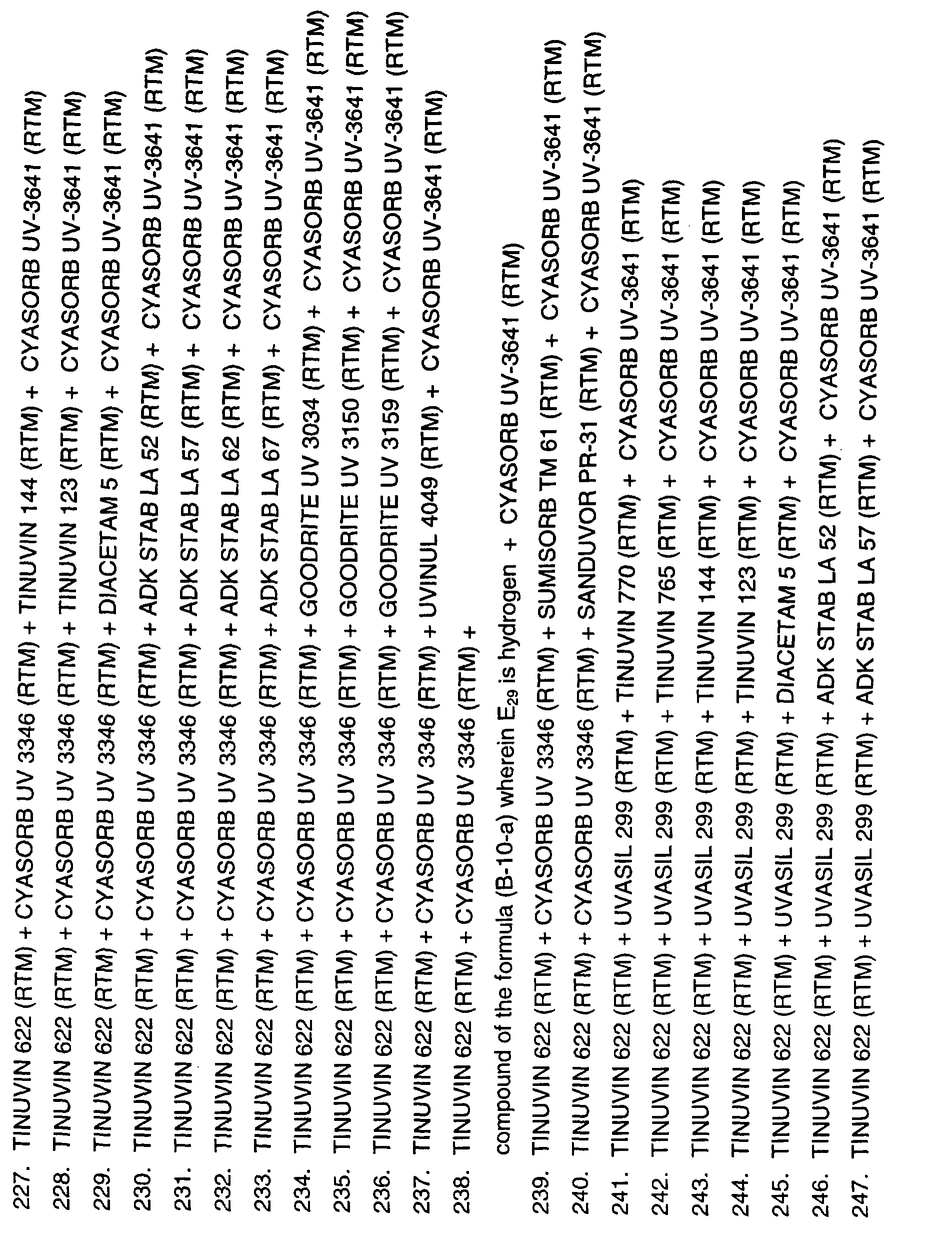

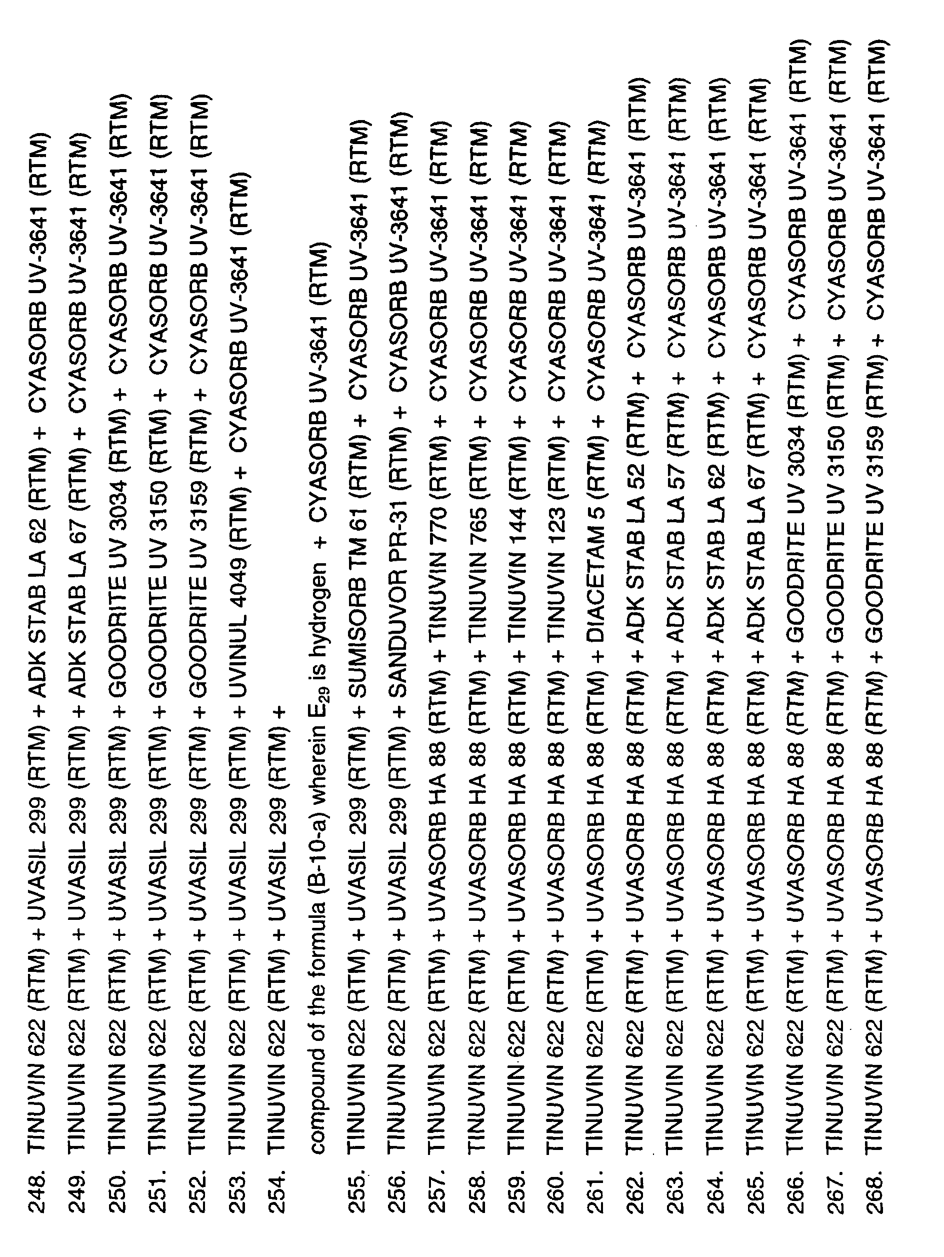

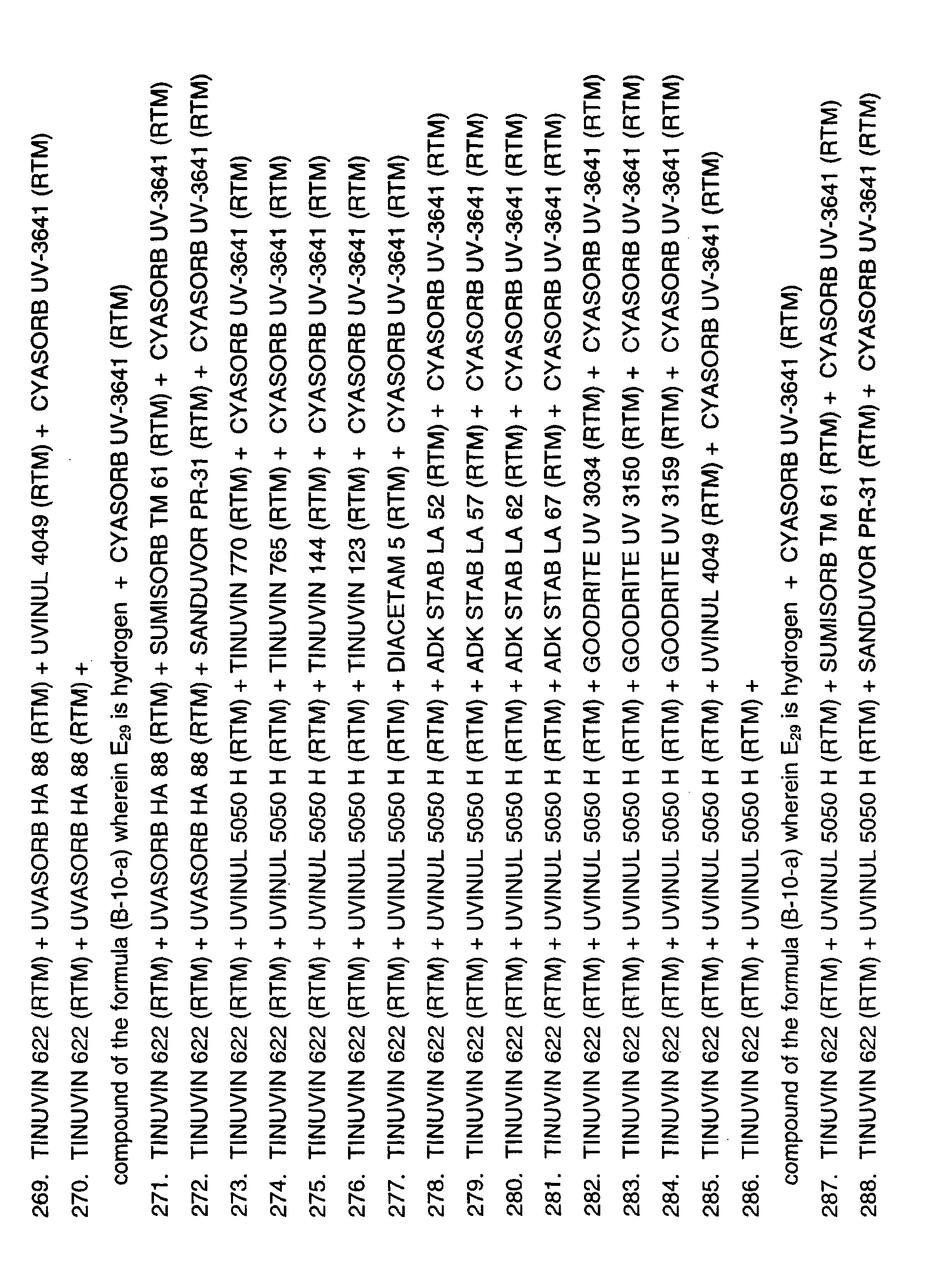

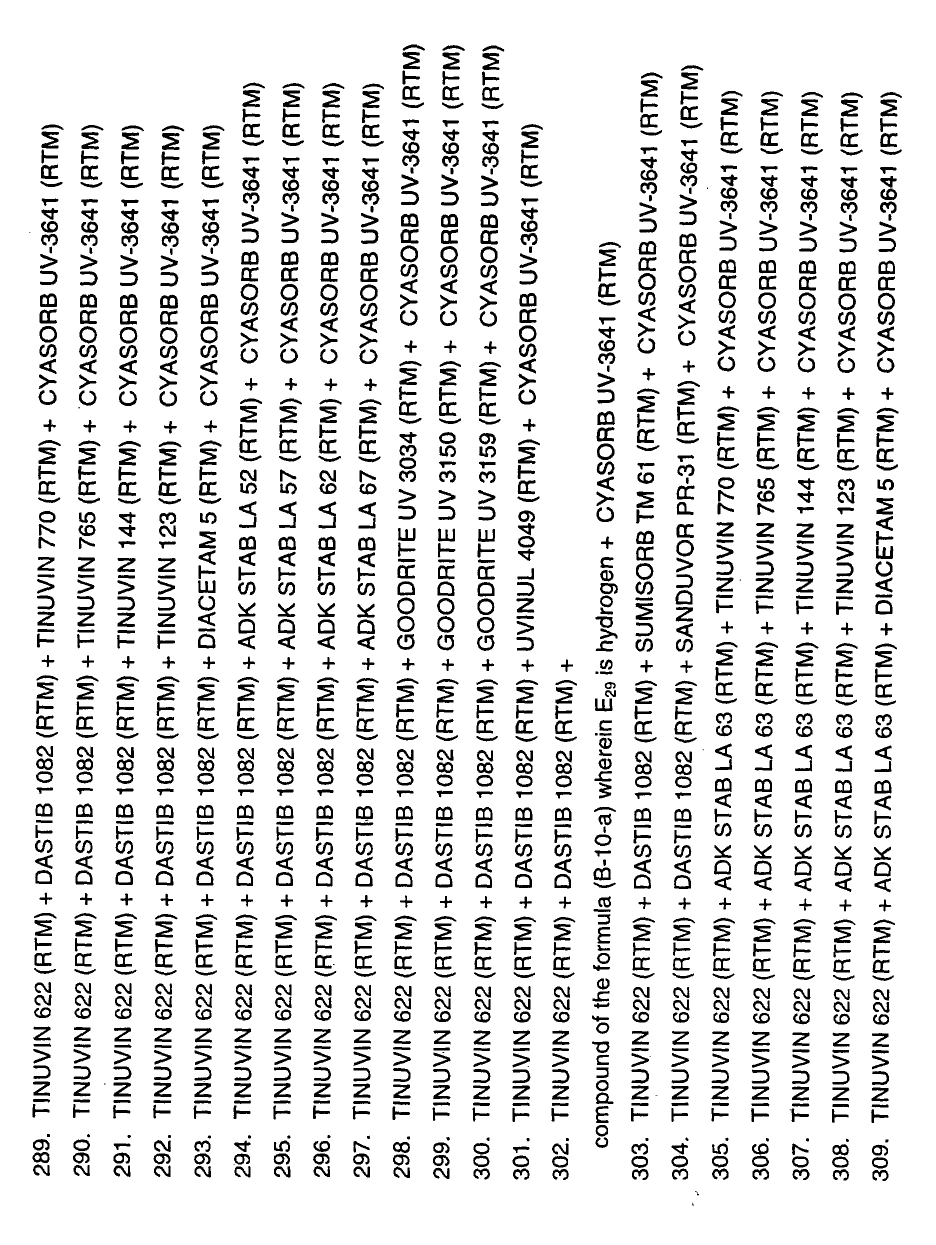

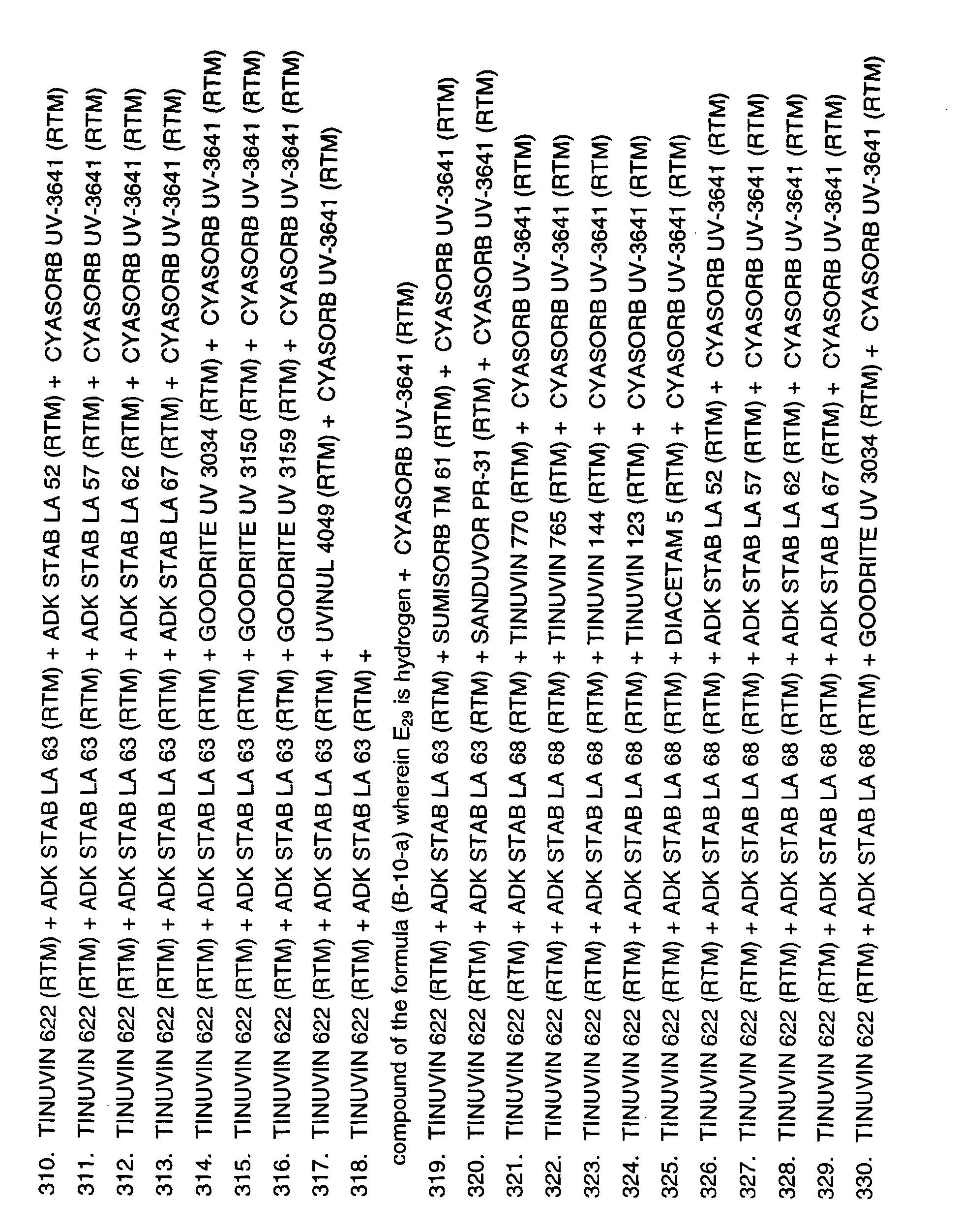

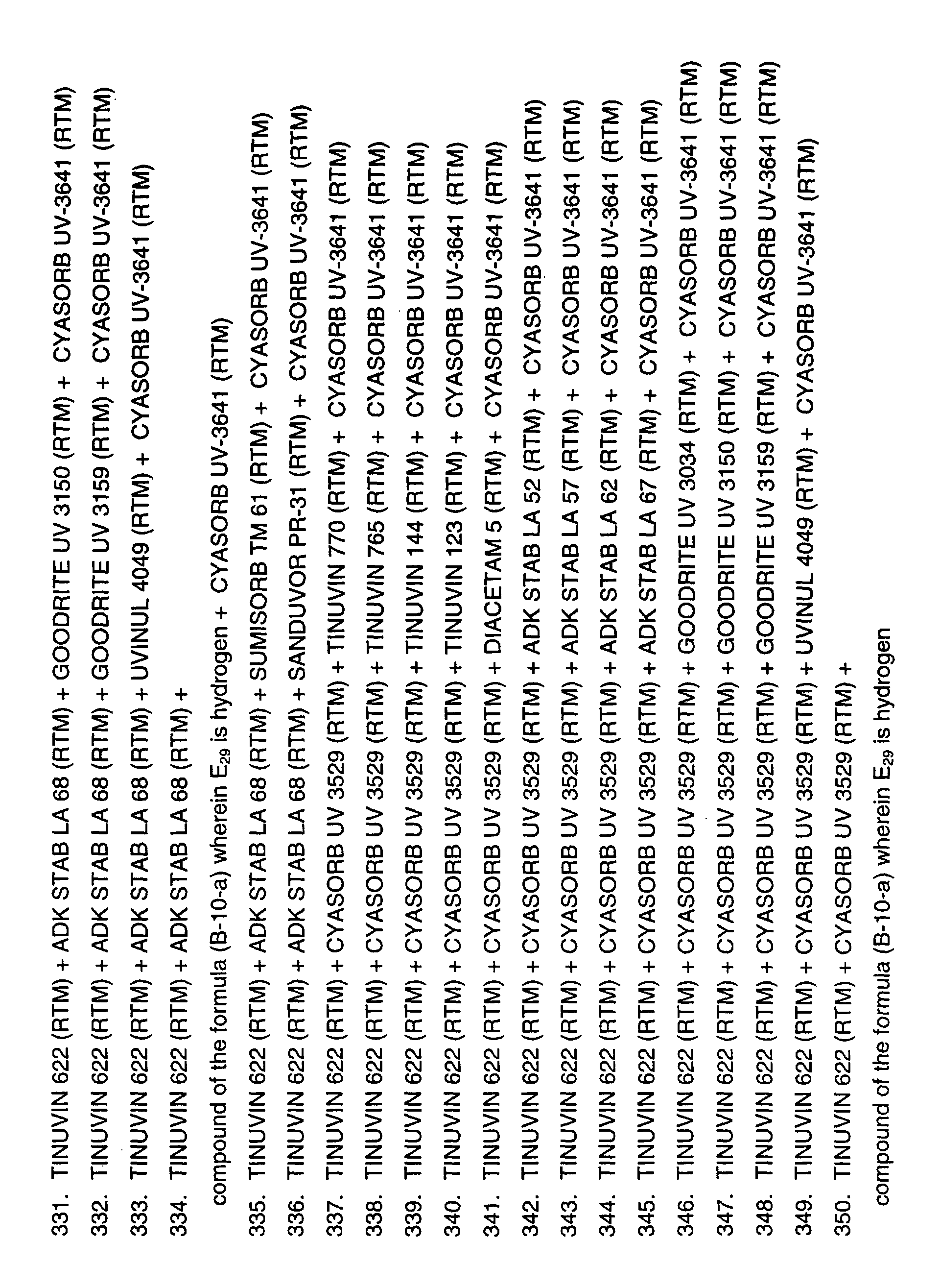

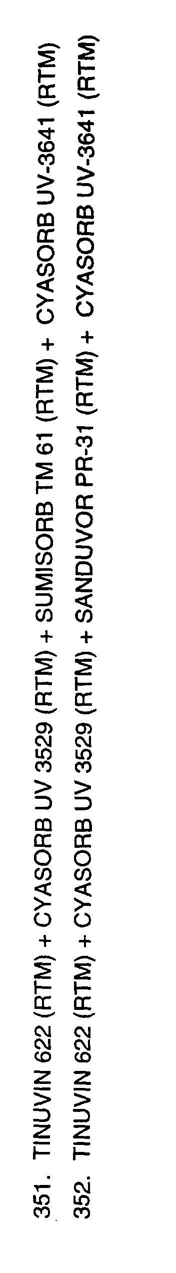

Further examples of stabilizer mixtures are those wherein in the above combinations 1 to 352 the commercial product TINUVIN 622 (RTM) is replaced by a compound of the formula (A-2-a) and / or (A-2-b) 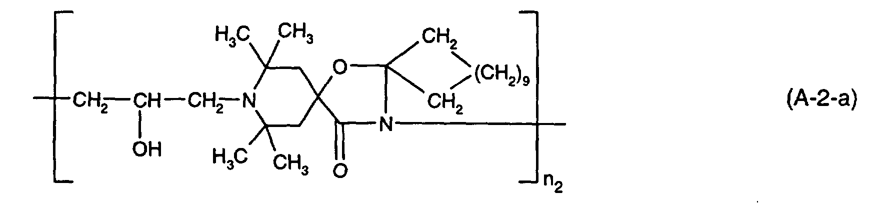 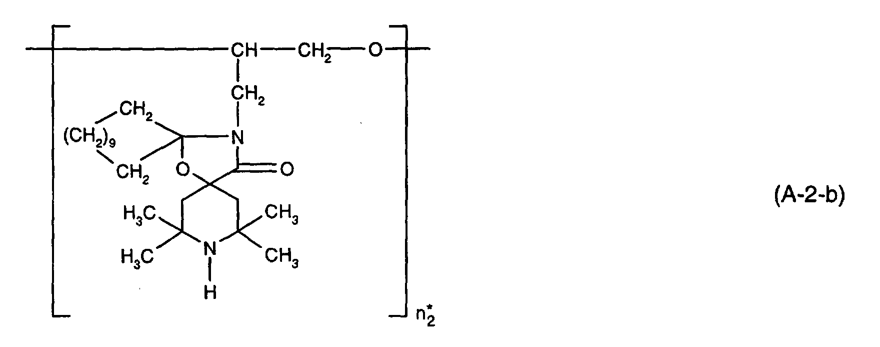 wherein n₂ and n₂* are a number from 2 to 20.

Additional examples of stabilizer mixtures are those wherein in the above combinations 1 to 352 the commercial product TINUVIN 622 (RTM) is replaced by a compound of the formula (A-4-a) 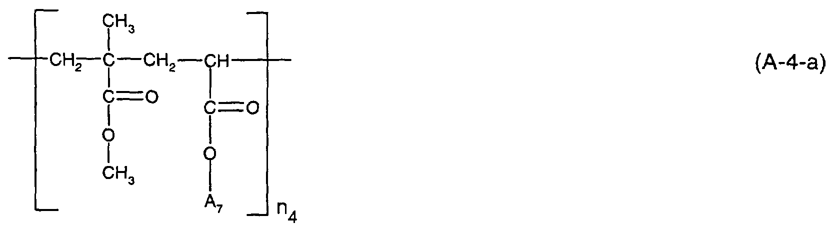 wherein n₄ is a number from 2 to 20, and
at least 50 % of the radicals A₇ are a group of the formula 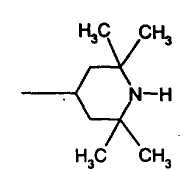 and the
remaining radicals A₇ are ethyl.

Combinations of particular interest are numbers 1,17, 33, 49, 65, 81, 97, 113, 129, 145, 194, 306 and 338.

The commercial product LICOVIN 845 (RTM) corresponds to the compounds of the formula (B-1-a) wherein E₁ is hydrogen.

The commercial product CYASORB UV-3641 corresponds to the compound of the formula (B-6-a) wherein E₁₈ is methyl.

The commercial product TINUVIN 622 (RTM) corresponds to the compound of the formula (A-1-a).

The commercial product TINUVIN 770 (RTM) corresponds to the compound of the formula (B-1-b) wherein E₁ is hydrogen.

The commercial product TINUVIN 765 (RTM) corresponds to the compound of the formula (B-1-b) wherein E₁ is methyl.

The commercial product TINUVIN 123 (RTM) corresponds to the compound of the formula (B-1-b) wherein E₁ is octyloxy.

The commercial product TINUVIN 144 (RTM) corresponds to the compound of the formula (B-1-c) wherein E₁ is methyl.

The commercial product ADK STAB LA 57 (RTM) corresponds to the compound of the formula (B-1-d) wherein E₁ is hydrogen.

The commercial product ADK STAB LA 52 (RTM) corresponds to the compound of the formula (B-1-d) wherein E₁ is methyl.

The commercial product ADK STAB LA 67 (RTM) corresponds to the compound of the formula (B-2-a) wherein E₈ is hydrogen.

The commercial product ADK STAB LA 62 (RTM) corresponds to the compound of the formula (B-2-a) wherein E₁ is methyl.

The commercial product DIACETAM 5 (RTM) corresponds to the compound of the formula (B-4-a) wherein E₁₃ is hydrogen.

The commercial product SUMISORB TM 61 corresponds to the compound of the formula (B-4-b) wherein E₁₃ is hydrogen.

The commercial product UVINUL 4049 (RTM) corresponds to the compound of the formula (B-5) wherein E₁₆ is hydrogen.

The commercial product SANDUVOR PR 31 (RTM) corresponds to the compound of the formula (B-8-a) wherein E₂₃ is methyl.

The commercial product GOODRITE 3034 (RTM) corresponds to the compound of the formula (B-9-b) wherein E₂₅ is hydrogen.

The commercial product GOODRITE 3150 (RTM) corresponds to the compound of the formula (B-9-c) wherein E₂₅ is hydrogen.

The commercial product GOODRITE 3159 (RTM) corresponds to the compound of the formula (B-9-c) wherein E₂₅ is methyl.

The commercial product CHIMASSORB 944 (RTM) corresponds to the compound of the formula (C-1-a) wherein R₆ is hydrogen.

The commercial product CHIMASSORB 2020 (RTM) corresponds to the compound of the formula (C-1-b) wherein R₆ is hydrogen.

The commercial product DASTIB 1082 (RTM) corresponds to the compound of the formula (C-1-c) wherein R₆ is hydrogen.

The commercial product CYASORB UV 3346 (RTM) corresponds to the compound of the formula (C-1-d) wherein R₆ is hydrogen.

The commercial product CYASORB UV 3529 (RTM) corresponds to the compound of the formula (C-1-d) wherein R₆ is methyl.

The commercial product CHIMASSORB 119 (RTM) corresponds to the compound of the formula (C-2-a) wherein R₁₃ is methyl.

The commercial product UVASIL 299 (RTM) corresponds to the compound of the formula (C-3-a) wherein R₁₆ is hydrogen.

The commercial product UVINUL 5050 H (RTM) corresponds to the compound of the formula (C-4-a) wherein R₁₈ is hydrogen.

The commercial product ADK STAB LA 68 (RTM) corresponds to the compound of the formula (C-5-a) wherein R₃₀ is hydrogen.

The commercial product ADK STAB LA 63 (RTM) corresponds to the compound of the formula (C-5-a) wherein R₃₀ is methyl.

The commercial product UVASORB HA 88 (RTM) corresponds to the product (C-6-a) wherein R₃₂ is hydrogen.

A further preferred embodiment of this invention relates to a stabilizer mixture containing additionally
(X-1) a pigment or
(X-2) an UV absorber or
(X-3) a pigment and an UV absorber.

The pigment (component (X-1 )) may be an inorganic or organic pigment.

Examples of inorganic pigments are titanium dioxide, zinc oxide, carbon black, cadmium sulfide, cadmium selenide, chromium oxide, iron oxide, lead oxide and so on.

Examples of organic pigments are azo pigments, anthraquinones, phthalocyanines, tetrachloroisoindolinones, quinacridones, isoindolines, perylenes, pyrrolopyrroles (such as Pigment Red 254) and so on.

All pigments described in "Gachter/Muller: Plastics Additives Handbook, 3rd Edition, Hanser Publishers, Munich Vienna New York", page 647 to 659, point 11.2.1.1 to 11.2.4.2 can be used as component (X-1).

A particularly preferred pigment is titanium dioxide, optionally in combination with an organic pigment.

Examples of such organic pigments are:
C.l. (Colour Index) Pigment Yellow 93, C.I. Pigment Yellow 95, C.l. Pigment Yellow 138, C.I. Pigment Yellow 139, C.l. Pigment Yellow 155, C.l. Pigment Yellow 162, C.l. Pigment Yellow 168, Cl. Pigment Yellow 180, Cl. Pigment Yellow 183, C.I. Pigment Red 44, C.l. Pigment Red 170, C.l. Pigment Red 202, C.I. Pigment Red 214, C.I. Pigment Red 254, C.l. Pigment Red 264, C.I. Pigment Red 272, C.l. Pigment Red 48:2, C.l. Pigment Red 48:3, C.I. Pigment Red 53:1, C.I. Pigment Red 57:1, C.I. Pigment Green 7, C.l. Pigment Blue 15:1, C.I. Pigment Blue 15:3 and C.l. Pigment Violet 19.

Examples of the UV absorber (component (X-2)) are a 2-(2'-hydroxyphenyl)benzotriazole, a 2-hydroxybenzophenone, an ester of substituted or unsubstituted benzoic acid, an acrylate, an oxamide, a 2-(2-hydroxyphenyl)-1,3,5-triazine, a monobenzoate of resorcinol or a formamidine.

The 2-(2'-hydroxyphenyl)benzotriazole is e.g. 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl- 2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, mixture of 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'--hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2, 2,2'--azole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol] or the transesterification product of 2-[3'-tert-butyl-5'-(2-methoxycarbonylethyl)-2'-hydroxyphenyl]-2H-benzotriazole with polyethylene glycol 300; [R-CH₂CH₂-COO(CH₂)₃-]₂ where R = 3'-tert-butyl-4'-hydroxy-5'-2H-benzotriazol-2-ylphenyl.

2-(3',5'-Di-tert-butyl-2'-hydroxyphenyl)-5-chloro-benzotriazole, 2-(3'-tert-butyl-2'-hydroxy-5'-methylphenyl)-5-chloro-benzotriazole and 2-(3',5'-di-tert-amyl-2'-hydroxyphenyl)benzotriazole are preferred.

The 2-hydroxybenzophenone is for example the 4-hydroxy, 4-methoxy, 4-octyloxy, 4-decyloxy, 4-dodecyloxy, 4-benzyloxy, 4,2',4'-trihydroxy or 2'-hydroxy-4,4'-dimethoxy derivatives.

2-Hydroxy-4-octyloxybenzophenone is preferred.

The ester of a substituted or unsubstituted benzoic acid is for example 4-tert-butyl-phenyl salicylate, phenyl salicylate, octylphenyl salicylate, dibenzoyl resorcinol, bis(4-tert-butylbenzoyl) resorcinol, benzoyl resorcinol, 2,4-di-tertbutylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate or 2-methyl-4,6-di-tert-butylphenyl 3,5-di-tert-butyl-4-hydroxybenzoate.

2,4-Di-tert-butylphenyl 3,5-di-tert-butyl-4-hydroxybenzoate and hexadecyl 3,5-di-tert-butyl-4-hydroxybenzoate are preferred.

The acrylate is for example ethyl α-cyano-β,β-diphenylacrylate, isooctyl a-cyano-β,β-diphenylacrylate, methyl α-carbomethoxycinnamate, methyl α-cyano-β-methyl-p-methoxycinnamate, butyl α-cyano-β-methyl-p-methoxy-cinnamate, methyl α-carbomethoxy-p-methoxycinnamate or N-(β-carbomethoxy-β-cyanovinyl)-2-methylindoline.

The oxamide is for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide or its mixture with 2-ethoxy-2'-ethyl-5,4'-di-tert-butoxanilide or mixtures of ortho- and para-methoxy--disubstituted oxanilides or mixtures of o- and p-ethoxy-disubstituted oxanilides.

The 2-(2-hydroxyphenyl)-1,3,5-triazine is for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[,3,5-triazine, 2-[2-[2-hydroxy-4-(2-hydroxy-3-butyloxy-propoxy)phenyl]-4,6-bis(2,4-dimethyl)-1,3,5-triazine, 2-[2-hydroxy-4-(2-hydroxy-3-octyloxy-propyloxy)phenyl]-4,6-bis(2,4-dimethyl)-1,3,5-triazine, 2-[4-(dodecyloxy/tridecyloxy-2-hydroxypropoxy)-2-hydroxy-phenyl]-4,6-bis(2,4-dimethylphenyl)-1 ,3,5-triazine, 2 1,3,5-triazine, 2-[2-hydroxy-4-(2-hydroxy-3-dodecyloxy-propoxy)phenyl]-4,6-bis(2,4-dimethylphenyl)-1,3,5-triazine, 2-(2-hydroxy-4-hexyloxy)phenyl-4,6-diphenyl-1,3,5-triazine,2-(2--hydroxy-4-methoxyphenyl)-4,6-diphenyl-1,3,5-triazine, 2,4,6-tris[2-hydroxy-4-(3-butoxy-2--hydroxy-propoxy)phenyl]-1,3,5-triazine or 2-(2-hydroxyphenyl)-4-(4-methoxyphenyl)-6-phenyl-1,3,5-triazine.

2-(2-Hydroxy-4-octyloxyphenyl)-4,6-bis(2,4-dimethylphenyl)-1,3,5-triazine and 2-(2-hydroxy-4-hexyloxy)phenyl-4,6-diphenyl-1,3,5-triazine are preferred.

The monobenzoate of resorcinol is for example the compound of the formula

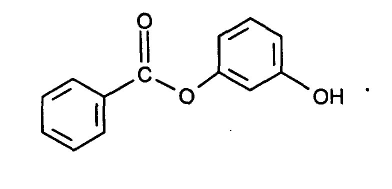

The formamidine is for example the compound of the formula

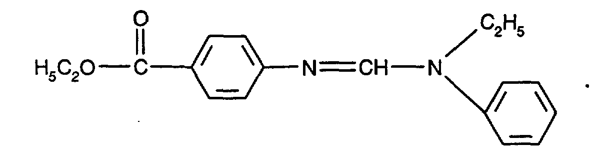

The UV absorber is in particular a 2-(2'-hydroxyphenyl)benzotriazole, a 2-hydroxybenzophenone or a hydroxyphenyltriazine.

A further preferred embodiment of this invention relates to a stabilizer mixture which additionally contains as a further component (XX) an organic salt of Ca, an inorganic salt of Ca, Ca oxide or Ca hydroxide.

Examples of an organic salt of Ca are Ca-stearate, Ca-laurate, Ca-lactate and Ca-stearoyl-lactate.

Examples of an inorganic salt of Ca are CaCO₃, CaCl₂, CaF₂, Ca₃(PO₄)₂, CaHPO₄, Ca(PO₃)₂, Ca₂P₂O₇, CaSO₄ and CaSiO₃.

The stabilizer mixture according to this invention is suitable for stabilizing organic materials against degradation induced by light, heat or oxidation. Examples of such organic materials are the following:
1. Polymers of monoolefins and diolefins, for example polypropylene, polyisobutylene, polybut-1-ene, poly-4-methylpent-1 -ene, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, Vlb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(lll) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups la, lla and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyi acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
5. Polystyrene, poly(p-methylstyrene), poly(α-methylstyrene).
6. Copolymers of styrene or α-methylstyrene with dienes or acrylic derivatives, for example styrene/butadiene, styrene/acrylonitrile, styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/ styrene.
7. Graft copolymers of styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer, polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
19. Polycarbonates and polyester carbonates.
20. Polysulfones, polyether sulfones and polyether ketones.
21. Crosslinked polymers derived from aldehydes on the one hand and phenols, ureas and melamines on the other hand, such as phenol/formaldehyde resins, urea/formaldehyde resins and melamine/formaldehyde resins.
22. Drying and non-drying alkyd resins.
23. Unsaturated polyester resins derived from copolyesters of saturated and unsaturated dicarboxylic acids with polyhydric alcohols and vinyl compounds as crosslinking agents, and also halogen-containing modifications thereof of low flammability.
24. Crosslinkable acrylic resins derived from substituted acrylates, for example epoxy acrylates, urethane acrylates or polyester acrylates.
25. Alkyd resins, polyester resins and acrylate resins crosslinked with melamine resins, urea resins, isocyanates, isocyanurates, polyisocyanates or epoxy resins.
26. Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.
27. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.
28. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.
29. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, typically those used as spinning compositions, as well as aqueous emulsions of such materials.
30. Aqueous emulsions of natural or synthetic rubber, e.g. natural latex or latices of carboxylated styrene/butadiene copolymers.

This invention therefore additionally relates to a composition comprising an organic material subject to degradation induced by light, heat or oxidation and the stabilizer mixture described herein above.

A further embodiment of the present invention is a method for stabilizing an organic material against degradation induced by light, heat or oxidation, which comprises incorporating into the organic material the stabilizer mixture described herein above.

The organic material is preferably a synthetic polymer, in particular from one of the above groups. Polyolefins are preferred and polyethylene, polypropylene, a polyethylene copolymer and a polypropylene copolymer are particularly preferred.

The components (A), (B-X), (B-XX) and (C), and optionally (X-1) and/or (X-2), as well as optionally component (XX) may be added to the organic material to be stabilized either individually or mixed with one another.

The total amount of the four different sterically hindered amine compounds (components (A), (B-X), (B-XX) and (C)) in the organic material to be stabilized is preferably 0.005 to 5 %, in particular 0.01 to 1 % or 0.05 to 1 %, relative to the weight of the organic material.

The pigment (component (X-1)) is optionally present in the organic material in an amount of preferably 0.01 to 10 %, in particular 0.05 to1 %, relative to the weight of the organic material.

The UV absorber (component (X-2)) is optionally present in the organic material in an amount of preferably 0.01 to 1 %, in particular 0.05 to 0.5 %, relative to the weight of the organic material.

The total amount of component (X-3) (the pigment in combination with the UV absorber) is preferably 0.01 to 10 %, relative to the weight of the organic material. The weight ratio of the UV absorber to the pigment is for example 2:1 to 1:10.

When the pigment used is titanium dioxide in combination with an organic pigment as described above, titanium dioxide is preferably present in the organic material in an amount of 0.01 to 5 %, relative to the weight of the organic material, and the organic pigment may be present in an amount of, for example, 0.01 to 2 %, relative to the weight of the organic material.

The Ca compound (component (XX)) is optionally present in the organic material in an amount of e.g. 0.005 to 1 %, preferably 0.05 to 0.2 %.

The weight ratio of the components (A):(B-X) or (A):(B-XX) or (A):(C) is preferably 10: to 1:100, in particular 10:1 to 1:10 or 5 : 1 to 1 : 5 . Further examples for the weight ratio are also 1:1 to 1:10, for example 1 : 2 to 1 : 5.

The weight ratio of the total amount of components (A), (B-X), (B-XX) and (C) : (X-1) is for example 1:10 to 10:1, preferably 1:5 to 5:1, in particular 1:2 to 2:1.

The weight ratio of the total amount of components (A), (B-X), (B-XX) and (C): (X-2) is for example 1:5 to 20:1 or 1:5 to 10:1, preferably 1:1 to 5:1.

The weight ratio of the total amount of components (A), (B-X), (B-XX) and (C) : (X-3) is for example 1:10 to 10:1, preferably 1:5 to 5:1, in particular 1:2 to 2:1.

The weight ratio of the total amount of components (A), (B-X), (B-XX) and (C) : (XX) is for example 1:10 to 100:1 or 1:10 to 50:1 or 1:10 to 20:1, preferably 1:2 to 5:1.

The above components can be incorporated into the organic material to be stabilized by known methods, for example before or during shaping or by applying the dissolved or dispersed compounds to the organic material, if necessary with subsequent evaporation of the solvent. The components can be added to the organic material in the form of a powder, granules or a masterbatch, which contains these components in, for example, a concentration of from 2.5 to 25% by weight.

If desired, the components (A), (B-X), (B-XX) and (C), and optionally (X-1) and/or (X-2), as well as optionally component (XX) can be melt blended with each other before incorporation in the organic material. They can be added to a polymer before or during the polymerization or before the crosslinking.

The materials stabilized according to this invention can be used in a wide variety of forms, for example as films, fibres, tapes, moulding compositions, profiles or as binders for paints, adhesives or putties.

### Examples of processing or transformation of the plastics according to the present invention are:

Injection blow molding, extrusion, blow molding, rotomolding, in mold decoration (back injection), slush molding, injection molding, co-injection molding, forming, compression molding, pressing, film extrusion (cast film; blown film), fiber spinning (woven, non-woven), drawing (uniaxial, biaxial), annealing, deep drawing, calandering, mechanical transformation, sintering, coextrusion, coating, lamination, crosslinking (radiation, peroxide, silane), vapor deposition, weld together, glue, vulkanization, thermoforming, pipe extrusion, profile extrusion, sheet extrusion; sheet casting, spin coating, strapping, foaming, recycling/rework, extrusion coating, visbreaking (peroxide, thermal), fiber melt blown, spun bonded, surface treatment (corona discharge, flame, plasma), sterilization (by gamma rays, electron beams), cast polymerization (R&M process, RAM extrusion), gel-coating, tape extrusion, GMT-process, SMC-process, plastisol, and dipping (PVC, latex).

### The plastics according to the present invention may be used for the preparation of:

I-1) Floating devices, marine applications, pontoons, buoys, plastic lumber for decks, piers, boats, kayaks, oars, and beach reinforcements.
I-2) Automotive applications, in particular bumpers, dashboards, battery, rear and front linings, moldings parts under the hood, hat shelf, trunk linings, interior linings, air bag covers, electronic moldings for fittings (lights), panes for dashboards, headlamp glass, instrument panel, exterior linings, upholstery, automotive lights, head lights, parking lights, rear lights, stop lights, interior and exterior trims; door panels; gas tank; glazing front side; rear windows; seat backing, exterior panels, wire insulation, profile extrusion for sealing, cladding, pillar covers, chassis parts, exhaust systems, fuel filter / filler, fuel pumps, fuel tank, body side mouldings, convertible tops, exterior mirrors, exterior trim, fasteners / fixings, front end module, glass, hinges, lock systems, luggage / roof racks, pressed/stamped parts, seals, side impact protection, sound deadener / insulator and sunroof.
I-3) Road traffic devices, in particular sign postings, posts for road marking, car accessories, warning triangles, medical cases, helmets, tires.
I-4) Devices for plane, railway, motor car (car, motorbike) including furnishings.
I-5) Devices for space applications, in particular rockets and satellites, e.g. reentry shields.
I-6) Devices for architecture and design, mining applications, acoustic quietized systems, street refuges, and shelters.
II-1) Appliances, cases and coverings in general and electric/electronic devices (personal computer, telephone, handy, printer, television-sets, audio and video devices), flower pots, satellite TV bowl, and panel devices.
II-2) Jacketing for other materials such as steel or textiles.
II-3) Devices for the electronic industry, in particular insulation for plugs, especially computer plugs, cases for electric and electronic parts, printed boards, and materials for electronic data storage such as chips, check cards or credit cards.
II-4) Electric appliances, in particular washing machines, tumblers, ovens (microwave oven), dish-washers, mixers, and irons.
II-5) Covers for lights (e.g. street-lights, lamp-shades).
II-6) Applications in wire and cable (semi-conductor, insulation and cable-jacketing).
II-7) Foils for condensers, refrigerators, heating devices, air conditioners, encapsulating of electronics, semi-conductors, coffee machines, and vacuum cleaners.
III-1 ) Technical articles such as cogwheel (gear), slide fittings, spacers, screws, bolts, handles, and knobs.
III-2) Rotor blades, ventilators and windmill vanes, solar devices, swimming pools, swimming pool covers, pool liners, pond liners, closets, wardrobes, dividing walls, slat walls, folding walls, roofs, shutters (e.g. roller shutters), fittings, connections between pipes, sleeves, and conveyor belts.
III-3) Sanitary articles, in particular shower cubicles, lavatory seats, covers, and sinks.
III-4) Hygienic articles, in particular diapers (babies, adult incontinence), feminine hygiene articles, shower curtains, brushes, mats, tubs, mobile toilets, tooth brushes, and bed pans.
III-5) Pipes (cross-linked or not) for water, waste water and chemicals, pipes for wire and cable protection, pipes for gas, oil and sewage, guttering, down pipes, and drainage systems.
III-6) Profiles of any geometry (window panes) and siding.
III-7) Glass substitutes, in particular extruded plates, glazing for buildings (monolithic, twin or multiwall), aircraft, schools, extruded sheets, window film for architectural glazing, train, transportation, sanitary articles, and greenhouse.
III-8) Plates (walls, cutting board), extrusion-coating (photographic paper, tetrapack and pipe coating), silos, wood substitute, plastic lumber, wood composites, walls, surfaces, furniture, decorative foil, floor coverings (interior and exterior applications), flooring, duck boards, and tiles.
III-9) Intake and outlet manifolds.
III-10) Cement-, concrete-, composite-applications and covers, siding and cladding, hand rails, banisters, kitchen work tops, roofing, roofing sheets, tiles, and tarpaulins.
IV-1) Plates (walls and cutting board), trays, artificial grass, astroturf, artificial covering for stadium rings (athletics), artificial floor for stadium rings (athletics), and tapes.
IV-2) Woven fabrics continuous and staple, fibers (carpets / hygienic articles / geotextiles / monofilaments; filters; wipes / curtains (shades) / medical applications), bulk fibers (applications such as gown / protection clothes), nets, ropes, cables, strings, cords, threads, safety seat-belts, clothes, underwear, gloves; boots; rubber boots, intimate apparel, garments, swimwear, sportswear, umbrellas (parasol, sunshade), parachutes, paraglides, sails, "balloon-silk", camping articles, tents, airbeds, sun beds, bulk bags, and bags.
IV-3) Membranes, insulation, covers and seals for roofs, tunnels, dumps, ponds, dumps, walls roofing membranes, geomembranes, swimming pools, curtains (shades) / sun-shields, awnings, canopies, wallpaper, food packing and wrapping (flexible and solid), medical packaging (flexible & solid), airbags/safety belts, arm- and head rests, carpets, centre console, dashboard, cockpits, door, overhead console module, door trim, headliners, interior lighting, interior mirrors, parcel shelf, rear luggage cover, seats, steering column, steering wheel, textiles, and trunk trim.
V) Films (packaging, dump, laminating, agriculture and horticulture, greenhouse, mulch, tunnel, silage), bale wrap, swimming pools, waste bags, wallpaper, stretch film, raffia, desalination film, batteries, and connectors.
Vl-1) Food packing and wrapping (flexible and solid), BOPP, BOPET, bottles.
Vl-2) Storage systems such as boxes (crates), luggage, chest, household boxes, pallets, shelves, tracks, screw boxes, packs, and cans.
Vl-3) Cartridges, syringes, medical applications, containers for any transportation, waste baskets and waste bins, waste bags, bins, dust bins, bin liners, wheely bins, container in general, tanks for water / used water / chemistry / gas / oil / gasoline / diesel; tank liners, boxes, crates, battery cases, troughs, medical devices such as piston, ophthalmic applications, diagnostic devices, and packing for pharmaceuticals blister.
Vll-1) Extrusion coating (photo paper, tetrapack, pipe coating), household articles of any kind (e.g. appliances, thermos bottle / clothes hanger), fastening systems such as plugs, wire and cable clamps, zippers, closures, locks, and snap-closures.
Vll-2) Support devices, articles for the leisure time such as sports and fitness devices, gymnastics mats, ski-boots, inline-skates, skis, big foot, athletic surfaces (e.g. tennis grounds); screw tops, tops and stoppers for bottles, and cans.
Vll-3) Furniture in general, foamed articles (cushions, impact absorbers), foams, sponges, dish clothes, mats, garden chairs, stadium seats, tables, couches, toys, building kits (boards / figures / balls), playhouses, slides, and play vehicles.
Vll-4) Materials for optical and magnetic data storage.
Vll-5) Kitchen ware (eating, drinking, cooking, storing).
Vll-6) Boxes for CD's, cassettes and video tapes; DVD electronic articles, office supplies of any kind (ball-point pens, stamps and ink-pads, mouse, shelves, tracks), bottles of any volume and content (drinks, detergents, cosmetics including perfumes), and adhesive tapes.
VI 1-7) Footwear (shoes / shoe-soles), insoles, spats, adhesives, structural adhesives, food boxes (fruit, vegetables, meat, fish), synthetic paper, labels for bottles, couches, artificial joints (human), printing plates (flexographic), printed circuit boards, and display technologies.
VII-8) Devices of filled polymers (talc, chalk, china clay (kaolin), wollastonite, pigments, carbon black, TiO₂, mica, nanocomposites, dolomite, silica, silicates, glass, asbestos).

The stabilized material may additionally also contain various conventional additives, for example:

### 1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example 2,6-di-nonyl-4-methylphenol, 2,4-dimethyl-6-(1'-methylundec-1 '-yl)phenol, 2,4-dimethyl-6-(1'-methylheptadec-1'-yl)phenol, 2,4-dimethyl-6-(1'-methyltridec-1'-yl)phenol and mixtures thereof.
1.2. Alkvlthiomethvlphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.
1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.
1.4. Tocopherols, for example α-tocopherol, β-tocopherol, γ-tocopherol, 8-tocopherol and mixtures thereof (vitamin E).
1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)disulfide.
1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1 -bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'hydroxy-5'methylbenzyl)-6-tert-butyl-4-methylphenyl]terephthadiene, bis[2-(3'-tert-butyl-2'-hydroxy-5'-methylbenzyl)-6-tert-butyl-4-methylphenyl]terephthalate, 1,1 -bis-(3,5-dimethyl-2-hydroxyphenyl)butane, 2,2-bis(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra(5-tert-butyl-4-hydroxy-2-methylphenyl)pentane.
1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, didodecylmercaptoethyl-2,2-bis(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)iso-cyanurate.
1.11. Benzvlphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
1.12. Acylaminophenols, for example 4-hydroxylauranilide, 4-hydroxystearanilide, octyl N-(3,5-di-tert-butyl-4-hydroxyphenyl)carbamate.
1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl}propionyloxy}-1,1-dimethylethyl]-2,4,8,10-tetraoxaspiro[5.5]undecane.
1.15. Esters of β-(3,5-dicyclohexyl-4-hydroxyhenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard®XL-1, supplied by Uniroyal).
1.18. Ascorbic acid (vitamin C)
1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1 -methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octylphenothiazines, N-allylphenothiazine, N,N,N',N'-tetraphenyl-1,4-diaminobut-2-ene, N,N-bis(2,2,6,6-tetramethylpiperid-4-yl-hexamethylenediamine, bis(2,2,6,6-tetramethylpiperid-4-yl)sebacate, 2,2,6,6-tetramethylpiperidin-4-one, 2,2,6,6-tetramethylpiperidin-4-ol.
2. UV absorbers and light stabilisers
2.1. 2-(2'-Hydroxyphenyl)benzotriazoles, for example 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(31-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 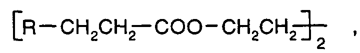 where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)phenyl]benzotriazole; 2-[2'-hydroxy-3'-(1,1,3,3-tetramethylbutyl)-5'-(α,α-dimethylbenzyl)phenyl]benzotriazole.
2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
2.3. Esters of substituted and unsubstituted benzoic acids, for example 4-tert-butylphenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
2.4. Acrvlates, for example ethyl a-cyano-p,p-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate and N-(β-carbomethoxy-β-cyanovinyl)-2-methylindoline.
2.5. Nickel compounds, for example nickel complexes of 2,2'-thiobis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazole, with or without additional ligands.
2.6. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
2.7, 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1 -oxy)-2-hydroxypropyloxy]phenyl}-4,6-bis(2,4-dimethylphenyl)-1,3,5-triazine.
3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-dicumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.
   The following phosphites are especially preferred:
   Tris(2,4-di-tert-butylphenyl) phosphite (Irgafos®168, Ciba-Geigy), tris(nonylphenyl) phosphite, 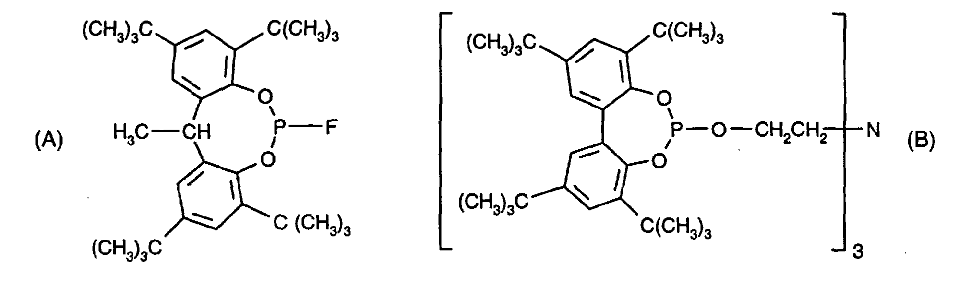 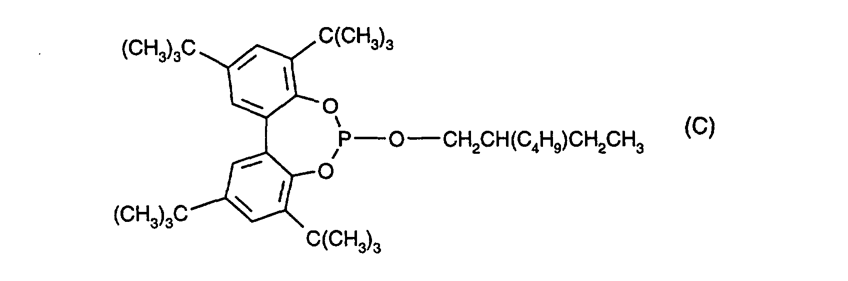 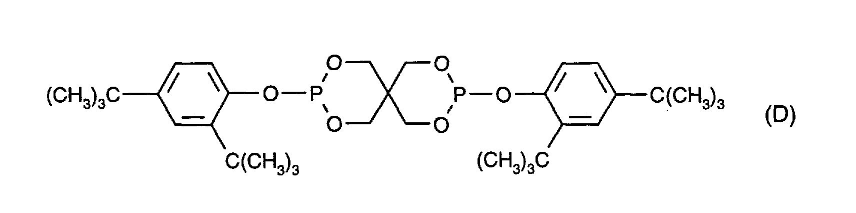 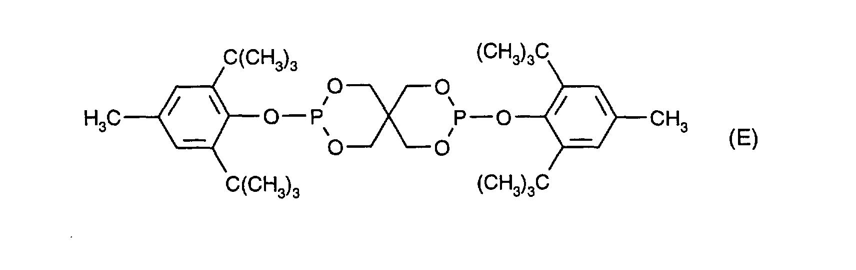 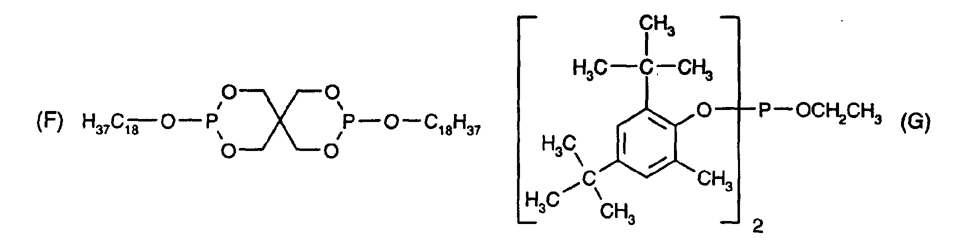
5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
6. Nitrones, for example N-benzyl-alpha-phenylnitrone, N-ethyl-alpha-methylnitrone, N-octyl-alpha-heptylnitrone, N-lauryl-alpha-undecylnitrone, N-tetradecyl-alpha-tridecylnitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecyinitrone, nitrone derived from N,N-dialkylhydroxylamine derived from hydrogenated tallow amine.
7. Thiosynergists, for example dilauryl thiodipropionate or distearyl thiodipropionate.
8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
9. Polyamide stabilisers, for example copper salts in combination with iodides and/or phosphorus compounds and salts of divalent manganese.
10. Basic co-stabilisers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.
11. Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(paramethyldibenzylidene)sorbitol, and 1,3:2,4-di(benzylidene)sorbitol.
12. Fillers and reinforcing agents, for example calcium carbonate, silica, silicates, glass fibres, glass bulbs, asbestos, talc, kaolin, mica, barium sulfate, metal oxides and hydroxides, carbon black, graphite, wood flour and flours or fibers of other natural products, synthetic fibers.
13. Other additives, for example plasticisers, lubricants, emulsifiers, pigments, rheology additives, catalysts, flow-control agents, optical brighteners, flameproofing agents, antistatic agents and blowing agents.
14. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839 or EP-A-0591102 or 3-[4-(2-acetoxyethoxy)-phenyl]-5,7-di-tert-butylbenzofuran-2-one, 5,7-di-tert-butyl-3-[4-(2-stearoyloxyethoxy)phenyl]-benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one,3-(4-acetoxy-3,5-dimethylphenyl)-5,7-di-tart-butylbenzofuran-2-one,3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one.

The weight ratio of the total amount of components (A), (B-X), (B-XX) and (C) to the total amount of the conventional additives can be, for example, 100:1 to 1:100 or 10:1 to 1:10.

The examples below illustrate the invention in greater detail. All percentages and parts are by weight, unless stated otherwise.

### Light stabilizers used in the following Example:

### LICOVIN 845 (RTM):

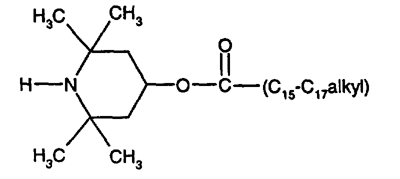

### CYASORB UV-3641 (RTM):

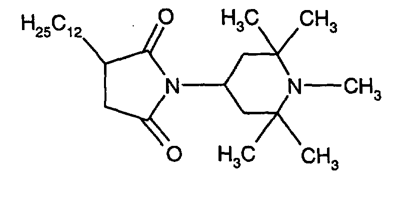

### TINUVIN 770 (RTM):

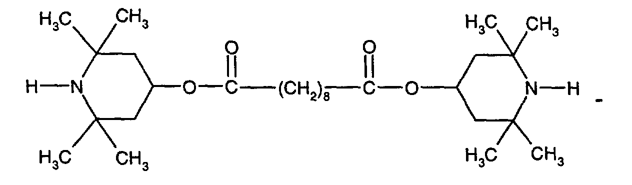

### TINUVIN 765 (RTM):

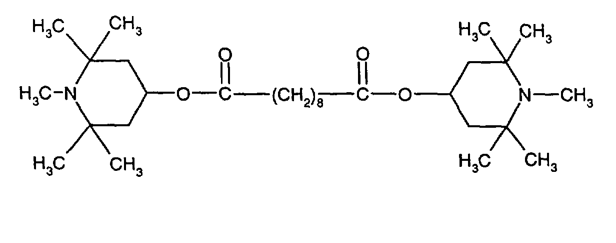

### CHIMASSORB 944 (RTM):

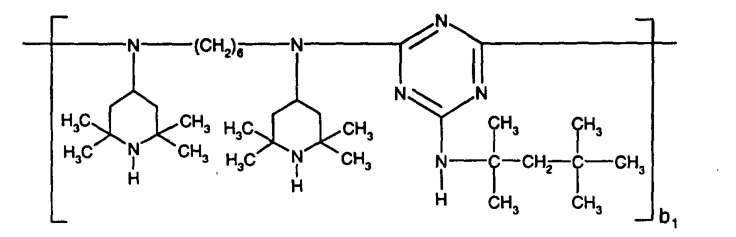

### CHIMASSORB 2020 (RTM):

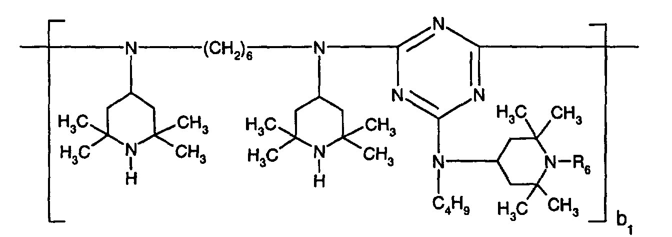

### CYASORB UV 3346 (RTM):

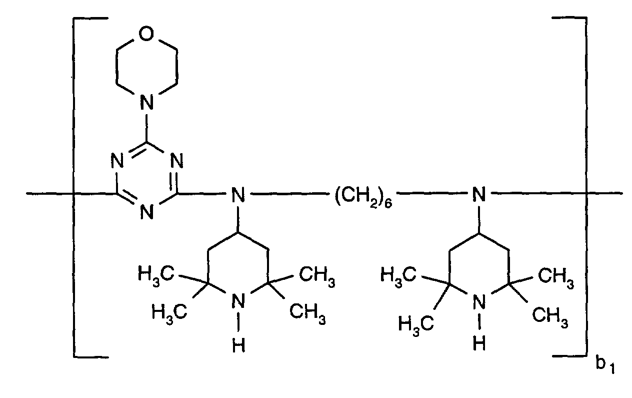

### CYASORB UV 3529 (RTM):

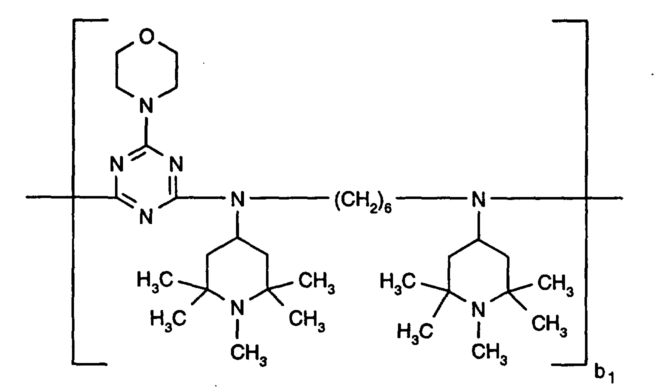

### DASTIB 1082 (RTM):

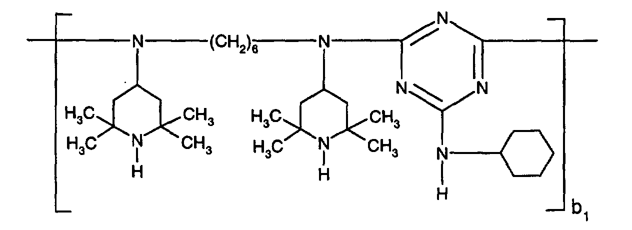

### CHIMASSORB 119 (RTM):

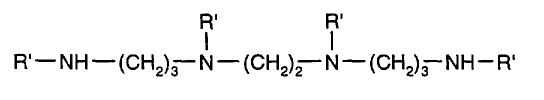

where R' is

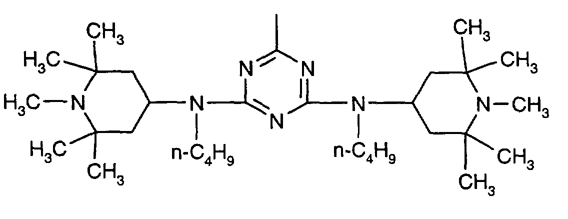

### UVASIL 299 (RTM):

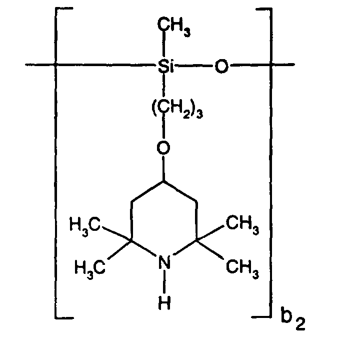

### UVINUL 5050 H (RTM):

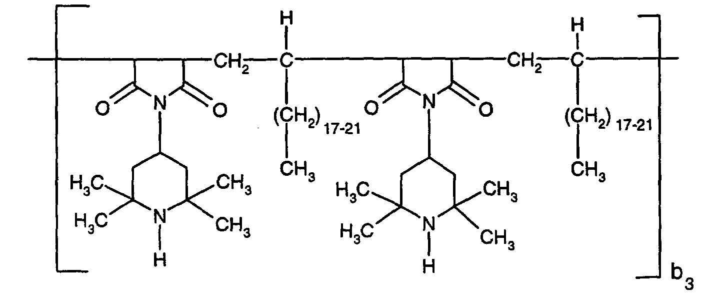

### ADK STAB LA 68 (RTM):

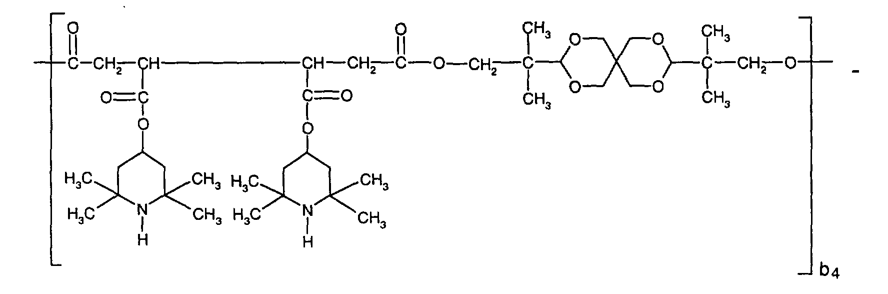

### ADK STAB LA 63 (RTM):

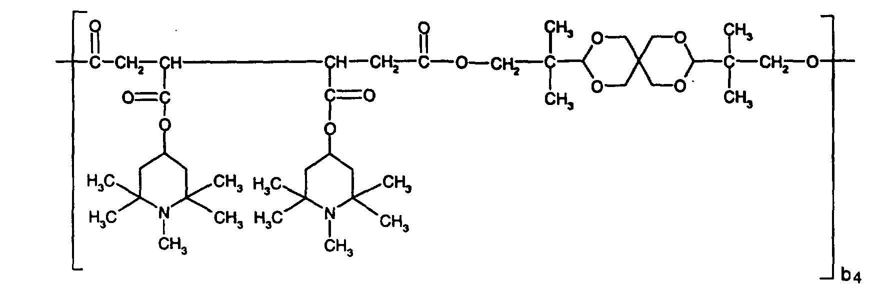

### UVASORB HA 88 (RTM)

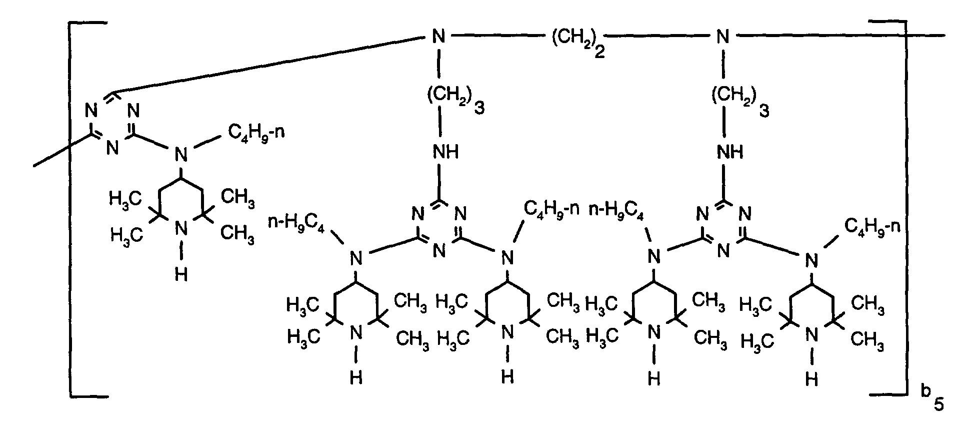

### TINUVIN 622 (RTM)

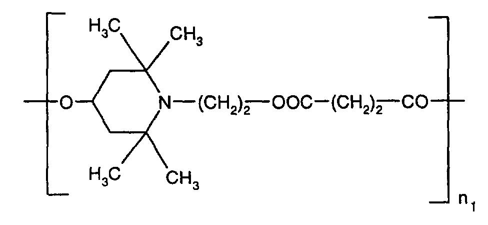

### EXAMPLE 1:

Light stabilization of polypropylene homopolymer films.
100 parts of unstabilized polypropylene powder (melt flow index: ∼ 3.2 g/10 min at 230°C and 2160 g) are homogenized at 200°C for 10 min in a Brabender plastograph with 0.05 parts of pentaerythrityl-tetrakis[3-(3,5-di-tert-butyl-4-hydroxyphenyl)propionate], 0.05 parts of tris[2,4-di-tert-butylphenyl]phosphite, 0.1 parts of Ca stearate, 0.25 parts of an inorganic or organic pigment and the amount of the light stabilizer system indicated in Tables 1 and 2. The material thus obtained is compression molded in a laboratory press between two aluminum foils for 6 min at 260°C to a 0.5 mm thick film which is cooled immediately to room temperature in a water-cooled press. Samples of 60 mm x 25 mm are cut out of these 0.5 mm films and are exposed in a WEATHER-OMETER Ci 65 (black panel temperature 63±2°C, without water-spraying).

Periodically, these samples are removed from the exposure apparatus and their carbonyl content is measured with an infrared spectrophotometer. The exposure time corresponding to formation of a carbonyl absorbance of 0.1 is a measure for the stabilizing efficiency of the light stabilizer system. The values obtained are summarized in Tables 1 and 2.

**Table 1:**

| Light stability in the presence of 0.25 % of titanium dioxide (Anatase) | |
|---|---|
| Light stabilization | To.1: (h) to 0.1 carbonyl absorbance |
| Control | 405 |
| 0.05% of TINUVIN 770 (RTM)+ | |
| 0.05% of DASTIB 845 (RTM) + | 6075 |
| 0.05% of CHIMASSORB 944 (RTM) + | |
| 0.05% of TINUVIN 622 (RTM) | |
| 0.05% of TINUVIN 770 (RTM) + | |
| 0.05% of DASTIB 845 (RTM) + | 6590 |
| 0.05% of CHIMASSORB 119 (RTM) + | |
| 0.05% of TINUVIN 622 (RTM) | |
| 0.05% of TINUVIN 770 (RTM) + | |
| 0.05% of DASTIB 845 (RTM) + | 6955 |
| 0.05% of CYASORB UV 3346 (RTM) + | |
| 0.05% of TINUVIN 622 (RTM) | |
| 0.05% of TINUVIN 770 + | |
| 0.05% of DASTIB 845 + | 6460 |
| 0.05% of UVASORB HA 88 (RTM) | |
| 0.05% of TINUVIN 622 (RTM) | |
| 0.05% of TINUVIN 770 (RTM) + | |
| 0.05% of DASTIB 845 (RTM) + | 6005 |
| 0.05% of CHIMASSORB 2020 (RTM) + | |
| 0.05% of TINUVIN 622 (RTM) | |
| 0.05% of TINUVIN 770 (RTM) + | |
| 0.05% of DASTIB 845 (RTM) + | 5870 |
| 0.05% of DASTIB 1082 (RTM) + | |
| 0.05% of TINUVIN 622 (RTM) | |
| 0.05% of TINUVIN 770 (RTM) + | |
| 0.05% of DASTIB 845 (RTM) + | 9140 |
| 0.05% of UVASIL 299 (RTM)+ | |
| 0.05% of TINUVIN 622 (RTM) | |
| 0.05% of TINUVIN 770 (RTM) + | |
| 0.05% of DASTIB 845 (RTM) + | 4915 |
| 0.05% of UVINUL 5050 H (RTM) + | |
| 0.05% of TINUVIN 622 (RTM) | |
| 0.05% of TINUVIN 770 (RTM) + | |
| 0.05% of DASTIB 845 (RTM) + | 5570 |
| 0.05% of ADK STAB LA 63 (RTM) + | |
| 0.05% of TINUVIN 622 (RTM) | |
| 0.05% of TINUVIN 770 (RTM) + | |
| 0.05% of DASTIB 845 (RTM) + | 5655 |
| 0.05% of ADK STAB LA 68 (RTM) + | |
| 0.05% of TINUVIN 622 (RTM) | |
| 0.05% of TINUVIN 765 (RTM) + | |
| 0.05% of CYASORB UV-3641 (RTM) + | 6225 |
| 0.05% of CHIMASSORB 119 (RTM) + | |
| 0.05% of TINUVIN 622 (RTM) | |
| 0.05% of TINUVIN 765 (RTM) + | |
| 0.05% of CYASORB UV-3641 (RTM) + | 6585 |
| 0.05% of CYASORB UV 3529 (RTM) + | |
| 0.05% of TINUVIN 622 (RTM) | |
| 0.05% of TINUVIN 765 (RTM) + | |
| 0.05% of CYASORB UV-3641 (RTM) + | 5590 |
| 0.05% of ADK STAB LA 63 (RTM) + | |
| 0.05% of TINUVIN 622 (RTM) | |

**Table 2:**

| Light stability in the presence of 0.25% phthalocyanine blue | |
|---|---|
| Light stabilization | T_{o.1}: (h) to 0.1 carbonyl absorbance |
| Control | 385 |
| 0.05% of TINUVIN 770 (RTM) + | |
| 0.05% of DASTIB 845 (RTM) + | 8160 |
| 0.05% of CHIMASSORB 944 (RTM) + | |
| 0.05% of TINUVIN 622 (RTM) | |
| 0.05% of TINUVIN 770 (RTM) + | |
| 0.05% of DASTIB 845 (RTM) + | 8490 |
| 0.05% of CHIMASSORB 119 (RTM) + | |
| 0.05% of TINUVIN 622 (RTM) | |

## Claims

1. A stabilizer mixture containing the components (A), (B-X), (B-XX) and (C) wherein **component (A)** is a compound of the formula (A-1), (A-2-a), (A-2-b), (A-3) or (A-4); **component (B-X)** is a compound of the formula (B-1) wherein m₁ is 2 or 4, (B-2), (B-4), (B-5), (B-7), (B-8), (B-9) wherein m₂ is 2 or 3, or (B-10);
**component (B-XX)** is a compound of the formula (B-1) wherein m₁ is 1, (B-3), (B-6), or (B-9) wherein m₂ is 1; and
**component (C)** is a compound of the formula (C-1), (C-2), (C-3), (C-4) or (C-5), or a product (C-6); 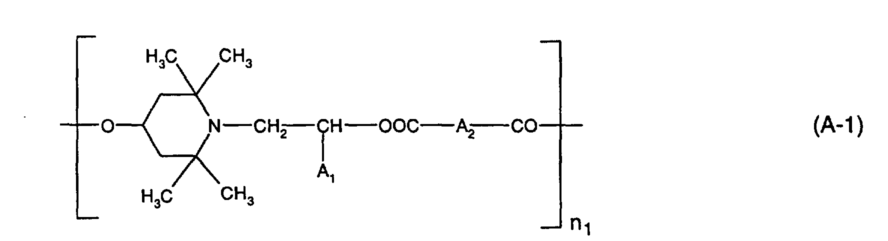 wherein
A₁ is hydrogen or C₁-C₄alkyl,
A₂ is a direct bond or C₁-C₁₀alkylene, and
n₁ is a number from 2 to 50; 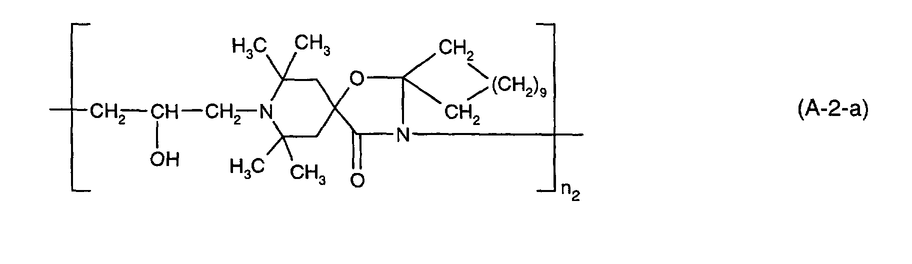 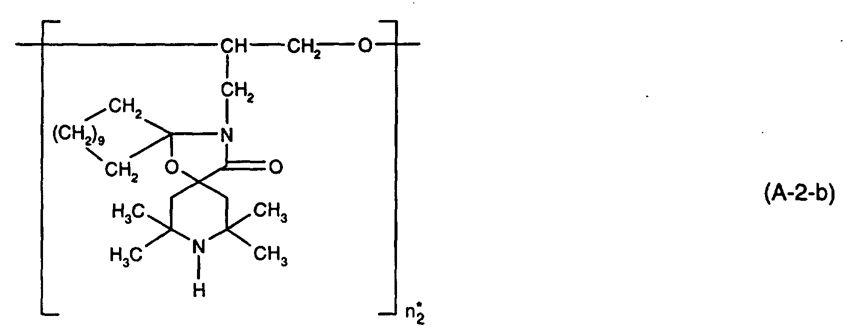 wherein
n₂ and n₂* are a number from 2 to 50; 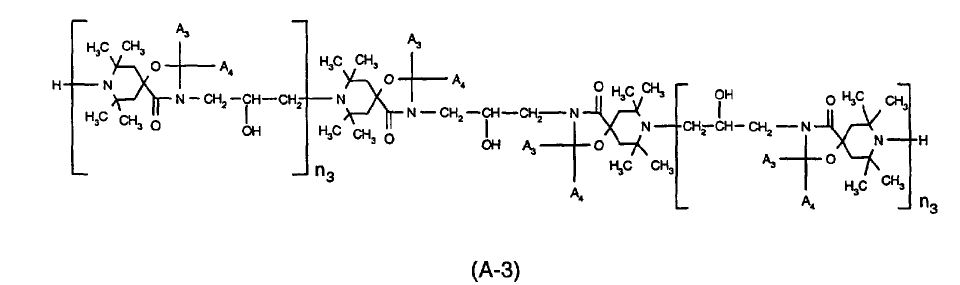 wherein
A₃ and A₄ independently of one another are hydrogen or C₁-C₈alkyl, or A₃ and A₄ together form a C₂-C₁₄alkylene group, and
the variables n₃ independently of one another are a number from 1 to 50; 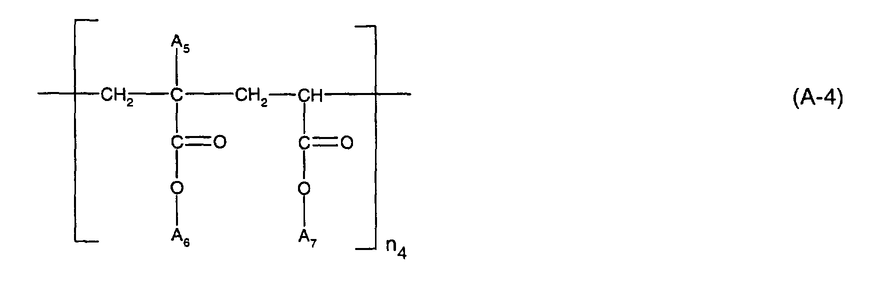 wherein
n₄ is a number from 2 to 50,
A₅ is hydrogen or C₁-C₄alkyl,
the radicals A₆ and A₇ independently of one another are C₁-C₄alkyl or a group of the formula (a-I) 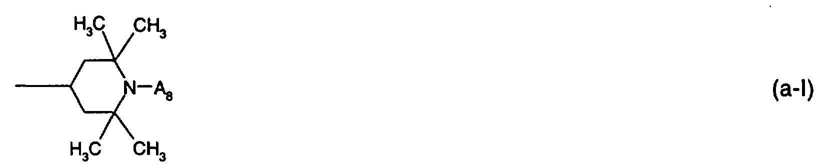 wherein A₈ is hydrogen, C₁-C₈alkyl, O, -OH, -CH₂CN, C₁-C₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
with the proviso that at least 50 % of the radicals A₇ are a group of the formula (a-I); 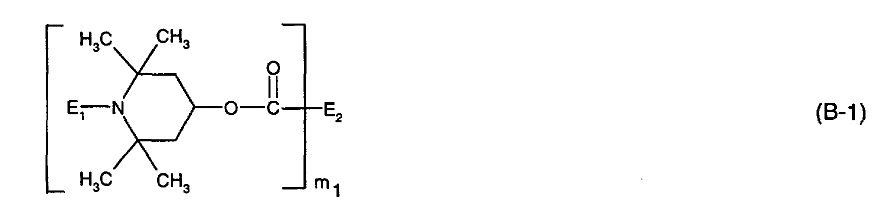 in which
E₁ is hydrogen, C₁-C₈alkyl, O, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
m₁ is 1, 2 or 4,
if m₁ is 1, E₂ is C₁-C₂₅alkyl,
if m₁ is 2, E₂ is C₁-C₁₄alkylene or a group of the formula (b-l) 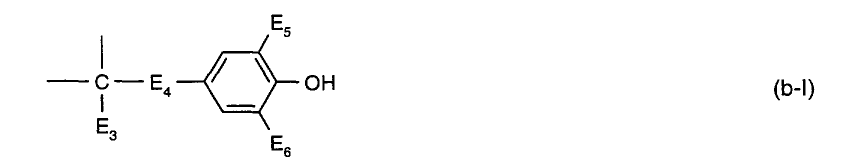 wherein E₃ is C₁-C₁₀alkyl or C₂-C₁₀alkenyl, E₄ is C₁-C₁₀alkylene, and
E₅ and E₆ independently of one another are C₁-C₄alkyl, cyclohexyl or methylcyclohexyl, and
if m₁ is 4, E₂ is C₄-C₁₀alkanetetrayl; 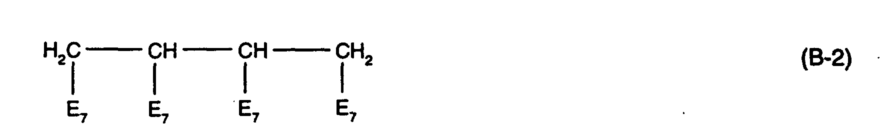 in which
two of the radicals E₇ are -COO-(C₁-C₂₀alkyl), and
two of the radicals E₇ are a group of the formula (b-ll) 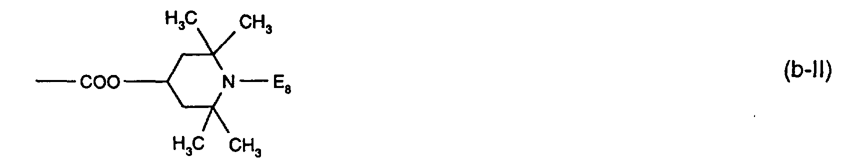 with E₈ having one of the meanings of E₁; 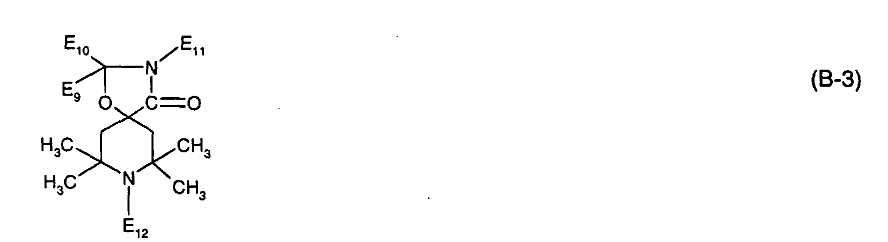 in which
E₉ and E₁₀ together form C₂-C,₄alkylene,
E₁₁ is hydrogen or a group -Z₁-COO-Z₂,
Z₁ is C₂-C₁₄alkylene, and
Z₂ is C₁-C₂₄alkyl, and
E₁₂ has one of the meanings of E₁; 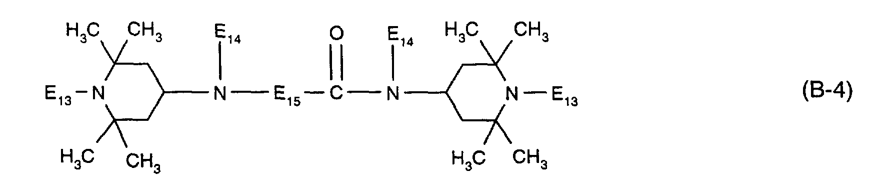 wherein
the radicals E₁₃ independently of one another have one of the meanings of E₁,
the radicals E₁₄ independently of one another are hydrogen or C₁-C₁₂alkyl, and
E₁₅ is C₁-C₁₀alkylene or C₃-C₁₀alkylidene; 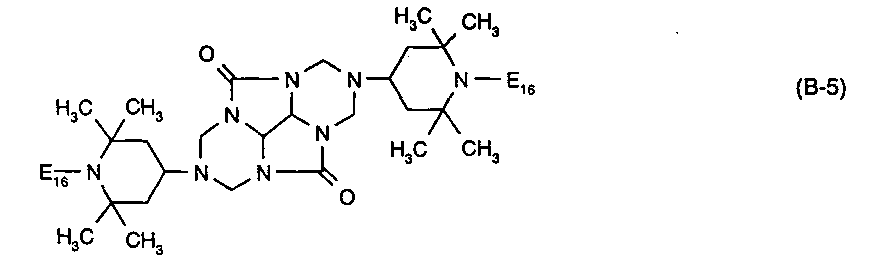 wherein
the radicals E₁₆ independently of one another have one of the meanings of E₁; 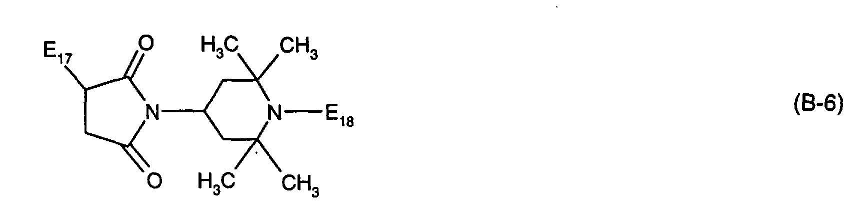 in which
E₁₇ is C₁-C₂₄alkyl, and
E₁₈ has one of the meanings of E₁; 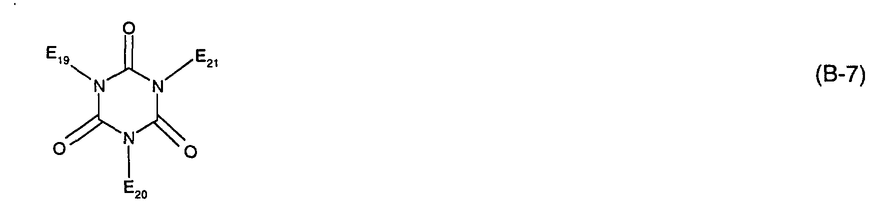 in which
E₁₉, E₂₀ and E₂₁ independently of one another are a group of the formula (b-lll) 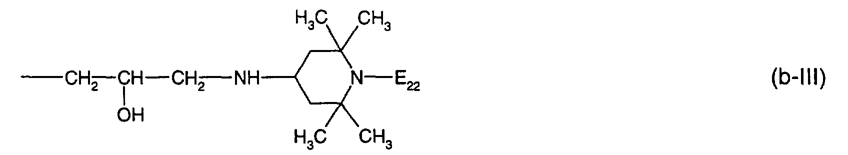 wherein E₂₂ has one of the meanings of E₁; 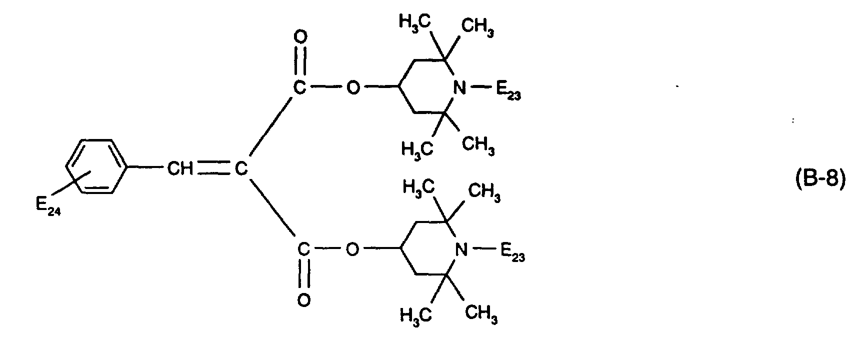 wherein
the radicals E₂₃ independently of one another have one of the meanings of E₁, and E₂₄ is hydrogen, C₁-C₁₂alkyl or C₁-C₁₂alkoxy; 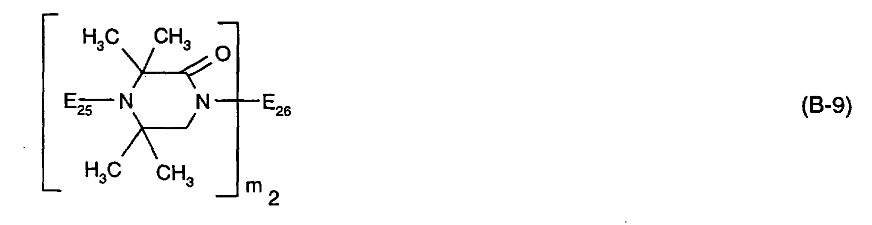 wherein
m2 is 1, 2 or 3,
E₂₅ has one of the meanings of E₁, and
when m₂ is 1, E₂₆ is a group 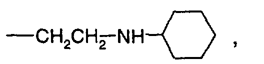 when m₂ is 2, E₂₆ is C₂-C₂₂alkylene, and
when m₂ is 3, E₂₆ is a group of the formula (b-lV) 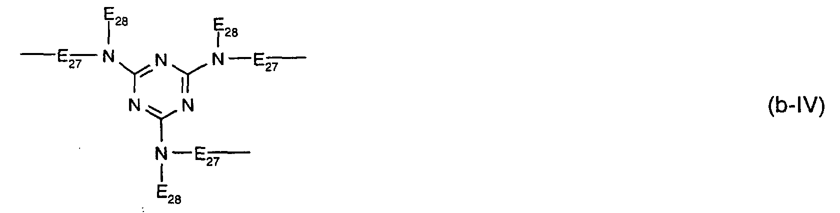 wherein the radicals E₂₇ independently of one another are C₂-C₁₂alkylene, and
the radicals E₂₈ independently of one another are C₁-C₁₂alkyl or C₅-C₁₂cycloalkyl; 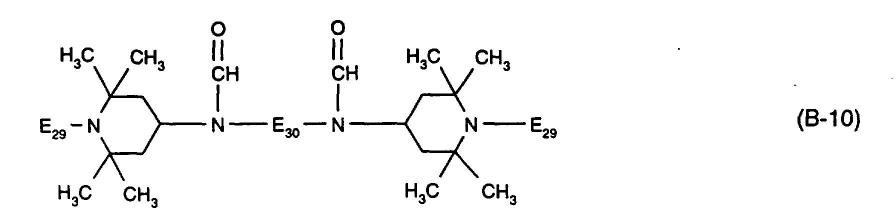 wherein
the radicals E₂₉ independently of one another have one of the meanings of E₁, and E₃₀ is C₂-C₂₂alkylene, C₅-C₇cycloalkylene, C₁-C₄alkylenedi(C₅-C₇cycloalkylene), phenylene or phenylenedi(C₁-C₄alkylene); 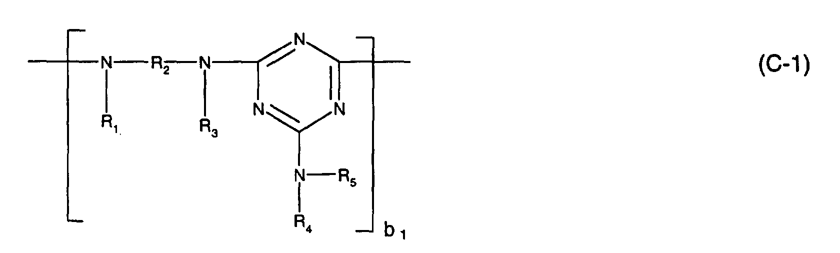 in which
R₁, R₃, R₄ and R₅ independently of one another are hydrogen, C₁-C₁₂alkyl, C₅-C₁₂cycloalkyl,
C₁-C₄-alkyl-substituted C₅-C₁₂cycloalkyl, phenyl, phenyl which is substituted by -OH and/or
C₁-C₁₀alkyl; C₇-C₉phenylalkyl, C₇-C₉phenylalkyl which is substituted on the phenyl radical by
-OH and/or C₁-C₁₀alkyl; or a group of the formula (c-l) 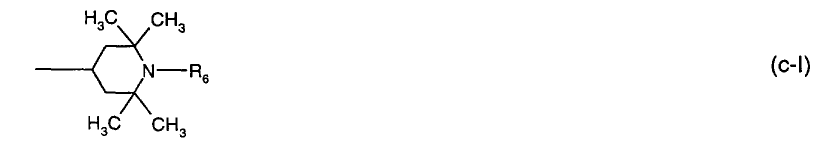 R₂ is C₂-C₁₈alkylene, C₅-C₇cycloalkylene or C₁-C₄alkylenedi(C₅-C₇cycloalkylene), or
the radicals R₁, R₂ and R₃, together with the nitrogen atoms to which they are bonded, perform a 5- to 10-membered heterocyclic ring, or
R₄ and R₅, together with the nitrogen atom to which they are bonded, form a 5- to 10-membered heterocyclic ring,
R₆ is hydrogen, C₁-C₈alkyl, O, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or
C₁-C₈acyl, and
b₁ is a number from 2 to 50,
with the proviso that at least one of the radicals R₁, R₃, R₄ and R₅ is a group of the formula (c-l); 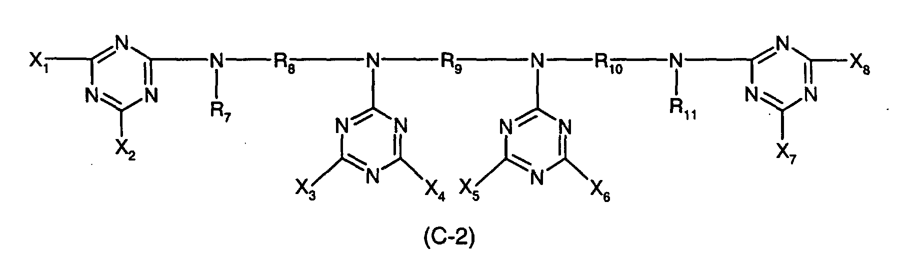 wherein
R₇ and R₁₁ independently of one another are hydrogen or C₁-C₁₂alkyl,
R₈, R₉ and R₁₀ independently of one another are C₂-C₁₀alkylene, and
X₁, X₂, X₃, X₄, X₅, X₆, X₇ and X₈ independently of one another are a group of the formula (c-II), 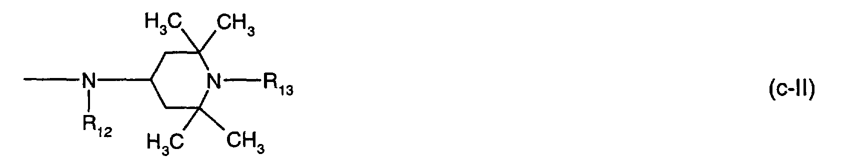 in which R₁₂ is hydrogen, C₁-C₁₂alkyl, C₅-C₁₂cycloalkyl, C₁-C₄alkyl-substituted C₅-C₁₂cycloalkyl, phenyl, -OH- and/or C₁-C₁₀alkyl-substituted phenyl, C₇-C₉phenylalkyl, C₇-C₉phenylalkyl which is substituted on the phenyl radical by -OH and/or C₁-C₁₀alkyl; or a group of the formula (c-l) as defined above, and
R₁₃ has one of the meanings of R₆; 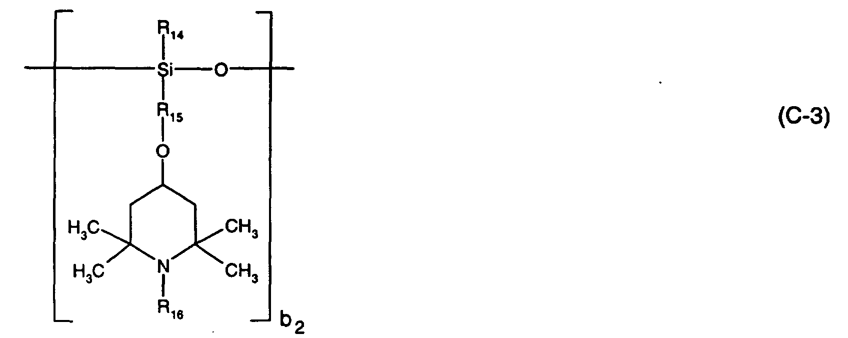 in which
R₁₄ is C₁-C₁₀alkyl, C₅-C₁₂cycloalkyl, C₁-C₄alkyl-substituted C₅-C₁₂cycloalkyl, phenyl or C₁ -C₁₀alkyl-substituted phenyl,
R₁₅ is C₃-C₁₀alkylene,
R₁₆ has one of the meanings of R₆, and b₂ is a number from 2 to 50; 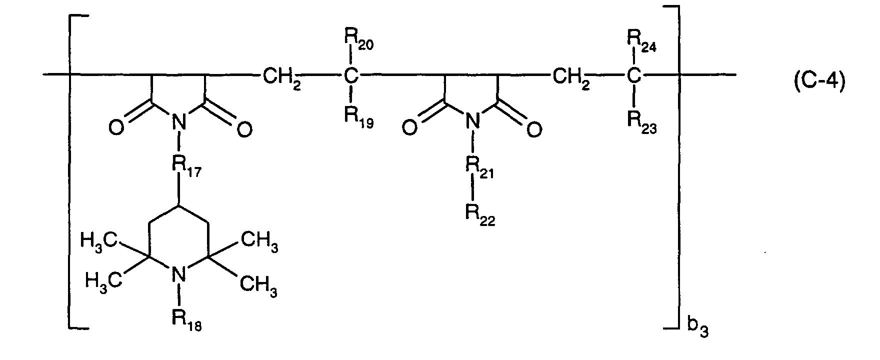 in which
R₁₇ and R₂₁ independently of one another are a direct bond or a -N(X₉)-CO-X₁₀-CO-N(Xn)-group, where X₉ and X₁₁ independently of one another are hydrogen, C₁-C₈alkyl, C₅-C₁₂cycloalkyl, phenyl, C₇-C₉phenylalkyl or a group of the formula (c-l),
X₁₀ is a direct bond or C₁-C₄alkylene,
R₁₈ has one of the meanings of R₆,
R₁₉, R₂₀, R₂₃ and R₂₄ independently of one another are hydrogen, C₁-C₃₀alkyl, C₅-C₁₂cycloalkyl or phenyl,
R₂₂ is hydrogen, C₁-C₃₀alkyl, C₅-C₁₂cycloalkyl, phenyl, C₇-C₉phenylalkyl or a group of the formula (c-l), and
b₃ is a number from 1 to 50; 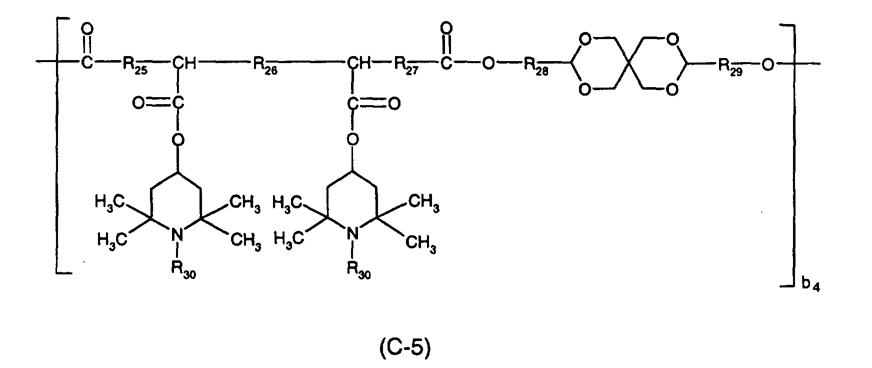 in which
R₂₅, R_{26,} R₂₇, R₂₈ and R₂₉ independently of one another are a direct bond or C₁-C₁₀alkylene,
R₃₀ has one of the meanings of R₆, and
b₄ is a number from 1 to 50;
a product (C-6) obtainable by reacting a product, obtained by reaction of a polyamine of the formula (C-6-1) with cyanuric chloride, with a compound of the formula (C-6-2) 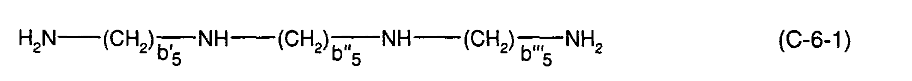 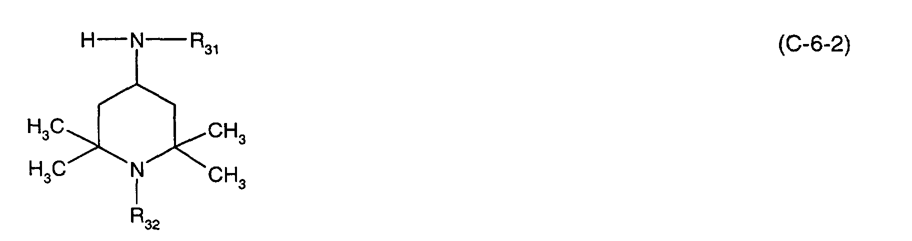 in which
b'₅, b"₅ and b"'5 independently of one another are a number from 2 to 12,
R₃₁ is hydrogen, C₁-C₁₂alkyl, C₅-C₁₂cycloalkyl, phenyl or C₇-C₉phenylalkyl, and
R₃₂ has one of the meanings of R₆.

2. A stabilizer mixture according to claim 1 wherein
A₁ is hydrogen or methyl,
A₂ is a direct bond or C₂-C₆alkylene, and
n₁ is a number from 2 to 25;
n₂ and n₂* are a number from 2 to 25;
A₃ and A₄ independently of one another are hydrogen or C₁-C₄alkyl, or A₃ and A₄ together form a C₉-C₁₃alkylene group, and
the variables n₃ independently of one another are a number from 1 to 25;
n₄ is a number from 2 to 25,
A₅ and A₆ independently of one another are C₁-C₄alkyl, and
A₇ is C₁-C₄alkyl or a group of the formula (a-I)
with the proviso that at least 50 % of the radicals A₇ are a group of the formula (a-l).

3. A stabilizer mixture according to claim 1 wherein
m₁ is 1, 2 or 4,
if m₁ is 1, E₂ is C₁₂-C₂₀alkyl,
if m₁ is 2, E₂ is C₂-C₁₀alkylene or a group of the formula (b-l)
E₃ is C₁-C₄alkyl,
E₄ is C₁-C₆alkylene, and
E₅ and E₆ independently of one another are C₁-C₄alkyl, and
if m₁ is 4, E₂ is C₄-C₈alkanetetrayl;
two of the radicals E₇ are -COO-(C₁₀-C₁₅alkyl), and
two of the radicals E₇ are a group of the formula (b-ll);
E₉ and E₁₀ together form C₉-C₁₃alkylene,
E₁₁ is hydrogen or a group -Z₁-COO-Z₂,
Z₁ is C₂-C₈alkylene, and
Z₂ is C₁₀-C₁₆alkyl;
E₁₄ is hydrogen, and
E₁₅ is C₂-C₆alkylene or C₃-C₅alkylidene;
E₁₇ is C₁₀-C₁₄alkyl;
E₂₄ is C₁-C₄alkoxy;
m₂ is 1, 2 or 3,
when m₂ is 1, E₂₆ is a group 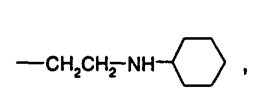 when m₂ is 2, E₂₆ is C₂-C₆alkylene, and
when m₂ is 3, E₂₆ is a group of the formula (b-IV)
the radicals E₂₇ independently of one another are C₂-C₆alkylene, and the radicals E₂₈ independently of one another are C₁-C₄alkyl or C₅-C₈cycloalkyl; and
E₃₀ is C₂-C₈alkylene.

4. A stabilizer mixture according to claim 1 wherein
R₁ and R₃ independently of one another are a group of the formula (c-l),
R₂ is C₂-C₈alkylene,
R₄ and R₅ independently of one another are hydrogen, C₁-C₁₂alkyl, C₅-C₈cycloalkyl or a group of the formula (c-l), or the radicals R₄ and R₅, together with the nitrogen atom to which they are bonded, form a 5- to 10-membered heterocyclic ring, and
b₁ is a number from 2 to 25;
R₇ and R₁₁ independently of one another are hydrogen or C₁-C₄alkyl,
R₈, R₉ and R₁₀ independently of one another are C₂-C₄alkylene, and
X₁, X₂, X₃, X₄, X₅, X₆, X₇ and X₈ independently of one another are a group of the formula (c-ll),
R₁₂ is hydrogen, C₁-C₄alkyl, C₅-C₈cycloalkyl or a group of the formula (c-l);
R₁₄ is C₁-C₄alkyl,
R₁₅ is C₃-C₆alkylene, and
b₂ is a number from 2 to 25;
R₁₇ and R₂₁ independently of one another are a direct bond or a group - N(X9)-CO-X₁₀-CO-N(X₁₁)-,
X₉ and X₁₁ independently of one another are hydrogen or C₁-C₄alkyl,
X₁₀ is a direct bond,
R₁₉ and R₂₃ are C₁-C₂₅alkyl or phenyl,
R₂₀ and R₂₄ are hydrogen or C₁-C₄alkyl,
R₂₂ is C₁-C₂₅alkyl or a group of the formula (c-l), and
b₃ is a number from 1 to 25;
R₂₅, R₂₆, R₂₇, R₂₈ and R₂₉ independently of one another are a direct bond or C₁-C₄alkylene, and
b₄ is a number from 1 to 25;
b'₅, b"₅ and b"'₅ independently of one another are a number from 2 to 4, and
R₃₁ is hydrogen, C₁-C₄alkyl, C₅-C₈cycloalkyl, phenyl or benzyl.

5. A stabilizer mixture according to claim 1 wherein
**component (A)** is a compound of the formula (A-1-a), (A-2-a), (A-2-b), (A-3-a) or (A-4-a);
**component (B-X)** is a compound of the formula (B-1-b), (B-1-c), (B-1-d), (B-2-a), (B-4-a), (B-4-b), (B-5), (B-7), (B-8-a), (B-9-b), (B-9-c) or (B-10-a);
**component (B-XX)** is a compound of the formula (B-1-a), (B-3-a), (B-3-b), (B-6-a) or (B-9-a);
**component (C)** is a compound of the formula (C-1-a), (C-1-b), (C-1-c), (C-1-d), (C-2-a), (C-3-a), (C-4-a), (C-4-b), (C-4-c) or (C-5-a), or a product (C-6-a); 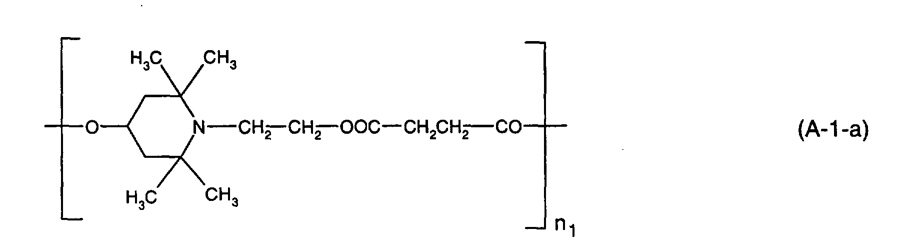 wherein n₁ is a number from 2 to 20; 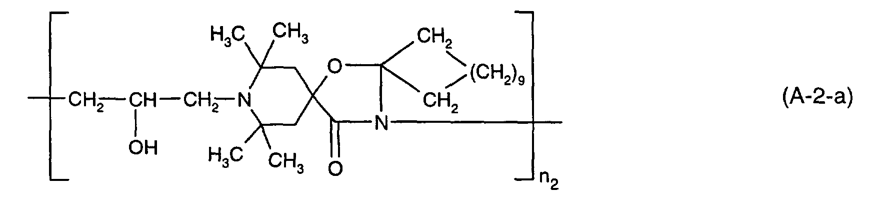 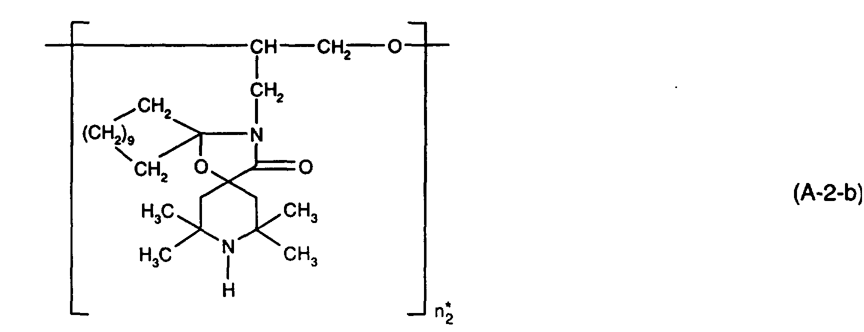 wherein n₂ and n₂* are a number from 2 to 20; 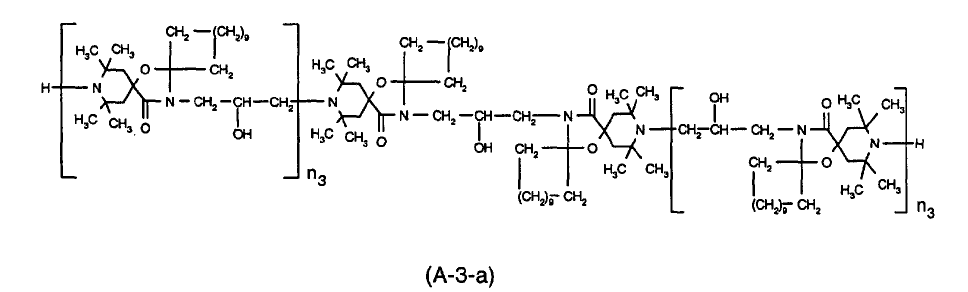 wherein the variables n₃ independently of one another are a number from 1 to 20; 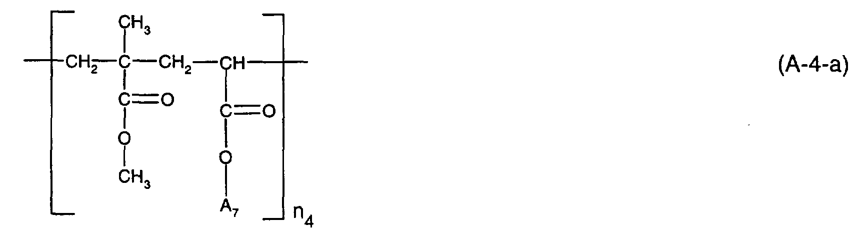 wherein n₄ is a number from 2 to 20, and
at least 50 % of the radicals A₇ are a group of the formula (a-I) 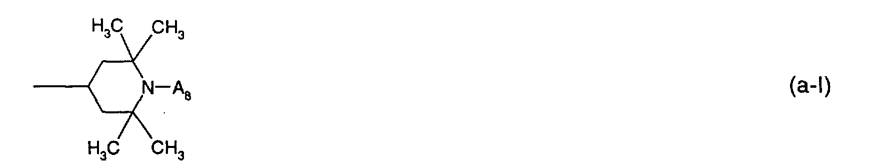 wherein A₈ is hydrogen, C₁-C₈alkyl, O', -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
and the remaining radicals A₇ are ethyl; 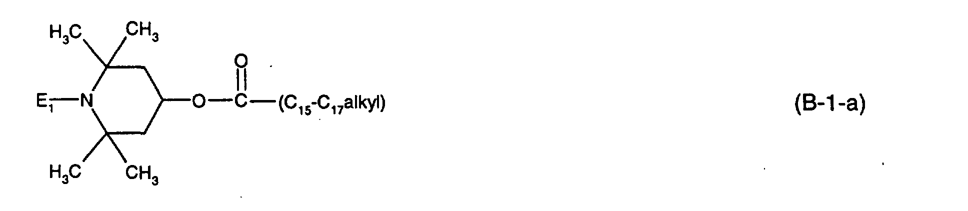 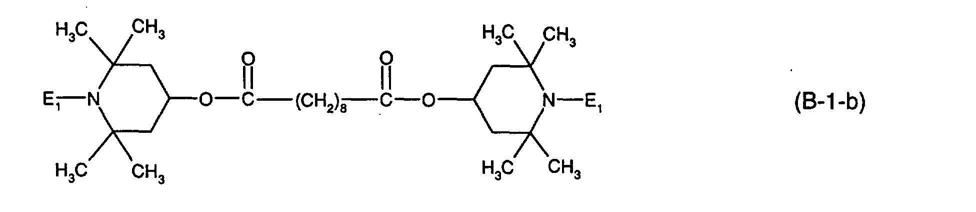 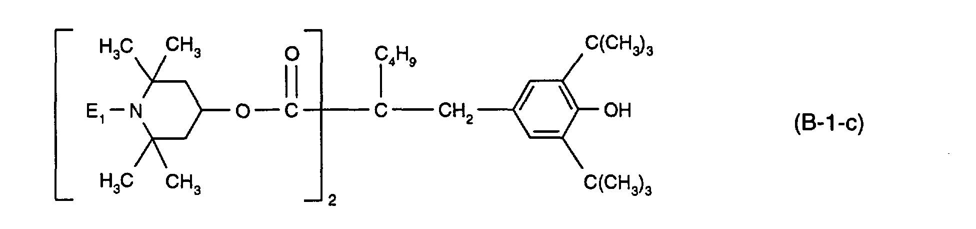 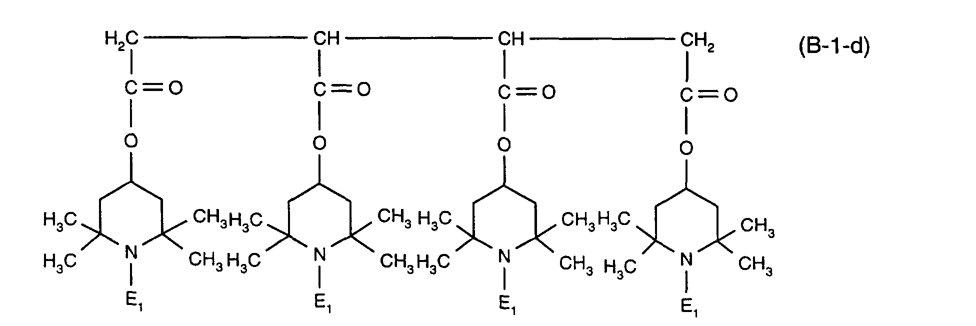 wherein E₁ is hydrogen, C₁-C₈alkyl, O, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl; 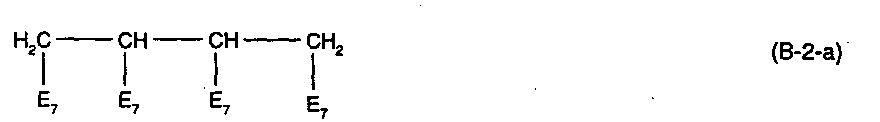 in which two of the radicals E₇ are -COO-C₁₃H₂₇ and
two of the radicals E₇ are 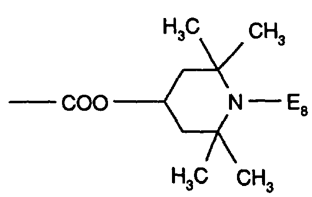 and E₈ has one of the meanings of E₁; 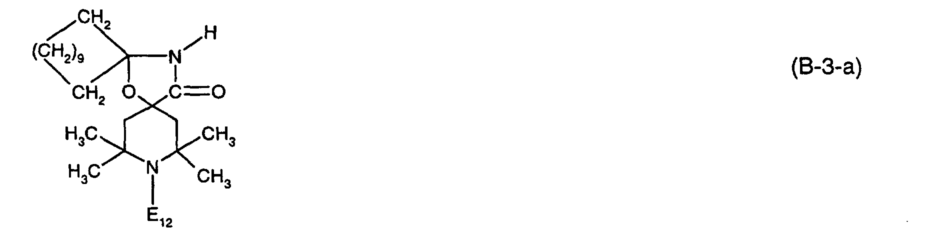 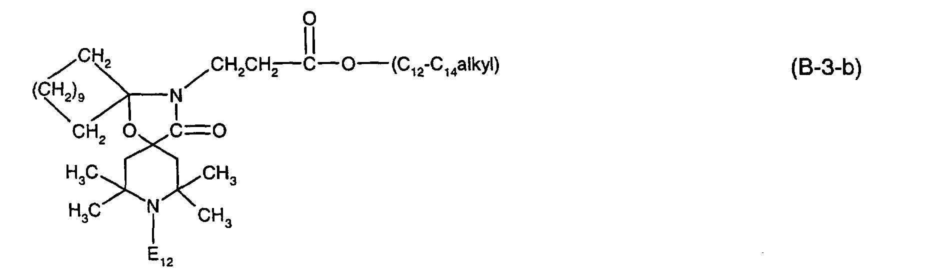 wherein E₁₂ has one of the meanings of E₁; 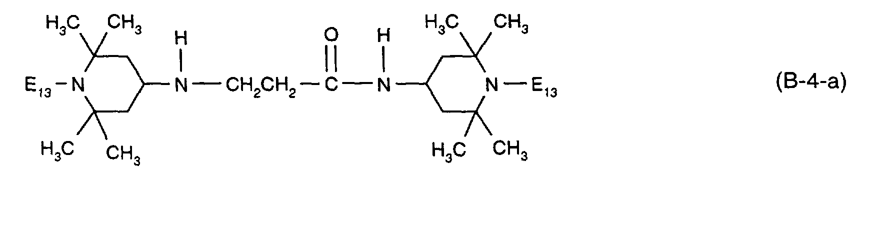 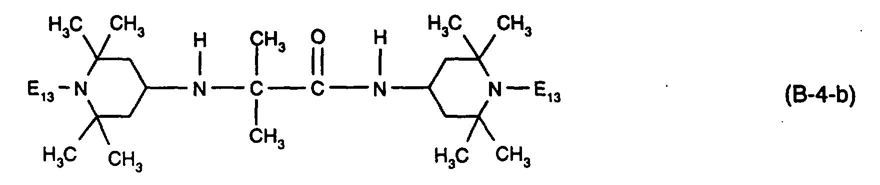 wherein Eᵢₛ has one of the meanings of E₁; 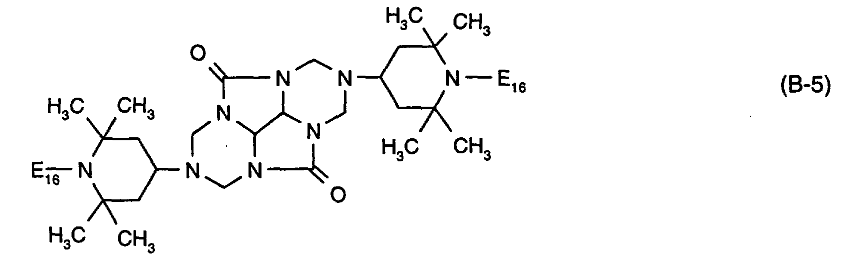 wherein E₁₆ has one of the meanings of E₁; 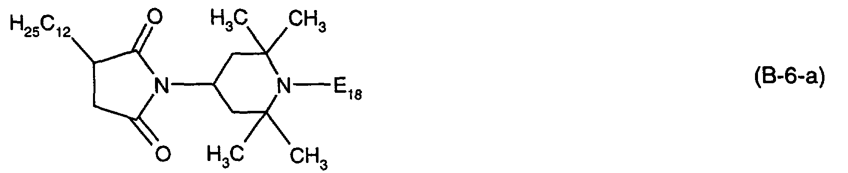 wherein E₁₈ has one of the meanings of E₁; 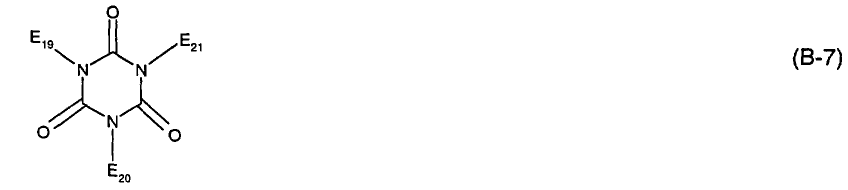 in which E₁₉, E₂₀ and E₂₁ independently of one another are a group of the formula (b-III) 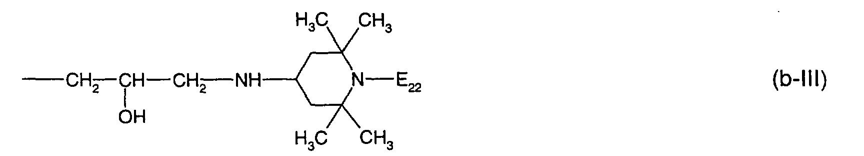 wherein E₂₂ has one of the meanings of E_{1;} 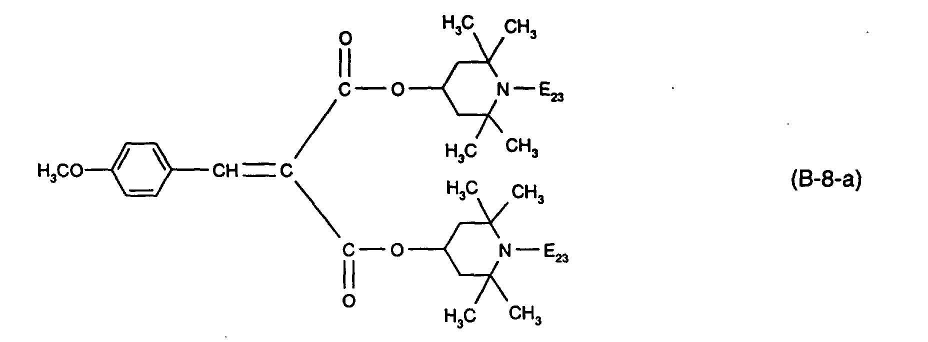 wherein E₂₃ has one of the meanings of E₁; 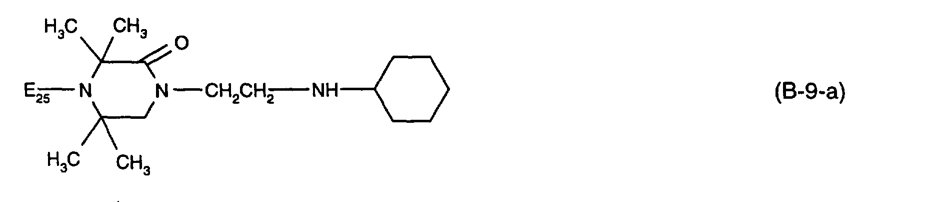 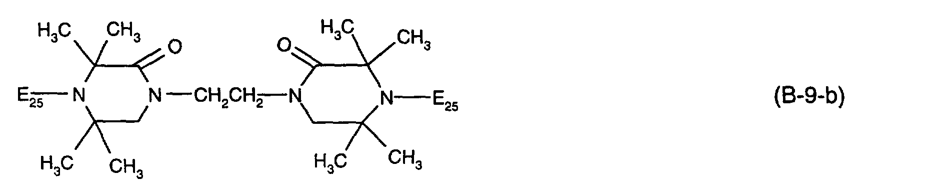 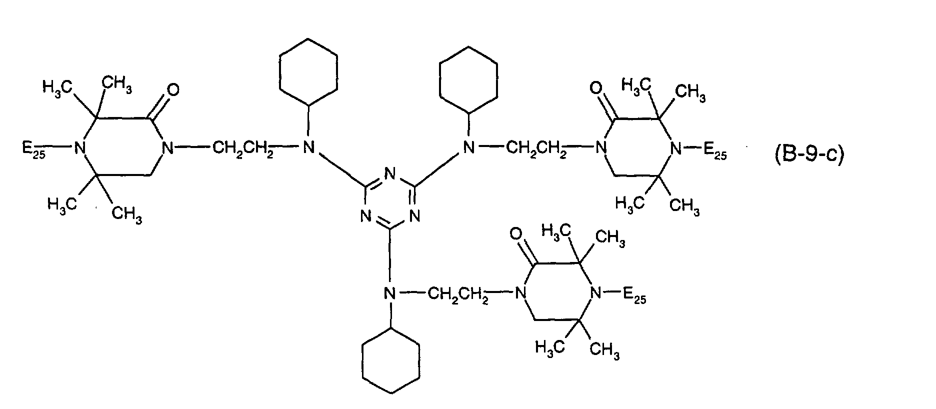 wherein E₂₅ has one of the meanings of E₁; 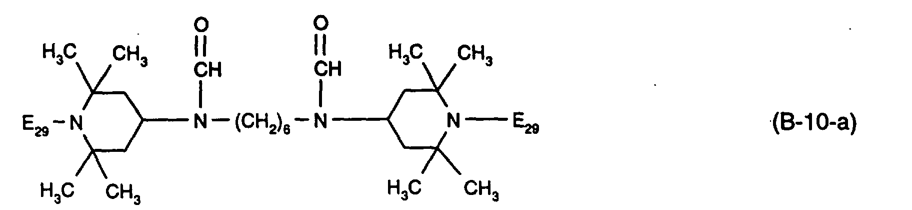 wherein E₂₉ has one of the meanings of E₁; 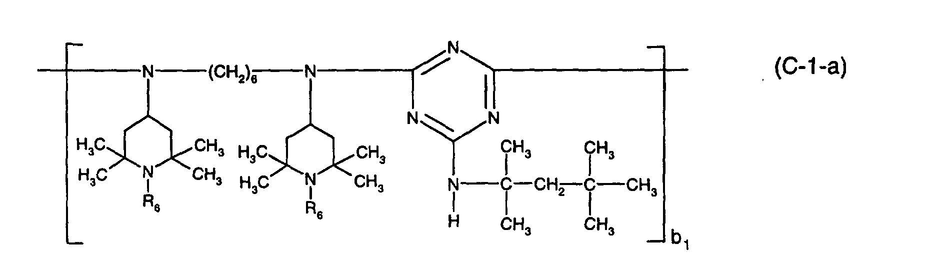 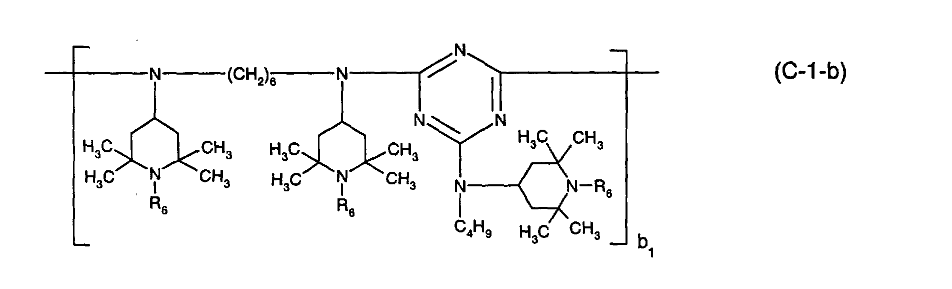 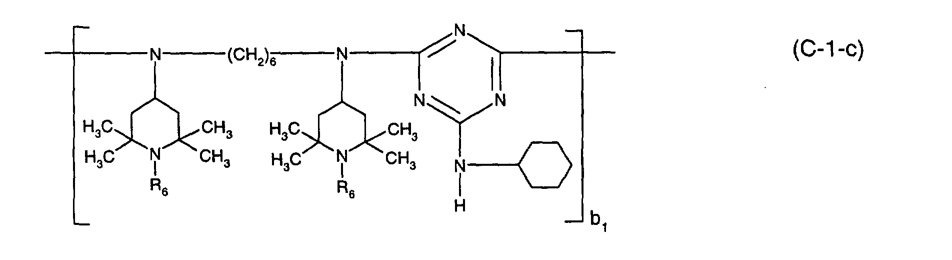 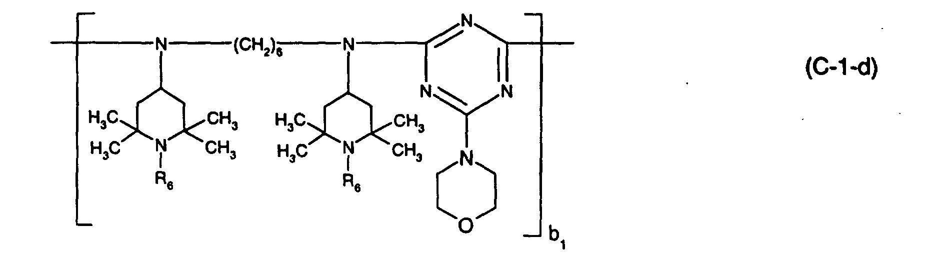 wherein b₁ is a number from 2 to 20 and R₆ is hydrogen, C₁-C₈alkyl, O, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl; 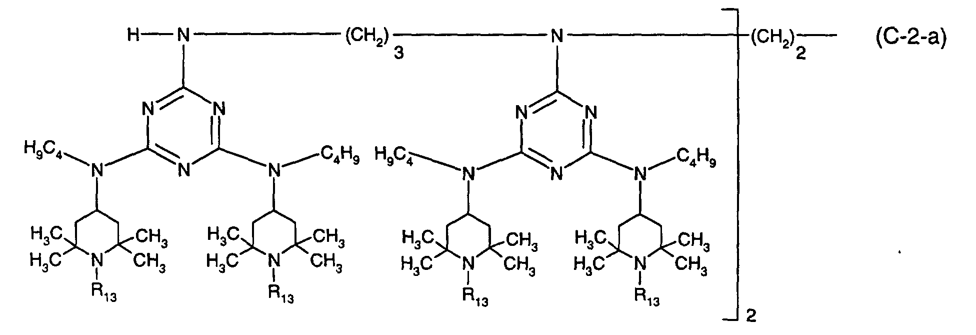 wherein R₁₃ has one of the meanings of R₆, 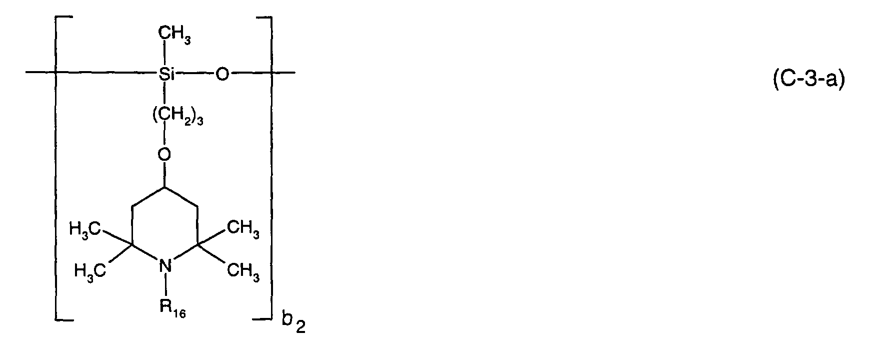 wherein b₂ is a number from 2 to 20 and R₁₆ has one of the meanings of R₆; 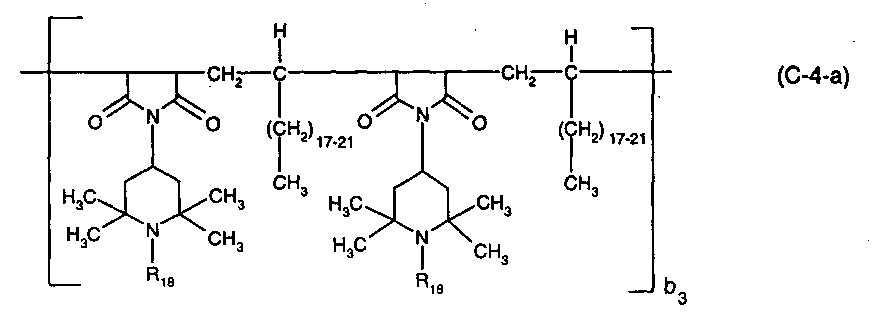 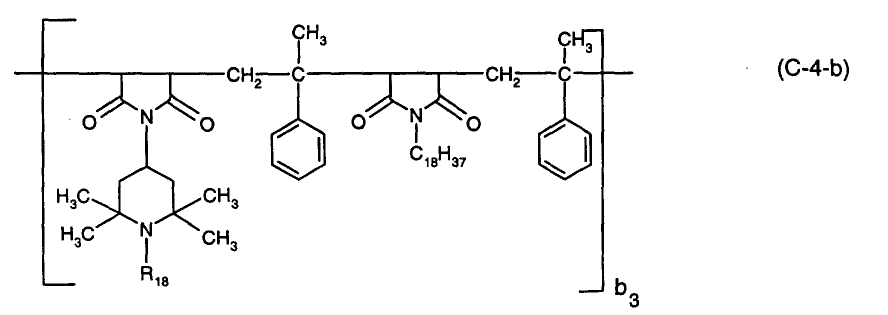 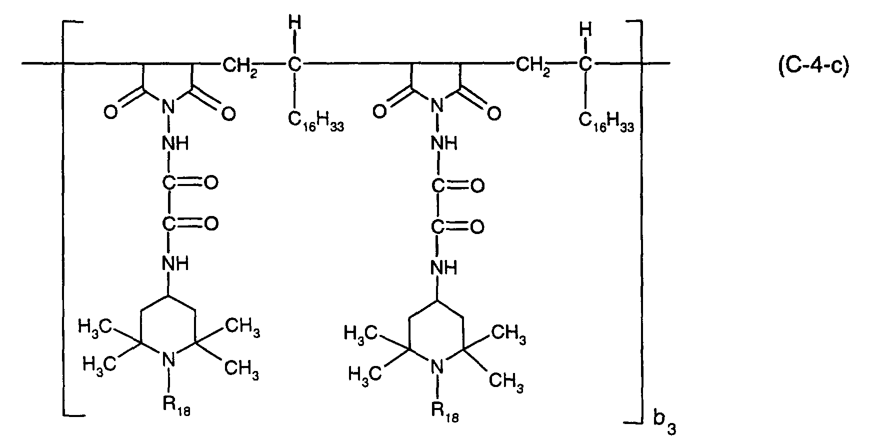 wherein b₃ is a number from 1 to 20 and R₁₈ has one of the meanings of R₆; 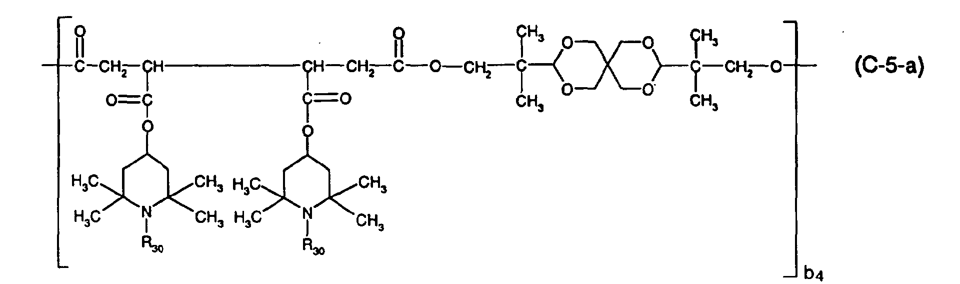 wherein b₄ is a number from 1 to 20 and R₃₀ has one of the meanings of R₆;
a product (C-6-a) obtainable by reacting a product, obtained by reaction of a polyamine of the formula (C-6-1-a) with cyanuric chloride, with a compound of the formula (C-6-2-a) 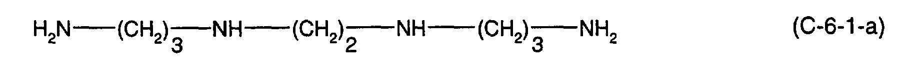 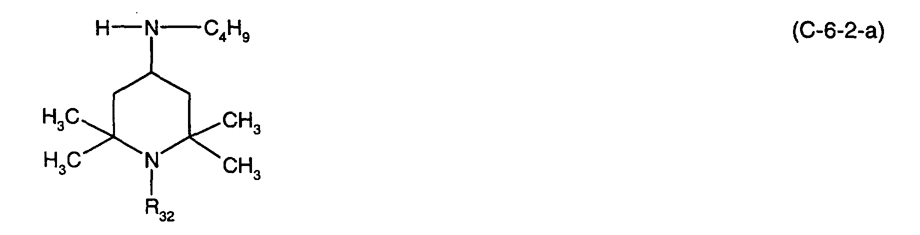 in which R₃₂ has one of the meanings of R₆.

6. A stabilizer mixture according to claim 1 wherein A₈ is hydrogen, C₁-C₄alkyl, C₁-C₁₀alkoxy, cyclohexyloxy, allyl, benzyl or acetyl;
E₁, E₈, E₁₂, E₁₃, E₁₆, E₁₈, E₂₂, E₂₃, E₂₅ and E₂₉ are hydrogen, C₁-C₄alkyl, C₁-C₁₀alkoxy, cyclohexyloxy, allyl, benzyl or acetyl; and
R_{6,} R₁₃, R₁₆, R₁₈, R₃₀ and R₃₂ are hydrogen, C₁-C₄alkyl, C₁-C₁₀alkoxy, cyclohexyloxy, allyl, benzyl or acetyl.

7. A stabilizer mixture according to claim 5 wherein A_{8,} E₁, E₈, E_{12,} E₁₃, E_{16,} E₁₈, E₂₂, E₂₃, E₂₅, E₂₉, R₆, R₁₃, R₁₆, R₁₈, R₃₀ and R₃₂ are hydrogen or methyl and E₁ and R₆ additionally are C₁-C₈alkoxy.

8. A stabilizer mixture according to claim 5 wherein
**component (A)** is a compound of the formula (A-1-a) wherein n₁ is a number from 2 to 20, or a compound of the formula (A-2-a) or (A-2-b) wherein n₂ and n₂* are a number from 2 to 20;
**component (B-X)** is a compound of the formula (B-1-b) wherein E₁ is hydrogen or methyl;
**component (B-XX)** is a compound of the formula (B-1-a) wherein E₁ is hydrogen, or a compound of the formula (B-6-a) wherein E₁₈ is methyl; and
**component (C)** is a compound of the formula (C-1-a) wherein b₁ is a number from 2 to 20 and R₆ is hydrogen, or a compound of the formula (C-1-b) wherein R₆ is hydrogen or propoxy and b₁ is a number from 2 to 20, or a compound of the formula (C-1-c) wherein R₆ is hydrogen and b₁ is a number from 2 to 20, or a compound of the formula (C-1-d) wherein R₆ is hydrogen or methyl and b₁ is a number from 2 to 20, or a compound of the formula (C-2-a) wherein R₁₃ is methyl, or a compound of the formula (C-3-a) wherein R₁₆ is hydrogen and b₂ is a number from 2 to 20, or a compound of the formula (C-4-a) wherein R₁₈ is hydrogen and b₃ is a number from 1 to 20, or a compound of the formula (C-5-a) wherein R₃₀ is hydrogen or methyl and b₄ is a number from 1 to 20, or a product (C-6-a).

9. A stabilizer mixture according to claim 8 wherein component (A) is a compound of the formula (A-1-a).

10. A stabilizer mixture according to claim 8 wherein
**component (A)** is a compound of the formula (A-1-a);
**component (B-X)** is a compound of the formula (B-1-b) with E₁ being hydrogen;
**component (B-XX)** is a compound of the formula (B-1-a) with E₁ being hydrogen; and **component (C)** is a compound of the formula (C-1-a) with R₆ being hydrogen.

11. A stabilizer mixture according to claim 1, which additionally contains as a further component
(X-1) a pigment or
(X-2) an UV absorber or
(X-3) a pigment and an UV absorber.

12. A composition comprising an organic material subject to degradation induced by light, heat or oxidation and a stabilizer mixture according to claim 1.

13. A composition according to claim 12 wherein the organic material is a synthetic polymer.

14. A composition according to claim 12 wherein the organic material is a polyolefin.

15. A composition according to claim 12 wherein the organic material is polyethylene, polypropylene, a polyethylene copolymer or a polypropylene copolymer.

16. A method for stabilizing an organic material against degradation induced by light, heat or oxidation, which comprises incorporating into the organic material a stabilizer mixture according to claim 1.
